# EUROPEAN PATENT APPLICATION

(11) **EP 3 312 258 A1**
(43) Date of publication of application: **25.04.2018**
(21) Application number: 16811495.7
(22) Date of filing: 07.06.2016
(51) Int. Cl.: C09K 19/08, C09K 19/12, C09K 19/18, C09K 19/20, C09K 19/22, C09K 19/30, C09K 19/32, C09K 19/34, G02B 1/11, G02B 5/30, G02F 1/13, G02F 1/13363

(54) **POLYMERIZABLE COMPOSITION AND OPTICALLY ANISOTROPIC BODY USING SAME**

(30) Priority: 17.06.2015 JP 2015122038
(71) Applicant: DIC Corporation, Tokyo 174-8520 (JP)
(72) Inventor: ENDO, Kouichi, Kitaadachi-gun Saitama 362-8577 (JP); KUWANA, Yasuhiro, Kitaadachi-gun Saitama 362-8577 (JP)
(74) Representative: Beckmann, Claus
(86) International application number: PCT/JP2016/066876
(87) International publication number: WO 2016/204020

(57) **Abstract**

The present invention provides a polymerizable liquid crystal composition capable of forming a uniform homeotropic alignment in producing a polymer through polymerization of the polymerizable liquid crystal composition. Further, the present invention provides a polymer obtained through polymerization of the polymerizable liquid crystal composition and having good alignment performance and high durability (retardation retention) with little cissing, and an optically anisotropic body using the polymer. Specifically, the present invention provides a polymerizable liquid crystal composition containing a polymerizable liquid crystal compound represented by the general formula (II-1), one or more kinds of polymerizable liquid crystal compounds (11-2) having one polymerizable functional group and/or one or more kinds of polymerizable liquid crystal compounds having 2 or more polymerizable functional groups in the molecule and represented by the general formula (I-1).

## Description

### Technical Field

The present invention relates to a polymerizable liquid crystal composition useful for a member for liquid crystal devices, displays, optical parts, colorants, security marking and laser emission, or for a constituent member of an optically anisotropic body for use for optical compensation for liquid crystal displays, etc., and to an optically anisotropic body, a retardation film, a viewing angle compensation film and an antireflection film formed of the composition.

### Background Art

A liquid crystal compound having a polymerizable group (polymerizable liquid crystal compound) is used as a raw material for various films. For example, after a polymerizable liquid crystal composition containing a polymerizable liquid crystal compound is aligned in a liquid crystal state, it can be polymerized to produce a filmy polymer having a uniform alignment. Such a polymer can be used for polarization plates, retardation plates and others necessary for displays.

A polymer (retardation plate) having a homeotropic alignment for use for optical compensation for IPS (in-plane switching) displays and others has heretofore been produced using a polymer liquid crystal having vertically-alignable performance, which, however, requires high-temperature alignment at 100°C or higher, and therefore often provides a problem in point of the heat resistance of substrate films. Therefore, for solving the problem, a method including applying a polymerizable liquid crystal composition that contains a polymerizable liquid crystal compound onto a substrate and then polymerizing it to form a polymer having a homeotropic alignment thereon has been reported, but the polymer could not have sufficient durability (PTL 1). Regarding the retardation plate for use for optical compensation for liquid crystal displays, it is important that, in preparing a polymerizable liquid crystal composition, when the polymerizable liquid crystal composition before polymerization is stored for a long period of time, the polymerizable liquid crystal compound of the constituent components does not precipitate out from the composition, and that when the polymerizable liquid crystal composition is polymerized with electromagnetic waves to form a filmy polymer, the filmy polymer can have a homeotropic alignment formed therein. When a film not having a uniform alignment is used for viewing angle enlargement or polarization conversion for displays, the display brightness would be non-uniform, or the image color would be unnatural, or polarization axis deviation may occur to cause light leakage depending on a viewing angle and to cause color deviation, and as a result, there is a possibility that the quality of display products would greatly worsen.

### Citation List

### Patent Literature

[PTL 1] JP-A-2000-514202

### Summary of Invention

### Technical Problem

The problem that the present invention is to solve is to provide a polymerizable liquid crystal composition capable of forming a uniform homeotropic alignment when a polymer is formed by polymerizing the polymerizable liquid crystal composition. Further, the present invention is to provide a polymer obtained through polymerization of the polymerizable liquid crystal composition and having good alignment performance and high durability (retardation retention) with little cissing, and to provide an optically anisotropic body using the polymer.

### Solution to Problem

The present inventors have assiduously studied for the purpose of solving the above-mentioned problems and, as a result, have developed a polymerizable liquid crystal composition containing a polymerizable liquid crystal compound represented by the following general formula (II-1) ; and one or more kinds of polymerizable liquid crystal compounds (II-2) having one polymerizable functional group and/or one or more kinds of polymerizable liquid crystal compounds represented by the following general formula (I-1) and having 2 or more polymerizable functional groups in the molecule.

Specifically, the present invention provides a polymerizable liquid crystal composition containing one or more of polymerizable liquid crystal compounds having 2 or more polymerizable functional groups in the molecule, which are represented by a general formula (I-1):
[Chem. 1]

P¹¹-(Sp¹¹-X¹¹)_{q1}-MG¹²-((X¹²-Sp¹²)_{q2}-P¹²)_{q3} (I-1)

(wherein P¹¹ and P¹² each independently represent a polymerizable functional group, Sp¹¹ and Sp¹² each independently represent an alkylene group having 1 to 18 carbon atoms or a single bond, provided that one -CH₂- or two or more (-CH₂-) 's not adjacent to each other in the alkylene group may be each independently substituted with -O-, -COO-, -OCO- or -OCO-O- and one or two or more hydrogen atoms that the alkylene group has may be substituted with a halogen atom or a group CN, X¹¹ and X¹² each independently represent -0-, -S-, -OCH₂-, -CH₂O-, -CO-, -COO-, -OCO-, -CO-S-, -S-CO-, -O-CO-O-, -CO-NH-, -NH-CO-, -SCH₂-, -CH₂S-, -CF₂O-, -OCF₂-, -CF₂S-, -SCF₂-, -CH=CH-COO-, -CH=CH-OCO-, -COO-CH=CH-, -OCO-CH=CH-, -COO-CH₂CH₂-, -OCO-CH₂CH₂-, -CH₂CH₂-COO-, -CH₂CH₂-OCO-, -COO-CH₂-, -OCO-CH₂-, -CH₂-COO-, -CH₂-OCO-, -CH=CH-, -N=N-, -CH=N-N=CH-, -CF=CF-, -C=C- or a single bond, provided that P¹¹-Sp¹¹, P¹²-sp¹², Sp¹¹-X¹¹ and Sp¹²-X¹² do not contain a direct bond that bonds hetero atoms, q1 and q2 each independently represent 0 or 1, q3 represents 1, 2 or 3, provided that plural X¹²'s, if any, may be the same or different, plural Sp¹²'s, if any, may be the same or different, and plural P¹²'s, if any, may be the same or different, and MG¹² represents a mesogen group), and/or one or more of polymerizable liquid crystal compounds (II-2) having one polymerizable functional group (except for polymerizable liquid crystal compounds represented by the following general formula (II-1)); and
one or more of polymerizable liquid crystal compounds represented by a general formula (II-1): 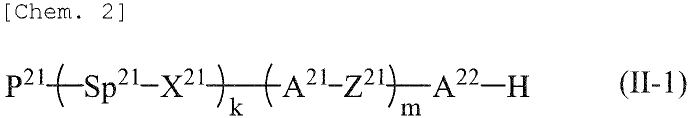
(wherein P²¹ represents a polymerizable group,
Sp²¹ represents a spacer group or a single bond; and plural Sp²¹'s, if any, may be the same or different,
X²¹ represents -O-, -S-, -OCH₂-, -CH₂O-, -CO-, -COO-, -OCO-, -CO-S-, -S-CO-, -O-CO-O-, -CO-NH-, -NH-CO-, -SCH₂-, -CH₂S-, -CF₂O-, -OCF₂-, -CF₂S-, -SCF₂-, -CH=CH-COO-, -CH=CH-OCO-, -COO-CH=CH-, -OCO-CH=CH-, -COO-CH₂CH₂-, -OCO-CH₂CH₂-, -CH₂CH₂-COO-, -CH₂CH₂-OCO-, -COO-CH₂-, -OCO-CH₂-, -CH₂-COO-, -CH₂-OCO-, -CH=CH-, -N=N-, -CH=N-N=CH-, -CF=CF-, -C=C- or a single bond; and plural X²¹'s, if any, may be the same or different,
k represents an integer of 0 to 10,
A²¹ represents a 1,4-phenylene group, a 1,4-cyclohexylene group, a pyridine-2,5-diyl group, a pyrimidine-2,5-diyl group, a naphthalene-2,6-diyl group, a naphthalene-1,4-diyl group, a tetrahydronaphthalene-2, 6-diyl group, a decahydronaphthalane-2,6-diyl group or a 1,3-dioxane-2,5-diyl group, which may be unsubstituted or substituted with one or more substituents L¹'s; and plural A²¹'s, if any, may be the same or different,
L¹ represents a fluorine atom, a chlorine atom, a bromine atom, an iodine atom, a pentafluorosulfuranyl group, a nitro group, a cyano group, an isocyano group, an amino group, a hydroxyl group, a mercapto group, a methylamino group, a dimethylamino group, a diethylamino group, a diisopropylamino group, a trimethylsilyl group, a dimethylsilyl group, a thioisocyano group, or a linear or branched alkyl group having 1 to 20 carbon atoms, provided that in the alkyl group, one -CH₂- or two or more (-CH₂-)'s not adjacent to each other may be each independently substituted with -O-, -S-, -CO-, -COO-, -OCO-, -CO-S-, -S-CO-, -O-CO-O-, -CO-NH-, -NH-CO-, -OCO-NH-, -NH-COO-, -NH-CO-NH-, -NH-O-, -o-NH-, -CH=CH-COO-, -CH=CH-OCO-, -COO-CH=CH-, -OCO-CH=CH-, -CH=CH-, -N=N-, -CH=N-, -N=CH-, -CH=N-N=CH-, -CF=CF- or -C=C-, and in the alkyl group, any arbitrary hydrogen atom may be substituted with a fluorine atom,
Z²¹ represents -0-, -S-, -OCH₂-, -CH₂O-, -CH₂CH₂-, -CO-, -COO-, -OCO-, -CO-S-, -S-CO-, -O-CO-O-, -CO-NH-, -NH-CO-, -OCO-NH-, -NH-COO-, -NH-CO-NH-, -NH-O-, -O-NH-, -SCH₂-, -CH₂S-, -CF₂O-, -OCF₂-, -CF₂S-, -SCF₂-, -CH=CH-COO-, -CH=CH-OCO-, -COO-CH=CH-, -OCO-CH=CH-, -COO-CH₂CH₂-, -OCO-CH₂CH₂-, -CH₂CH₂-COO-, -CH₂CH₂-OCO-, -COO-CH₂-, -OCO-CH₂-, -CH₂-COO-, -CH₂-OCO-, -CH=CH-, -N=N-, -CH=N-, -N=CH-, -CH=N-N=CH-, -CF=CF-, -C=C- or a single bond; and plural Z²¹'s, if any, may be the same or different,
m represents an integer of 1 to 5,
A²² represents a group selected from the following formulae (A2-1) to (A2-9):

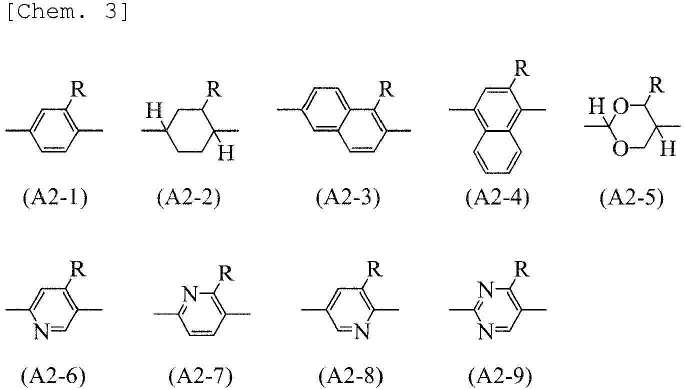

(wherein the groups represented by the formulae (A2-1) to (A2-9) may be unsubstituted or may be substituted with one or more substituents L²'s,
R represents a fluorine atom, a chlorine atom, a bromine atom, an iodine atom, a pentafluorosulfuranyl group, a cyano group, a nitro group, an isocyano group, a thioisocyano group, or a linear or branched alkyl group having 2 to 20 carbon atoms, provided that in the alkyl group, one -CH₂- or two or more (-CH₂-)'s not adjacent to each other may be each independently substituted with -O-, -S-, -CO-, -COO-, -OCO-, -CO-S-, -S-CO-, -O-CO-O-, -CO-NH-, -NH-CO-, -OCO-NH-, -NH-COO-, -NH-CO-NH-, -NH-O-, -O-NH-, -CH=CH-COO-, -CH=CH-OCO-, -COO-CH=CH-, -OCO-CH=CH-, -CH=CH-, -N=N-, -CH=N-, -N=CH-, -CH=N-N=CH-, -CF=CF- or -C=C-, and in the alkyl group, any arbitrary hydrogen atom may be substituted with a fluorine atom),
the substituent L² represents a fluorine atom, a chlorine atom, a bromine atom, an iodine atom, a pentafluorosulfuranyl group, a nitro group, a cyano group, an isocyano group, an amino group, a hydroxyl group, a mercapto group, a methylamino group, a dimethylamino group, a diethylamino group, a diisopropylamino group, a trimethylsilyl group, a dimethylsilyl group, a thioisocyano group, or a linear or branched alkyl group having 2 to 20 carbon atoms, provided that one -CH₂- or two or more (-CH₂-)'s not adjacent to each other in the alkyl group may be each independently substituted with-O-, -S-, -CO-, -COO-, -OCO-, -CO-S-, -S-CO-, -O-CO-O-, -CO-NH-, -NH-CO-, -OCO-NH-, -NH-COO-, -NH-CO-NH-, -NH-O-, -O-NH-, -CH=CH-COO-, -CH=CH-OCO-, -COO-CH=CH-, -OCO-CH=CH-, -CH=CH-, -N=N-, -CH=N-, -N=CH-, -CH=N-N=CH-, -CF=CF- or -C=C-, and any arbitrary hydrogen in the alkyl group atom may be substituted with a fluorine atom, H represents a hydrogen atom, plural substituents L¹'s, if any, may be the same or different, and plural substituents L²'s, if any, may be the same or different, provided that the general formula (II-1) does not contain a direct bond that bonds hetero atoms).

The present invention also provides a polymer obtained by polymerizing the polymerizable liquid crystal composition, and an optically anisotropic body using the polymer.

### Advantageous Effects of Invention

Using the polymerizable liquid crystal composition of the present invention, an optically anisotropic body having a uniform homeotropic alignment can be obtained, and therefore the composition is helpful for use for optical materials such as retardation films, etc.

### Description of Embodiments

Best modes of the polymerizable liquid crystal composition of the present invention will be described hereinunder. In the present invention, "liquid crystal" in the polymerizable liquid crystal composition is meant to indicate that, after the polymerizable liquid crystal composition has been applied to a substrate and the organic solvent has been removed therefrom, the resultant state shows liquid crystallinity. In the present invention, "liquid crystal" in the polymerizable liquid crystal compound is meant to include a case where one alone of the polymerizable liquid crystal compound can show liquid crystallinity and a case where a mixture of the compound with any other liquid crystal compound can show liquid crystallinity. The polymerizable liquid crystal composition can be polymerized (can be formed into a film) through polymerization by photoirradiation with UV rays or the like, or by heating or by a combination thereof to give a polymer.

### (Homeotropic alignment-promoting polymerizable liquid crystal compound)

The polymerizable liquid crystal composition of the present invention contains a polymerizable liquid crystal compound that promotes homeotropic alignment. The homeotropic alignment-promoting polymerizable liquid crystal compound means that the compound is used by adding to a polymerizable liquid crystal composition, and that when the compound-containing polymerizable liquid crystal composition is applied to a substrate and then polymerized thereon, a polymer in a uniformly homeotropic alignment state can be obtained.

As the homeotropic alignment-promoting polymerizable liquid crystal compound, compounds represented by the above-mentioned general formula (II-1) can be exemplified.

In the general formula (II-1), P²¹ represents a polymerizable group and is preferably a group selected from the following formulae (P-1) to (P-20).

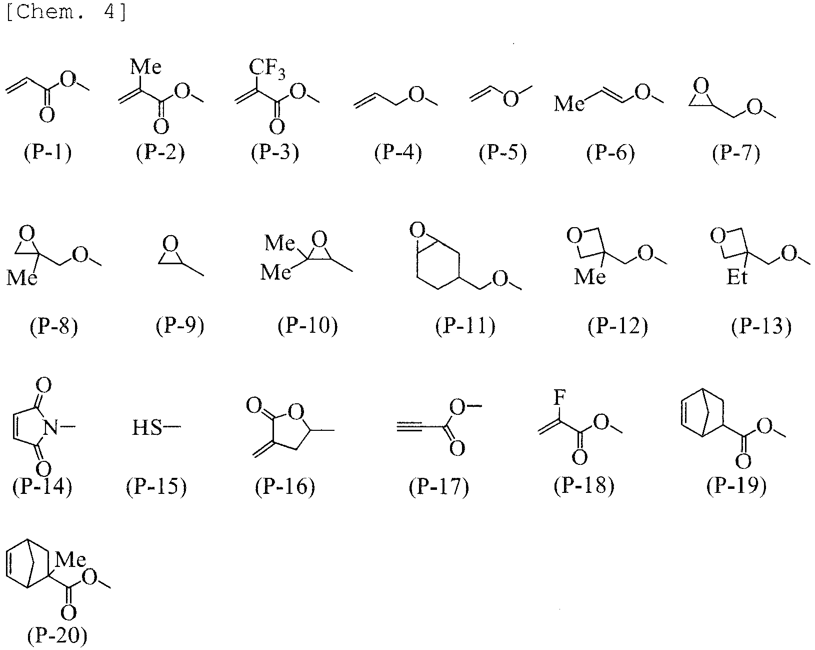

These polymerizable groups polymerize through radical polymerization, radical addition polymerization, cationic polymerization and anionic polymerization. In particular, in the case of UV polymerization for the polymerization method, the formula (P-1), the formula (P-2), the formula (P-3), the formula (P-4), the formula (P-5), the formula (P-7), the formula (P-11), the formula (P-13), the formula (P-15) or the formula (P-18) is preferred, the formula (P-1), the formula (P-2), the formula (P-7), the formula (P-11) or the formula (P-13) is more preferred, the formula (P-1), the formula (P-2) or the formula (P-3)is even more preferred, and the formula (P-1) of the formula (P-2) is especially more preferred.

In the general formula (II-1), k represents an integer of 0 to 10, but is preferably an integer of 0 to 5, more preferably an integer of 0 to 2, and is especially preferably 1.

In the general formula (II-1), Sp²¹ represents a spacer group or a single bond, and plural Sp²¹'s, if any, may be the same or different. The spacer group may be substituted or may be substituted with one or more substituents L¹'s mentioned below. Preferably, the spacer group is an alkylene group having 1 to 20 carbon atoms in which one -CH₂- or two or more (-CH₂-)'s not adjacent to each other may be each independently substituted with -O-, -COO-, -OCO-, -OCO-O-, -CO-NH-, -NH-CO-, -CH=CH- or -C=C-. From the viewpoint of easy availability of raw materials and of easiness in synthesis, preferably, plural Sp²¹'s, if any, may be the same or different and each independently represents an alkylene group having 1 to 14 carbon atoms in which one -CH₂- or two or more (-CH₂-)'s not adjacent to each other may be each independently substituted with -O-, -COO- or -OCO-, or a single bond, more preferably, an alkylene group having 1 to 14 carbon atoms or a single bond. From the viewpoint of alignment performance, more preferably, Sp²¹'s each independently represent an alkylene group having 2 to 14 carbon atoms, still more preferably an alkylene group having 4 to 12 carbon atoms, and especially preferably an alkylene group having 6 to 10 carbon atoms.

In the general formula (II-1), X²¹ represents -0-, -S-, -OCH₂-, -CH₂O-, -CO-, -COO-, -OCO-, -CO-S-, -S-CO-, -O-CO-O-, -CO-NH-, -NH-CO-, -SCH₂-, -CH₂S-, -CF₂O-, -OCF₂-, -CF₂S-, -SCF₂-, -CH=CH-COO-, -CH=CH-OCO-, -COO-CH=CH-, -OCO-CH=CH-, -COO-CH₂CH₂-, -OCO-CH₂CH₂-, -CH₂CH₂-COO-, -CH₂CH₂-OCO-, -COO-CH₂-, -OCO-CH₂-, -CH₂-COO-, -CH₂-OCO-, -CH=CH-, -N=N-, -CH=N-N=CH-, -CF=CF-, -C=C- or a single bond, and plural X²¹'s, if any, may be the same or different, provided that P²¹-(Sp²¹-X²¹)ₖ- does not contain a direct bond that bonds hetero atoms (in the present invention, a hetero atom is meant to indicate an atom except a carbon atom and a hydrogen atom, and a direct bond that bonds hetero atoms is meant to include, for example, -0-0- bond, etc.). From the viewpoint of easy availability of raw materials and easiness in synthesis, plural X²¹'s, if any, may be the same or different and preferably, each independently represents -O-, -S-, -OCH₂-, -CH₂O-, -COO-, -OCO-, -CO-S-, -S-CO-, -O-CO-O-, -CO-NH-, -NH-CO-, -COO-CH₂CH₂-, -OCO-CH₂CH₂-, -CH₂CH₂-COO-, -CH2CH₂-OCO- or a single bond, more preferably, each independently represents -O-, -OCH₂-, -CH₂O-, -COO-, -OCO-, -COO-CH₂CH₂-, -OCO-CH₂CH₂-, -CH₂CH₂-COO-, -CH₂CH₂-OCO- or a single bond, even more preferably each independently represents -0-, -COO-, -OCO- or a single bond, and from the viewpoint of alignment performance, the group is especially preferably -O- or a single bond.

In the general formula (II-1), A²¹ represents a 1,4-phenylene group, a 1,4-cyclohexylene group, a pyridine-2,5-diyl group, a pyrimidine-2,5-diyl group, a naphthalene-2,6-diyl group, a naphthalene-1,4-diyl group, a tetrahydronaphthalene-2,6-diyl group, a decahydronaphthalane-2,6-diyl group or a 1,3-dioxane-2,5-diyl group, and the group may be unsubstituted or substituted with one or more substituents L¹'s, and plural A²¹'s, if any, may be the same or different.

The substituent L¹ represents a fluorine atom, a chlorine atom, a bromine atom, an iodine atom, a pentafluorosulfuranyl group, a nitro group, a cyano group, an isocyano group, an amino group, a hydroxyl group, a mercapto group, a methylamino group, a dimethylamino group, a diethylamino group, a diisopropylamino group, a trimethylsilyl group, a dimethylsilyl group, a thioisocyano group, or a linear or branched alkyl group having 1 to 20 carbon atoms, in the alkyl group, one -CH₂- or two or more (-CH₂-)'s not adjacent to each other may be each independently substituted with -O-, -S-, -CO-, -COO-, -OCO-, -CO-S-, -S-CO-, -O-CO-O-, -CO-NH-, -NH-CO-, -OCO-NH-, -NH-COO-, -NH-CO-NH-, -NH-O-, -O-NH-, -CH=CH-COO-, -CH=CH-OCO-, -COO-CH=CH-, -OCO-CH=CH-, -CH=CH-, -N=N-, -CH=N-, -N=CH-, -CH=N-N=CH-, -CF=CF- or -C=C-, and in the alkyl group, any arbitrary hydrogen atom may be substituted with a fluorine atom. From the viewpoint of liquid crystallinity, easiness in synthesis, haze and unevenness, L¹ is preferably a fluorine atom, a chlorine atom, a pentafluorosulfuranyl group, a nitro group, a cyano group, a methylamino group, a dimethylamino group, a diethylamino group, a diisopropylamino group, or a linear or branched alkyl group having 1 to 20 carbon atoms, in which any arbitrary hydrogen atom may be substituted with a fluorine atom and one -CH₂- or two or more (-CH₂-)'s not adjacent to each other may be each independently substituted with a group selected from -O-, -S-, -CO-, -COO-, -OCO-, -O-CO-O-, -CH=CH-, -CF=CF- or -C=C-, also preferably a fluorine atom, a chlorine atom, a cyano group, or a linear or branched alkyl group having 1 to 12 carbon atoms, in which any arbitrary hydrogen atom may be substituted with a fluorine atom and one -CH₂- or two or more (-CH₂-)'s not adjacent to each other may be each independently substituted with a group selected from -O-, -COO- or -OCO-, more preferably a fluorine atom, a chlorine atom, a cyano group, or a linear or branched alkyl group or alkoxy group having 1 to 12 carbon atoms, in which any arbitrary hydrogen atom may be substituted with a fluorine atom, even more preferably a fluorine atom, a chlorine atom, a cyano group, or a linear alkoxy group having 2 to 8 carbon atoms, further more preferably a fluorine atom, or a linear alkoxy group having 2 to 8 carbon atoms, and especially more preferably a fluorine atom.

From the viewpoint of easy availability of raw materials, easiness in synthesis, storage stability, haze and unevenness, A²¹ is preferably a 1,4-phenylene group, a 1,4-cyclohexylene group or a naphthalene-2,6-diyl group, which may be unsubstituted or substituted with one or more substituents L¹'s, more preferably, A²¹ each independently represents a group selected from the following formulae (A1-1) to (A1-11): 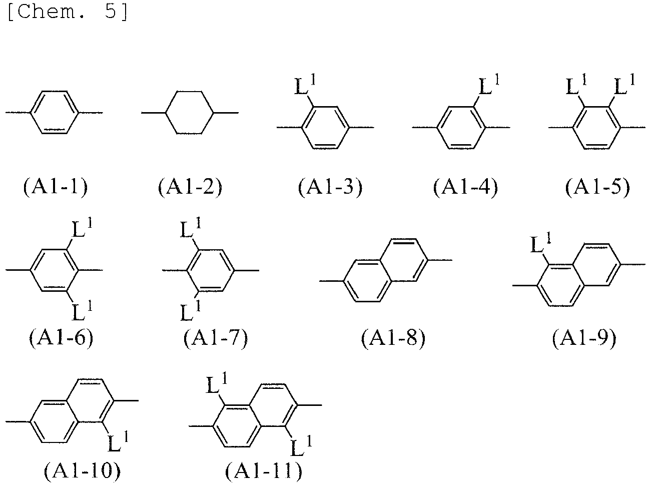 (In the formulae, L¹ represents the same group as defined above, and plural L¹'s, if any, may be the same or different), even more preferably, each independently represents a group selected from the formulae (A1-1) to (A1-8), and especially more preferably, each independently represents a group selected from the formulae (A1-1) to (A1-4).

In the general formula (II-1), Z²¹ represents -O-, -S-, -OCH₂-, -CH₂O-, -CH₂CH₂-, -CO-, -COO-, -OCO-, -CO-S-, -S-CO-, -O-CO-O-, -CO-NH-, -NH-CO-, -OCO-NH-, -NH-COO-, -NH-CO-NH-, -NH-O-, -O-NH-, -SCH₂-, -CH₂S-, -CF₂O-, -OCF₂-, -CF₂S-, -SCF₂-, -CH=CH-COO-, -CH=CH-OCO-, -COO-CH=CH-, -OCO-CH=CH-, -COO-CH₂CH₂-, -OCO-CH₂CH₂-, -CH₂CH₂-COO-, -CH₂CH₂-OCO-, -COO-CH₂-, -OCO-CH₂-, -CH₂-COO-, -CH₂-OCO-, -CH=CH-, -N=N-, -CH=N-, -N=CH-, -CH=N-N=CH-, -CF=CF-, -C≡C- or a single bond, and plural Z²¹'s, if any, may be the same or different. From the viewpoint of liquid crystallinity of the compound, easy availability of raw materials, easiness in synthesis, storage stability, haze and unevenness, Z²¹ is preferably -OCH₂-, -CH₂O-, -COO-, -OCO-, -CF₂O-, -OCF₂-, -CH₂CH₂-, -CF₂CF₂-, -CH=CH-COO-, -CH=CH-OCO-, -COO-CH=CH-, -OCO-CH=CH-, -COO-CH₂CH₂-, -OCO-CH₂CH₂-, -CH₂CH₂-COO-, -CH₂CH₂-OCO-, -CH=CH-, -CF=CF-, -C=C- or a single bond, more preferably -OCH₂-, -CH₂O-, -CH₂CH₂-, -COO-, -OCO-, -COO-CH₂CH₂-, -OCO-CH₂CH₂-, -CH₂CH₂-COO-, -CH₂CH₂-OCO-, -CH=CH-, -C≡C- or a single bond, even more preferably -CH₂CH₂-, -COO-, -OCO-, -COO-CH₂CH₂-, -OCO-CH₂CH₂-, -CH₂CH₂-COO-, -CH₂CH₂-OCO- or a single bond, and especially preferably, each independently represents -COO-, -OCO- or a single bond. Z²¹ directly bonding to A²² represents a single bond, and in the case where m is an integer of 2 to 4, the other Z²¹'s each are preferably -COO- or -OCO- from the viewpoint of miscibility with other polymerizable liquid crystal compounds.

In the general formula (II-1), m represents an integer of 1 to 5, but from the viewpoint of liquid crystallinity, easy availability of raw materials and easiness in synthesis, m is preferably an integer of 1 to 4, more preferably an integer of 1 o 3, and from the viewpoint of miscibility with other polymerizable liquid crystal compounds, m is even more preferably 1 or 2, and especially preferably 2.

In the general formula (II-1), the terminal ring structure A²² represents a group selected from the following formulae (A2-1) to (A2-9). 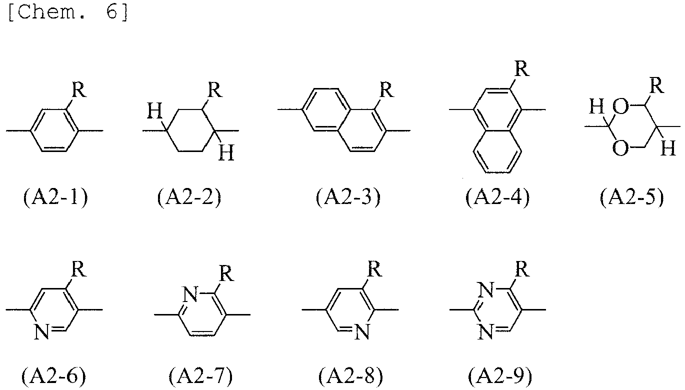
(The group represented by the formulae (A2-1) to (A2-9) may be unsubstituted or substituted with one or more substituents L²'s,
R represents a fluorine atom, a chlorine atom, a bromine atom, an iodine atom, a pentafluorosulfuranyl group, a cyano group, a nitro group, an isocyano group, a thioisocyano group, or a linear or branched alkyl group having 2 to 20 carbon atoms, provided that in the alkyl group, one -CH₂- or two or more (-CH₂-)'s not adjacent to each other may be each independently substituted with -O-, -S-, -CO-, -COO-, -OCO-, -CO-S-, -S-CO-, -O-CO-O-, -CO-NH-, -NH-CO-, -OCO-NH-, -NH-COO-, -NH-CO-NH-, -NH-O-, -O-NH-, -CH=CH-COO-, -CH=CH-OCO-, -COO-CH=CH-, -OCO-CH=CH-, -CH=CH-, -N=N-, -CH=N-, -N=CH-, -CH=N-N=CH-, -CF=CF- or -C≡C- and in the alkyl group, any arbitrary hydrogen atom may be substituted with a fluorine atom,
L² represents a fluorine atom, a chlorine atom, a bromine atom, an iodine atom, a pentafluorosulfuranyl group, a nitro group, a cyano group, an isocyano group, an amino group, a hydroxyl group, a mercapto group, a methylamino group, a dimethylamino group, a diethylamino group, a diisopropylamino group, a trimethylsilyl group, a dimethylsilyl group, a thioisocyano group, or a linear or branched alkyl group having 2 to 20 carbon atoms, provided that in the alkyl group, one -CH₂- or two or more (-CH₂-)'s not adjacent to each other may be each independently substituted with -O-, -S-, -CO-, -COO-, -OCO-, -CO-S-, -S-CO-, -O-CO-O-, -CO-NH-, -NH-CO-, -OCO-NH-, -NH-COO-, -NH-CO-NH-, -NH-O-, -O-NH-, -CH=CH-COO-, -CH=CH-OCO-, -COO-CH=CH-, -OCO-CH=CH-, -CH=CH-, -N=N-, -CH=N-, -N=CH-, -CH=N-N=CH-, -CF=CF- or -C=C- and in the alkyl group, any arbitrary hydrogen atom may be substituted with a fluorine atom, and plural L²'s, if any, in the compound may be the same or different.)

From the viewpoint of easy availability of raw materials and easiness in synthesis, A²² is more preferably a group selected from the following formulae (A2-1-1) to (A2-1-3): 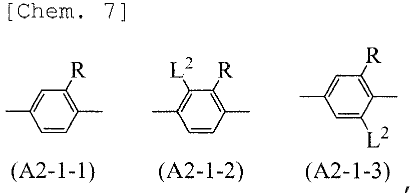 the following formula (A2-2-1) or (A2-2-2): 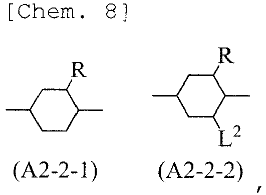 the following formulae (A2-3-1) to (A2-3-3): 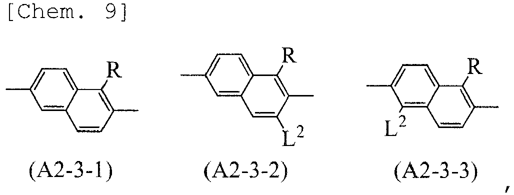 and the following formulae (A2-4-1) to (A2-4-3): 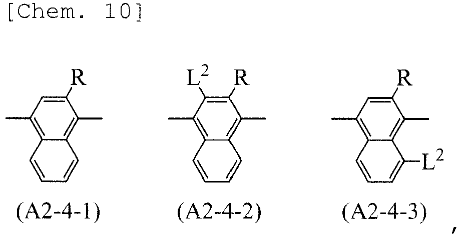 more preferably a group selected from the above-mentioned formula (A2-1-1), formula (A2-1-2), formula (A2-1-3), formula (A2-2-1), formula (A2-2-2), formula (A2-3-1) and formula (A2-3-2), even more preferably a group selected from the above-mentioned formula (A2-1-1), formula (A2-1-2), formula (A2-1-3) and formula (A2-2-2), especially preferably a group represented by the above-mentioned formula (A2-1-3) or formula (A2-2-2), and especially more preferably a group represented by the formula (A2-1-3).

From the viewpoint of liquid crystallinity, easy availability of raw materials, easiness in synthesis, storage stability, haze and unevenness, R is preferably a fluorine atom, a chlorine atom, a cyano group, a nitro group, or a linear or branched alkyl group having 2 to 20 carbon atoms, and in the alkyl group, -CH₂- or two or more (-CH₂-)'s not adjacent to each other may be each independently substituted with -0-, -CO-, -COO-, -OCO-, -O-CO-O-, -CH=CH-, -CF=CF- or -C=C-, and in the alkyl group, any arbitrary hydrogen atom may be substituted with a fluorine atom. More preferably, R is a fluorine atom, a chlorine atom, a cyano group, or a linear alkyl group having 2 to 10 carbon atoms, and in the alkyl group, one -CH₂- or two or more (-CH₂-)'s not adjacent to each other may be each independently substituted with -O-, -CO-, -COO-, -OCO- or -O-CO-O-, and in the alkyl group, any arbitrary hydrogen atom may be substituted with a fluorine atom; even more preferably, R is a fluorine atom, a chlorine atom, a cyano group, or a linear alkoxy group having 2 to 8 carbon atoms, still more preferably a fluorine atom, or a linear alkoxy group having 2 to 8 carbon atoms, and especially preferably a fluorine atom.

In the case where a composition containing the compound of the present invention is applied to a substrate not treated for homeotropic alignment to form thereon a film having a homeotropic alignment, R is preferably a group having a lone electron or a group having polarity, from the viewpoint of homeotropic alignment performance.

From the viewpoint of liquid crystallinity, easiness in synthesis, haze and unevenness, L² is preferably a fluorine atom, a chlorine atom, a pentafluorosulfuranyl group, a nitro group, a cyano group, a methylamino group, a dimethylamino group, a diethylamino group, a diisopropylamino group, or a linear or branched alkyl group having 2 to 20 carbon atoms in which any arbitrary hydrogen atom may be substituted with a fluorine atom and one -CH₂- or two or more (-CH₂-)'s not adjacent to each other may be each independently substituted with a group selected from -O-, -S-, -CO-, -COO-, -OCO-, -O-CO-O-, -CH=CH-, -CF=CF- or -C=C-, more preferably a fluorine atom, a chlorine atom, a cyano group, or a linear or branched alkyl group having 2 to 12 carbon atoms in which any arbitrary hydrogen atom may be substituted with a fluorine atom and one -CH₂- or two or more (-CH₂-)'s not adjacent to each other may be each independently substituted with a group selected from -O-, -COO- or -OCO-, even more preferably a fluorine atom, a chlorine atom, a cyano group, or a linear or branched alkyl or alkoxy group having 2 to 12 carbon atoms in which any arbitrary hydrogen atom may be substituted with a fluorine atom, further more preferably a fluorine atom, a chlorine atom, a cyano group, or a linear alkoxy group having 2 to 8 carbon atoms, further more preferably a fluorine atom, or a linear alkoxy group having 2 to 8 carbon atoms, and especially more preferably a fluorine atom.

In the group represented by the formula (A2-1-3), preferably, R and L² each represent the same group. Further, from the viewpoint of homeotropic alignment, more preferably, R and L² each represent a fluorine atom, a chlorine atom, a cyano group, or a linear alkoxy group having 2 to 8 carbon atoms, even more preferably, R and L² each represent a fluorine atom or a linear alkoxy group having 2 to 8 carbon atoms, and especially preferably, R and L² each represent a fluorine atom.

One or more kinds of the polymerizable liquid crystal compounds that promote homeotropic alignment may be used, but preferably one to five kinds, more preferably one to four kinds of the compounds are used.

The total content of the polymerizable liquid crystal compounds that promote homeotropic alignment is preferably 5 to 60% by mass of the total amount of the polymerizable liquid crystal compounds in the polymerizable liquid crystal composition, more preferably 10 to 55% by mass, even more preferably 20 to 50% by mass, still more preferably 20 to 40% by mass. In the case where the homeotropic alignment of the coating film to be formed is considered to be important, the lower limit of the content is preferably 10% by mass or more, more preferably 20% by mass or more; but in the case where the curability of the coating film to be formed is considered to be important, the upper limit of the content is preferably 60% by mass or less, more preferably 40% by mass or less. Specifically, the compounds represented by the general formula (II-1) are preferably compounds represented by the following formulae (II-1-1) to (II-I-58).

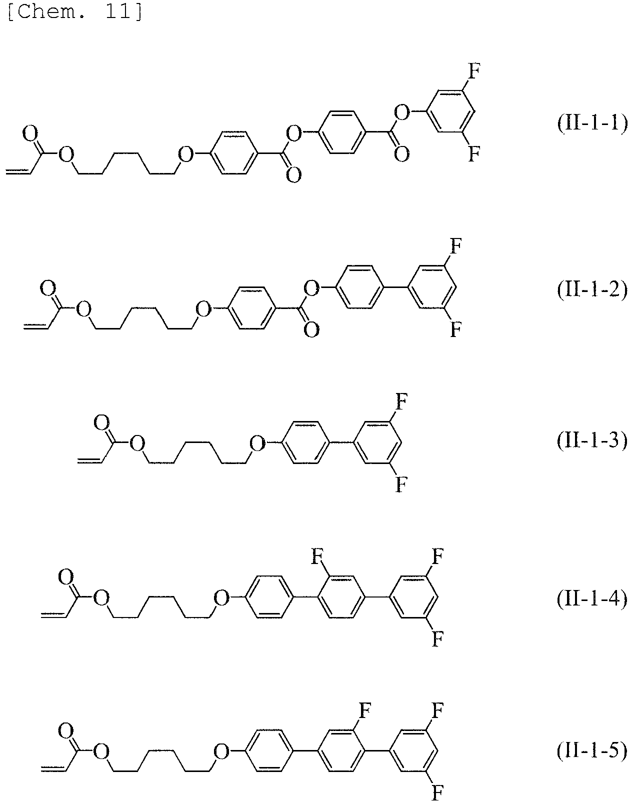

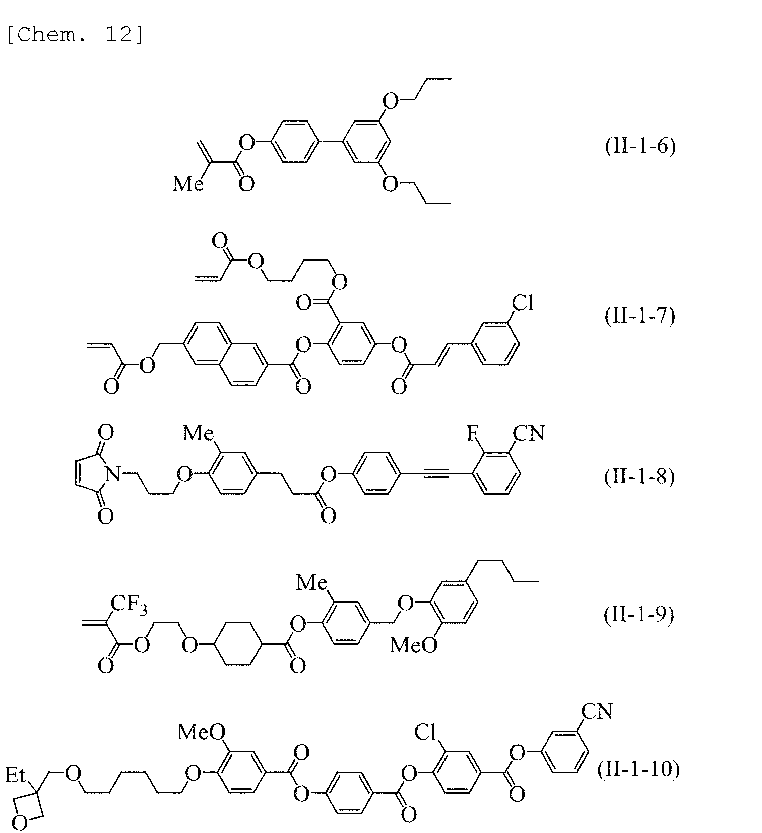

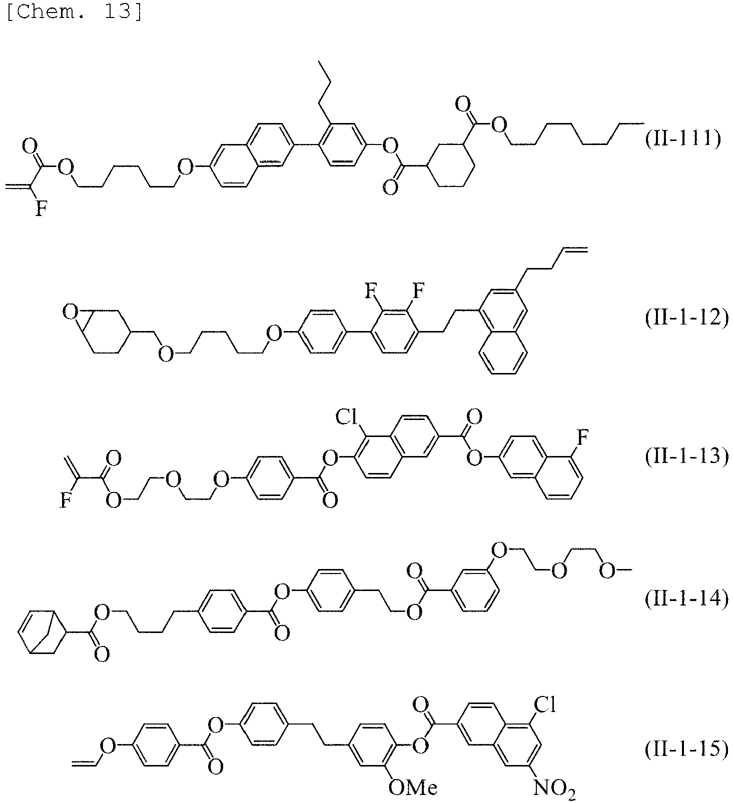

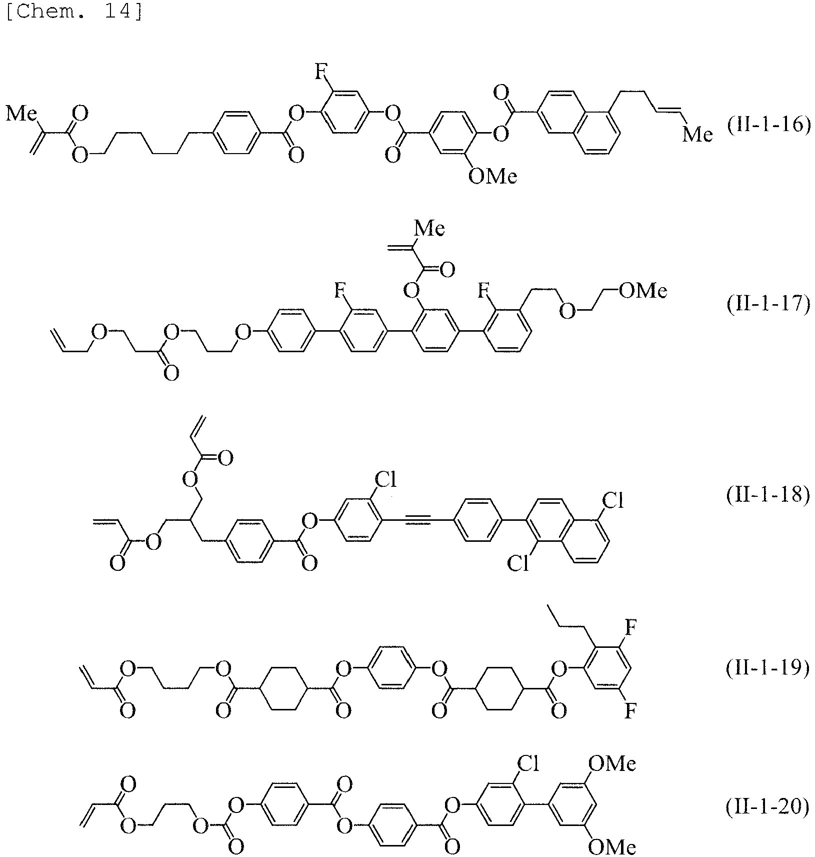

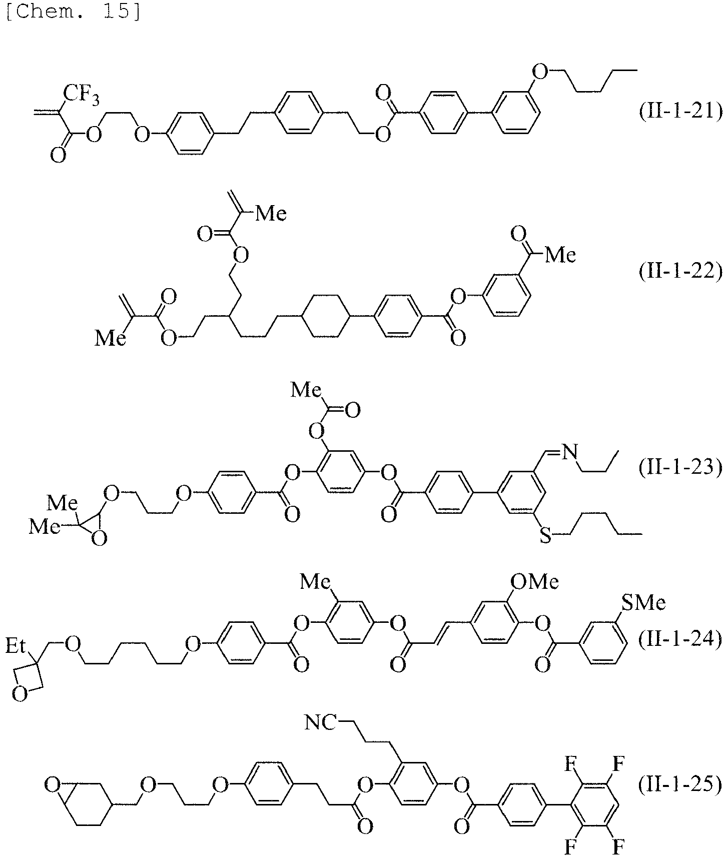

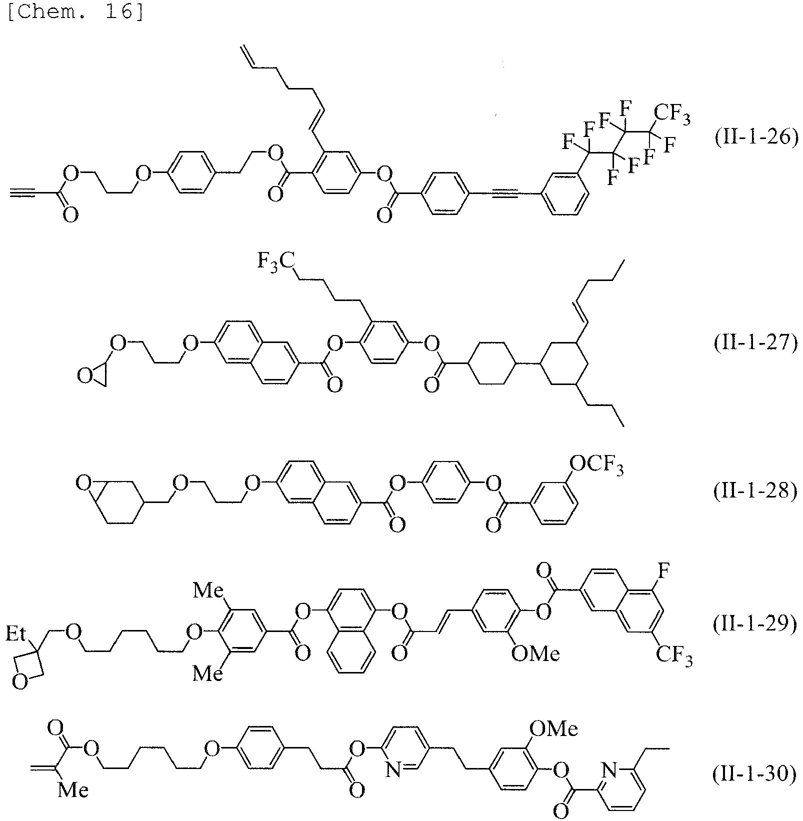

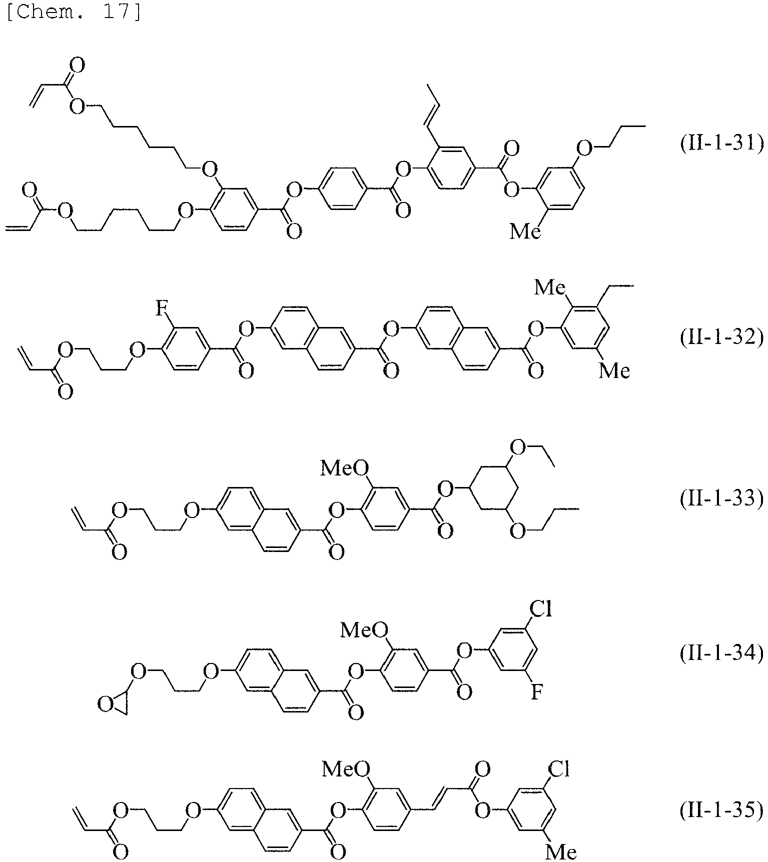

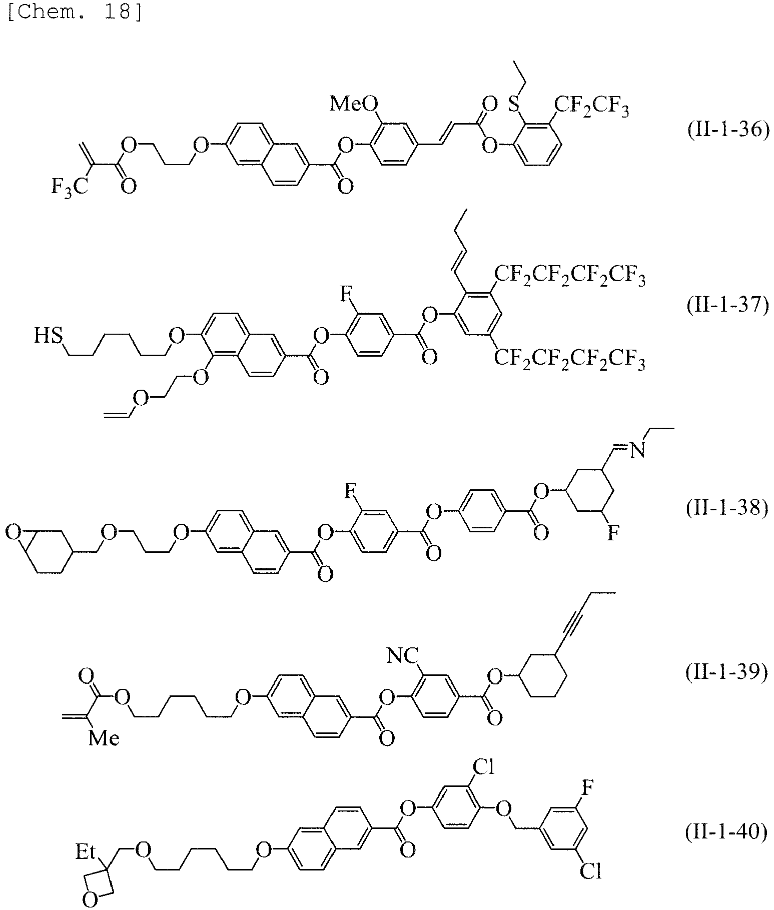

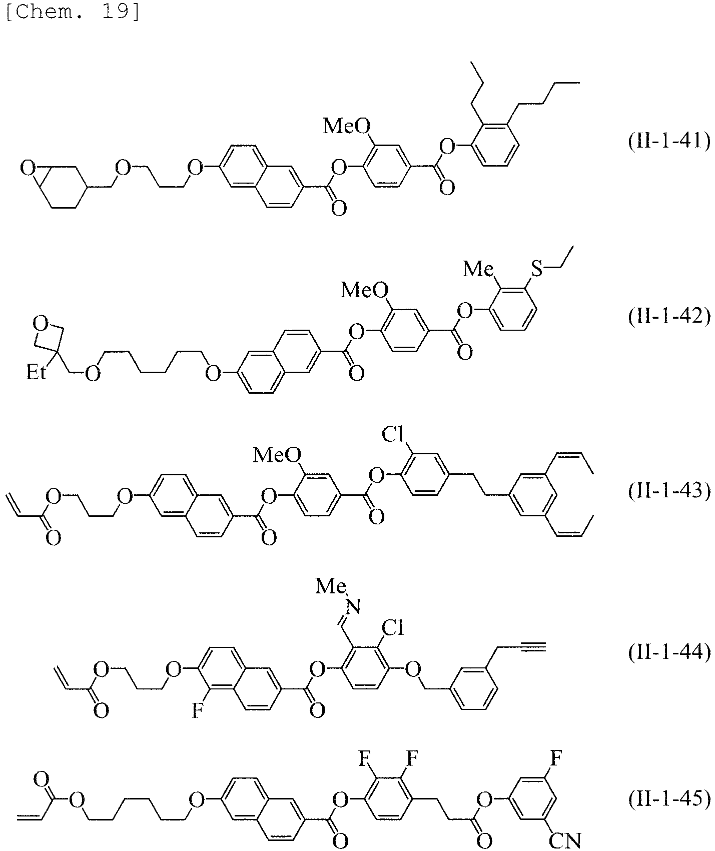

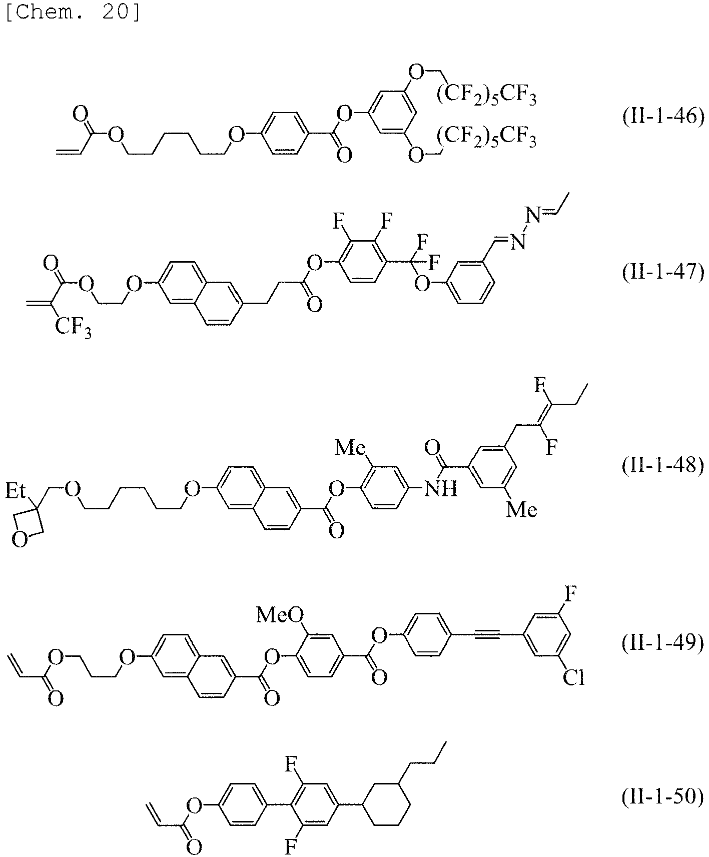

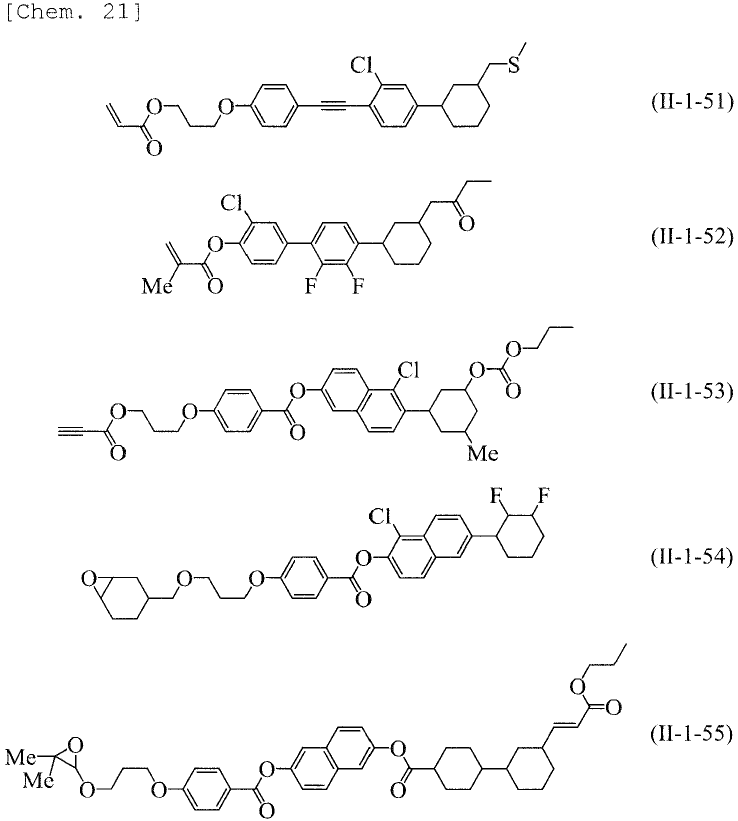

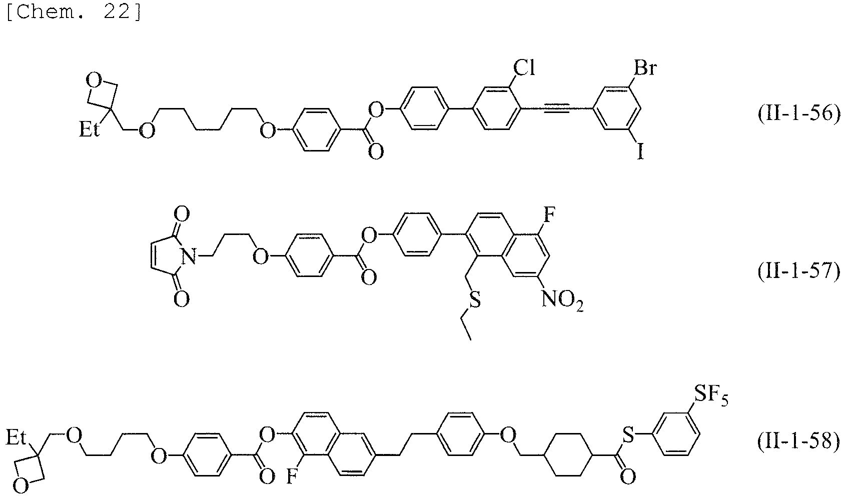

The compounds of the present invention can be produced according to the following production methods.

### (Production Method 1)

### Production of compound represented by the following formula (S-6)

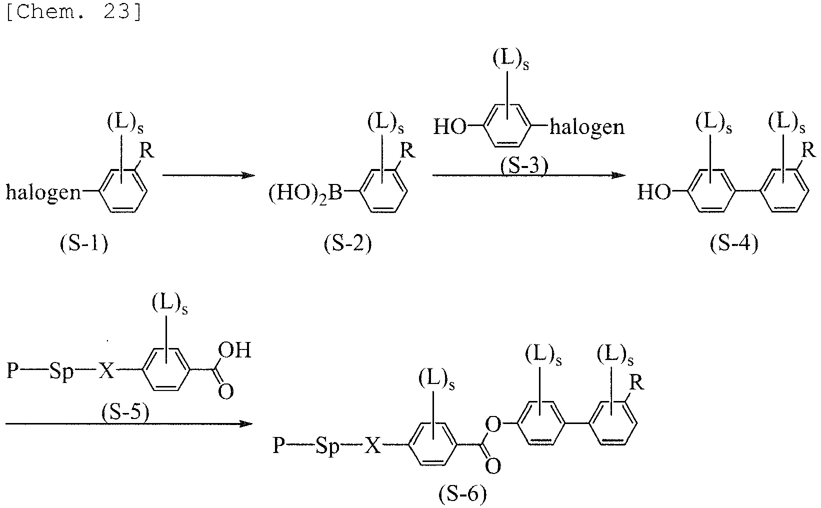

(In the formulae, P, Sp, X, L and R each independently represent the same ones as those defined in the general formula (I), s each independently represents an integer of 0 to 4, halogen represents a halogen atom or a halogen equivalent.)

A compound represented by the formula (S-1) is borated. The method of boration includes a method of reacting a compound represented by the formula (S-1) with magnesium to prepare a Grignard reagent, which is then reacted with a borate and then hydrolyzed, and a method of lithioating a compound represented by the formula (S-1), then reacting it with a borate and hydrolyzing the resultant product. The borate includes trimethyl borate, triisopropyl borate, etc. The lithioating agent includes butyl lithium, sec-butyl lithium, tert-butyl lithium, lithium diisopropylamide, etc.

By reacting the compound represented by the formula (S-2) with a compound represented by the formula (S-3), a compound represented by the formula (S-4) can be obtained. A reaction example includes, for example, a method of crosscoupling the compound in the presence of a metal catalyst and a base.

By reacting the compound represented by the formula (S-4) with a compound represented by the formula (S-5), a compound represented by the formula (S-6) can be obtained. Regarding the reaction condition, for example, there can be mentioned a method of using a condensing agent, and a method of once converting a compound represented by the formula (S-5) into an acid chloride, a mixed acid anhydride or a carboxylic acid anhydride, and then reacting it with the compound represented by the formula (S-4) in the presence of a base. In the case of using a condensing agent, the condensing agent includes, for example, N,N'-dicyclohexylcarbodiimide, N,N'-diisopropylcarbodiimide, 1-ethyl-3-(3-dimethylaminopropyl)carbodiimide hydrochloride. The base includes, for example, triethylamine, diisopropylethylamine, etc.

### (Production Method 2)

### Production of compound represented by the following formula (S-18)

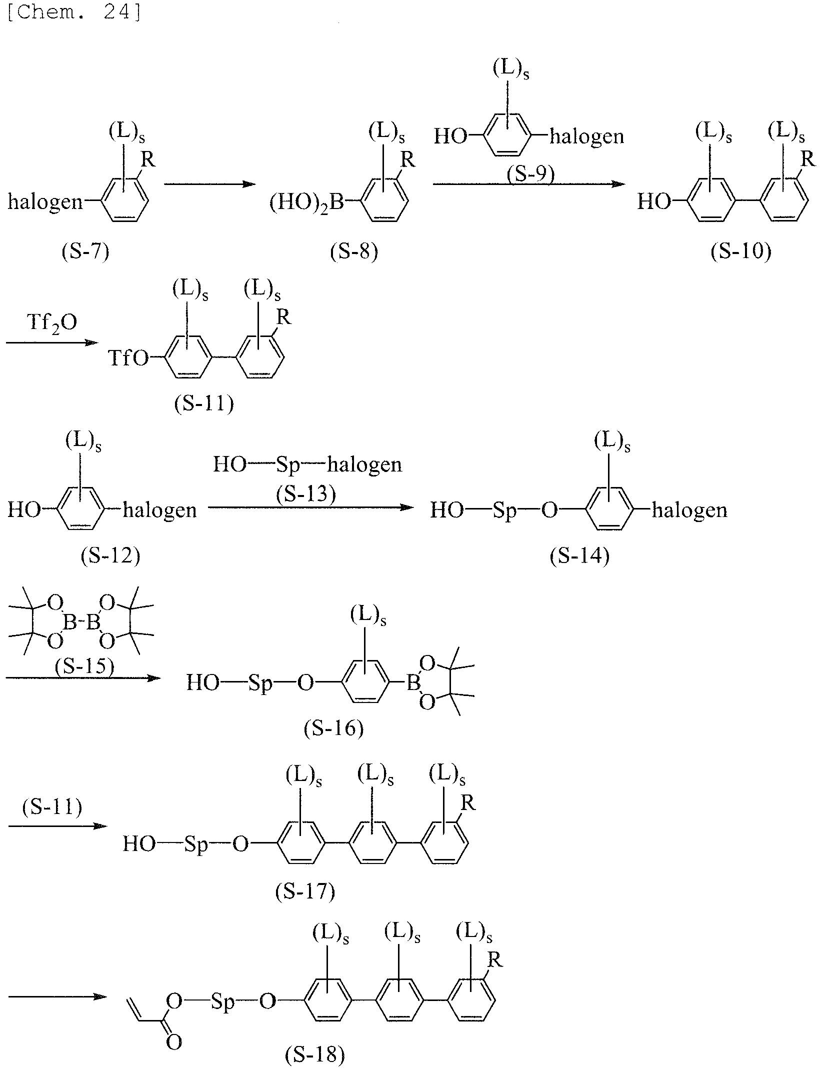

(In the formulae, Sp, L and R each independently represent the same ones as those defined in the general formula (I), s each independently represent an integer of 0 to 4, and halogen represents a halogen atom or a halogen equivalent.)

According to the same method as the Production Method 1, a compound represented by the formula (S-10) is obtained. The compound represented by the formula (S-10) is reacted with a trifluoromethanesulfonic acid anhydride in the presence of a base to give a compound represented by the formula (S-11). The base includes, for example, pyridine, trimethylamine, etc.

A compound represented by the formula (S-12) is reacted with a compound represented by the formula (S-13) to give a compound represented by the formula (S-14). The base includes, for example, potassium carbonate, cesium carbonate, etc.

The compound represented by the formula (S-14) is reacted with a compound represented by the formula (S-15) in the presence of a palladium catalyst and a base to give a compound represented by the formula (S-16).

The compound represented by the formula (S-16) is reacted with the compound represented by the formula (S-11) to give a compound represented by the formula (S-17). A reaction example includes a method of crosscoupling the compounds in the presence of a metal catalyst and a base. The catalyst, the base and the condition are the same as those for the Production Method 1.

The compound represented by the formula (S-17) is acrylated to give a compound represented by the formula (S-18).

### (Production Method 3)

### Production of compound represented by the following formula (S-24)

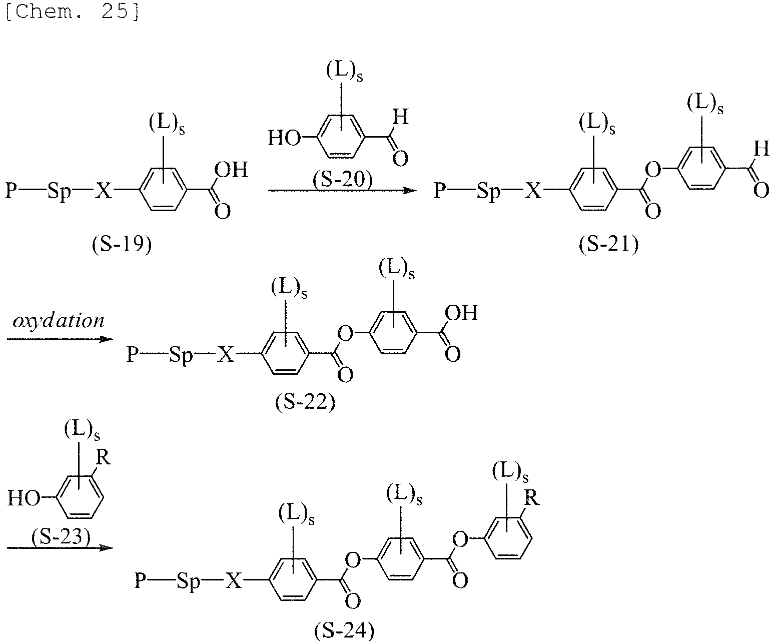

(In the formulae, P, Sp, X, L and R each independently represent the same ones as those defined in the general formula (I), s each independently represents an integer of 0 to 4, halogen represents a halogen atom or a halogen equivalent.)

By reacting a compound represented by the formula (S-19) with a compound represented by the formula (S-20), a compound represented by the formula (S-21) is obtained. Regarding the reaction condition, for example, there can be mentioned a method of using a condensing agent, and a method of once converting a compound represented by the formula (S-19) into an acid chloride, a mixed acid anhydride or a carboxylic acid anhydride, and then reacting it with a compound represented by the formula (S-20) in the presence of a base. The condensing agent and the base are the same as those used in Production Method 1.

By oxidizing the compound represented by the formula (S-21), a compound represented by the formula (S-22) is obtained. The oxidation method includes, for example, a method of using sodium chlorite and hydrogen peroxide.

By reacting a compound represented by the formula (S-22) and a compound represented by the formula (S-23), a compound represented by the formula (S-24) is obtained. Regarding the reaction condition, for example, there can be mentioned a method of using a condensing agent, and a method of once converting a compound represented by the formula (S-22) into an acid chloride, a mixed acid anhydride or a carboxylic acid anhydride, and then reacting it with a compound represented by the formula (S-23) in the presence of a base. The condensing agent and the base are the same as those used in Production Method 1.

### (Polymerizable liquid crystal compound having 2 or more polymerizable functional groups in the molecule)

Preferably, the polymerizable liquid crystal composition of the present invention contains a polymerizable liquid crystal compound having 2 or more polymerizable functional groups in the molecule. A polymer produced by polymerizing a polymerizable liquid crystal composition containing a polymerizable liquid crystal compound having 2 or more polymerizable functional groups in the molecule, along with a polymerizable liquid crystal compound capable of promoting homeotropic alignment and represented by the general formula (II-1), can form a coating film having excellent durability and uniform homeotropic alignment. Specifically, the polymerizable liquid crystal compound having 2 or more polymerizable functional groups in the molecule include compounds represented by the following general formula (I-1).
[Chem. 26]

P¹¹-(Sp¹¹-X¹¹)_{q1}-MG¹²-((X¹²-Sp¹²)_{q2}-P¹²)_{q3} (I-1)

In the formula, P¹¹ and P¹² each independently represent a polymerizable functional group, Sp¹¹ and Sp¹² each independently represent an alkylene group having 1 to 18 carbon atoms, or a single bond, in the alkylene group, one -CH₂- or two or more (-CH₂-)'s not adjacent to each other may be each independently substituted with -0-, -COO-, -OCO- or -OCO-O-, and one or two or more hydrogen atoms that the alkylene group has may be substituted with a halogen atom (fluorine atom, chlorine atom, bromine atom, iodine atom) or a group CN, X¹¹ and X¹² each independently represent -O-, -S-, -OCH₂-, -CH₂O-, -CO-, -COO-, -OCO-, -CO-S-, -S-CO-, -O-CO-O-, -CO-NH-, -NH-CO-, -SCH₂-, -CH₂S-, -CF₂O-, -OCF₂-, -CF₂S-, -SCF₂-, -CH=CH-COO-, -CH=CH-OCO-, -COO-CH=CH-, -OCO-CH=CH-, -COO-CH₂CH₂-, -OCO-CH₂CH₂-, -CH₂CH₂-COO-, -CH₂CH₂-OCO-, -COO-CH₂-, -OCO-CH₂-, -CH₂-COO-, -CH₂-OCO-, -CH=CH-, -N=N-, -CH=N-N=CH-, -CF=CF-, -C=C- or a single bond, provided that P¹¹-Sp¹¹, P¹²-Sp¹², Sp¹¹-X¹¹ and Sp¹²-X¹² do not contain a direct bond that bonds hetero atoms, q1 and q2 each independently represent 0 or 1, q3 represents 1 or 2, and MG¹² represents a mesogen group.

Preferably, P¹¹ and P¹² each independently represent a substituent selected from polymerizable groups represented by the following formulae (P-2-1) to (P-2-20).

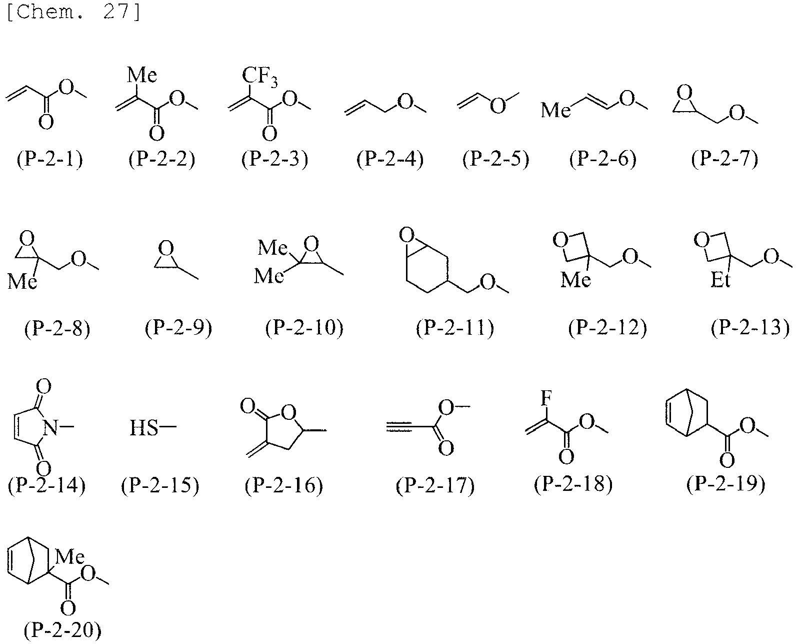

Among these polymerizable functional groups, the formulae (P-2-1), (P-2-2), (P-2-7), (P-2-12) and (P-2-13) are preferred from the viewpoint of enhancing polymerization performance, and the formulae (P-2-1) and (P-2-2) are more preferred.

MG¹² represents a mesogen group, and is represented by the following general formula (I-b).
[Chem. 28]

**-(A1-Z1)ᵣ₁-A2-Z2-A3-** **(I-b)**

(In the formula, A1, A2 and A3 each independently represent a 1,4-phenylene group, a 1,4-cyclohexylene group, a 1,4-cyclohexenyl group, a tetrahydropyran-2,5-diyl group, a 1,3-dioxane-2,5-diyl group, a tetrahydrothiopyran-2,5-diyl group, a 1,4-bicyclo(2,2,2)octylene group, a decahydronaphthalane-2,6-diyl group, a pyridine-2,5-diyl group, a pyrimidine-2,5-diyl group, a pyrazine-2,5-diyl group, a thiophene-2,5-diyl group, a 1,2,3,4-tetrahydronaphthalene-2,6-diyl group, a 2,6-naphthylene group, a phenanthrene-2,7-diyl group, a 9,10-dihydrophenanthrene-2,7-diyl group, a 1,2,3,4,4a,9,10a-octahydrophenanthrene-2,7-diyl group, a 1,4-naphthylene group, a benzo[1,2-b:4,5-b']dithiophene-2,6-diyl group, a benzo[1,2-b:4,5-b']diselenophene-2,6-diyl group, a [1]benzothieno[3,2-b]thiophene-2,7-diyl group, a [1]benzoselenopheno[3,2-b]selenophene-2,7-diyl group, or a fluorene-2,7-diyl group, which may have one or more substituents of F, Cl, CF₃, OCF₃, CN, an alkyl group having 1 to 8 carbon atoms, an alkoxy group having 1 to 8 carbon atoms, an alkanoyl group having 1 to 8 carbon atoms, an alkanoyloxy group having 1 to 8 carbon atoms, an alkoxycarbonyl group having 1 to 8 carbon atoms, an alkenyl group having 2 to 8 carbon atoms, an alkenyloxy group having 2 to 8 carbon atoms, an alkenoyl group having 2 to 8 carbon atoms, and/or an alkenoyloxy group having 2 to 8 carbon atoms, Z1 and Z2 each independently represent -COO-, -OCO-, -CH₂CH₂-, -OCH₂-, -CH₂O-, -CH=CH-, -C=C-, -CH=CHCOO-, -OCOCH=CH-, -CH₂CH₂COO-, -CH₂CH₂OCO-, -COOCH₂CH₂-, -OCOCH₂CH₂-, -C=N-, -N=C-, -CONH-, -NHCO-, -C(CF₃)₂-, an alkyl group having 2 to 10 carbon atoms and optionally having a halogen atom (fluorine atom, chlorine atom, bromine atom, iodine atom) or a single bond. Preferably, Z1 and Z2 each are independently -COO-, -OCO-, -CH₂CH₂-, -OCH₂-, -CH₂O-, -CH=CH-, -C=C-, -CH=CHCOO-, -OCOCH=CH-, -CH₂CH₂COO-, -CH₂CH₂OCO-, -COOCH₂CH₂-, -OCOCH₂CH₂- or a single bond, more preferably -COO-, -OCO-, -OCH₂-, -CH₂O-, -CH₂CH₂O-, -CH₂CH₂OCO-, -COOCH₂CH₂-, -OCOCH₂CH₂- or a single bond, r1 represents 0, 1, 2 or 3, plural A1's, if any, may be the same or different, and plural Z1's, if any, may be the same or different, provided that when q3 is 2 or 3, any one of A1, A2 and A3 has one or two (-(X¹²-Sp¹²)_{q2}-P¹²)'s groups. Among these, preferably, A1, A2 and A3 each independently represent a 1,4-phenylene group, a 1,4-cyclohexylene group or a 2,6-naphthylene group.

### (Bifunctional polymerizable liquid crystal compound)

The polymerizable liquid crystal compound represented by the general formula (I-1) and having 2 or more polymerizable functional groups in the molecule is preferably a bifunctional polymerizable liquid crystal compound having 2 polymerizable functional groups in the molecule and represented by the following general formula (I-1-1).
[Chem. 29]

**p¹¹-(Sp¹¹-X¹¹)_{q1}-MG¹²-(X¹²-Sp¹²)_{q2}-P¹²** **(I-1-1)**

(In the formula, P¹¹ and P¹² each independently represent a polymerizable functional group, Sp¹¹ and Sp¹² each independently represent an alkylene group having 1 to 18 carbon atoms or a single bond, in the alkylene group, one -CH₂- or two or more (-CH₂-)'s not adjacent to each other may be each independently substituted with -O-, -COO-, -OCO- or -OCO-O-, one or more hydrogen atoms that the alkylene group has may be substituted with a halogen atom (fluorine atom, chlorine atom, bromine atom, iodine atom) or a group CN, X¹¹ and X¹² each independently represent -O-, -S-, -OCH₂-, -CH₂O-, -CO-, -COO-, -OCO-, -CO-S-, -S-CO-, -O-CO-O-, -CO-NH-, -NH-CO-, -SCH₂-, -CH₂S-, -CF₂O-, -OCF₂-, -CF₂S-, -SCF₂-, -CH=CH-COO-, -CH=CH-OCO-, -COO-CH=CH-, -OCO-CH=CH-, -COO-CH₂CH₂-, -OCO-CH₂CH₂-, -CH₂CH₂-COO-, -CH₂CH₂-OCO-, -COO-CH₂-, -OCO-CH₂-, -CH₂-COO-, -CH₂-OCO-, -CH=CH-, -N=N-, -CH=N-N=CH-, -CF=CF-, -C=C- or a single bond, provided that P¹¹-Sp¹¹, P¹²-Sp¹², Sp¹¹-X¹¹ and Sp¹²-X¹² do not contain a direct bond that bonds hetero atoms, q1 and q2 each independently represent 0 or 1, and MG¹² represents a mesogen group.)

Here, preferably, P¹¹ and P¹² each independently represent a substituent selected from the polymerizable groups represented by the above-mentioned formulae (P-2-1) to (P-2-20). Among these polymerizable functional groups, the formulae (P-2-1), (P-2-2), (P-2-7), (P-2-12) and (P-2-13) are preferred from the viewpoint of enhancing polymerization performance, and the formulae (P-2-1) and (P-2-2) are more preferred.

Preferably, Sp¹¹ and Sp¹² each independently represent an alkylene group having 1 to 15 carbon atoms, and in the alkylene group, one -CH₂- or two or more (-CH₂-)'s not adjacent to each other may be each independently substituted with -O-, -COO-, -OCO- or -OCO-O-, and one or more hydrogen atoms that the alkylene group has may be substituted with a halogen atom (fluorine atom, chlorine atom, bromine atom, iodine atom), or a group CN. More preferably, Sp¹¹ and Sp¹² each independently represent an alkylene group having 1 to 12 carbon atoms, and in the alkylene group, one -CH₂- or two or more (-CH₂-)'s not adjacent to each other may be each independently substituted with -0-, -COO-, -OCO- or -OCO-O-.

Preferably, X¹¹ and X¹² each independently represent -O-, -OCH₂-, -CH₂O-, -CO-, -COO-, -OCO-, -O-CO-O-, -CO-NH-, -NH-CO-, -CF₂O-, -OCF₂-, -CH=CH-COO-, -CH=CH-OCO-, -COO-CH=CH-, -OCO-CH=CH-, -COO-CH₂CH₂-, -OCO-CH₂CH₂-, -CH₂CH₂-COO-, -CH₂CH₂-OCO-, -COO-CH₂-, -OCO-CH₂-, -CH₂-COO-, -CH₂-OCO-, -CH=CH-, -N=N-, -CH=N-N=CH-, -CF=CF-, -C≡C- or a single bond, and more preferably, X¹¹ and X¹² each independently represent -O-, -OCH₂-, -CH₂O-, -CO-, -COO-, -OCO-, -O-CO-O-, -CF₂O-, -OCF₂-, -CH=CH-COO-, -CH=CH-OCO-, -COO-CH=CH-, -OCO-CH=CH-, -COO-CH₂CH₂-, -OCO-CH₂CH₂-, -CH₂CH₂-COO-, -CH₂CH₂-OCO-, -COO-CH₂-, -OCO-CH₂-, -CH₂-COO-, -CH₂-OCO-, -CH=CH-, -CF=CF-, -C=C- or a single bond.

MG¹² represents a mesogen group, and is preferably a group represented by the following general formula (I-1-b).
[Chem. 30]

**-(A1-Z1)ᵣ₁-A2-Z2-A3-** **(I-1-b)**

In the formula, A1, A2 and A3 each independently represent a 1,4-phenylene group, a 1,4-cyclohexylene group, a 1,4-cyclohexenyl group, a tetrahydropyran-2,5-diyl group, a 1, 3-dioxane-2, 5-diyl group, a tetrahydrothiopyran-2,5-diyl group, a 1,4-bicyclo(2,2,2)octylene group, a decahydronaphthalane-2,6-diyl group, a pyridine-2,5-diyl group, a pyrimidine-2,5-diyl group, a pyrazine-2,5-diyl group, a thiophene-2,5-diyl group, a 1,2,3,4-tetrahydronaphthalene-2,6-diyl group, a 2,6-naphthylene group, a phenanthrene-2,7-diyl group, a 9,10-dihydrophenanthrene-2,7-diyl group, a 1,2,3,4,4a,9,10a-octahydrophenanthrene-2,7-diyl group, a 1,4-naphthylene group, a benzo[1,2-b:4,5-b']dithiophene-2,6-diyl group, a benzo[1,2-b:4,5-b']diselenophene-2,6-diyl group, a [1]benzothieno[3,2-b]thiophene-2,7-diyl group, a [1]benzoselenopheno[3,2-b]selenophene-2,7-diyl group, or a fluorene-2,7-diyl group, which may have one or more substituents of F, Cl, CF₃, OCF₃, CN, an alkyl group having 1 to 8 carbon atoms, an alkoxy group having 1 to 8 carbon atoms, an alkanoyl group having 1 to 8 carbon atoms, an alkanoyloxy group having 1 to 8 carbon atoms, an alkoxycarbonyl group having 1 to 8 carbon atoms, an alkenyl group having 2 to 8 carbon atoms, an alkenyloxy group having 2 to 8 carbon atoms, an alkenoyl group having 2 to 8 carbon atoms, and/or an alkenoyloxy group having 2 to 8 carbon atoms, Z1 and Z2 each independently represent -COO-, -OCO-, -CH₂CH₂-, -OCH₂-, -CH₂O-, -CH=CH-, -C≡C-, -CH=CHCOO-, -OCOCH=CH-, -CH₂CH₂COO-, -CH₂CH₂OCO-, -COOCH₂CH₂-, -OCOCH₂CH₂-, -C=N-, -N=C-, -CONH-, -NHCO-, -C(CF₃)₂-, an alkyl group having 2 to 10 carbon atoms and optionally having a halogen atom (fluorine atom, chlorine atom, bromine atom, iodine atom) or a single bond. Preferably, Z1 and Z2 each are independently -COO-, -OCO-, -CH₂CH₂-, -OCH₂-, -CH₂O-, -CH=CH-, -C≡C-, -CH=CHCOO-, -OCOCH=CH-, -CH₂CH₂COO-, -CH₂CH₂OCO-, -COOCH₂CH₂-, -OCOCH₂CH₂- or a single bond, more preferably -COO-, -OCO-, -OCH₂-, -CH₂O-, -CH₂CH₂O-, -CH₂CH₂OCO-, -COOCH₂CH₂-, -OCOCH₂CH₂- or a single bond, r1 represents 0, 1, 2 or 3, plural A1's, if any, may be the same or different, and plural Z1's, if any, may be the same or different. Among these, preferably, A1, A2 and A3 each are independently a 1,4-phenylene group, a 1,4-cyclohexylene group or a 2,6-naphthylene group.

Examples of the general formula (I-1-1) include compounds represented by the following general formulae (I-1-1-1) to (I-1-1-4), but are not restricted to the following general formulae.
[Chem. 31]

P¹¹-(Sp¹¹-X¹¹)_{q1}-A2-Z2-A3-(X¹²-Sp¹²)_{q2}-P¹² (I-1-1-1)

P¹¹-(Sp¹¹-X¹¹)_{q1}-A11-Z11-A2-Z2-A3-(X¹²-Sp¹²)_{q2}-P¹² (I-1-1-2)

P¹¹-(Sp¹¹-X¹¹)_{q1}-A11-Z11-A12-Z12-A2-Z2-A3-(X¹²-Sp¹²)_{q2}-P¹² (I-1-1-3)

P¹¹-(Sp¹¹-X¹¹)_{q1}-A11-Z11-A12-Z12-A13-Z13-A2-Z2-A3-(X¹²-Sp¹²)_{q2}-P¹² (I-1-1-4)

In the formulae, P¹¹, Sp¹¹, X¹¹, q1, X¹², Sp¹², q2 and P¹² each have the same definitions as those in the above-mentioned general formula (I-1-1),

A11, A12, A13, A2 and A3 each have the same definitions as those of A1 to A3 in the general formula (I-1-b), and these may be the same or different, and

Z11, Z12, Z13 and Z2 each have the same definitions as those of Z1 or Z2 in the general formula (I-1-b); and these may be the same or different.

Among the compounds represented by the general formulae (1-1-1-1) to (1-1-1-4), compounds having 3 or more cyclic structures in the compound, as represented by the general formula (1-1-1-2) to (1-1-1-4) are preferably employed as bettering the alignment of the optically anisotropic body to be obtained, and compounds having 3 cyclic structures in the compound as represented by the general formula (1-1-1-2) are more preferably employed.

Examples of the compounds represented by the general formulae (I-1-1-1) to (1-1-1-4) include compounds represented by the following formulae (I-1-1-1-1) to (1-1-1-1-21), but are not limited thereto.

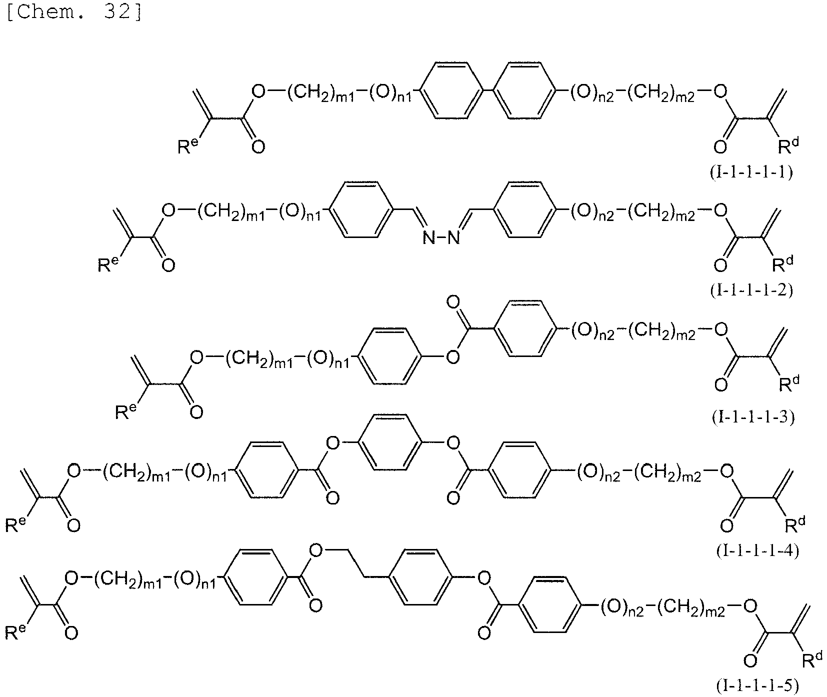

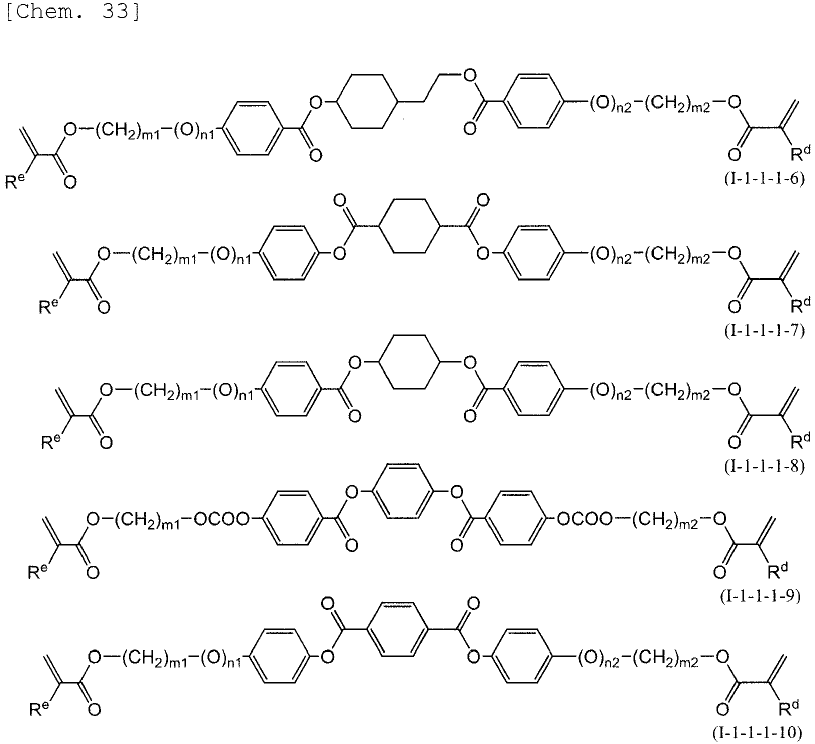

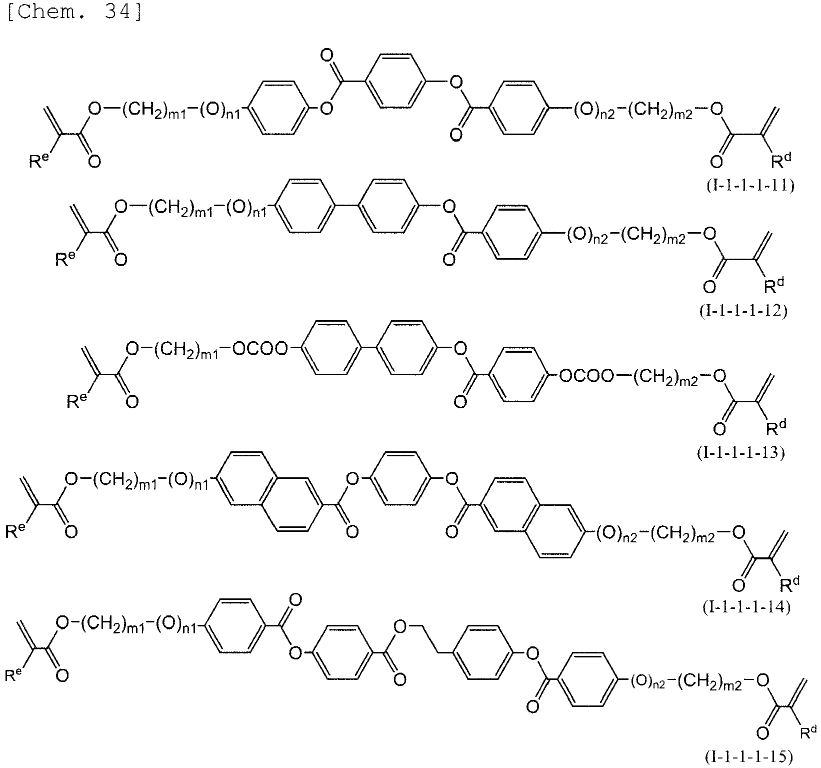

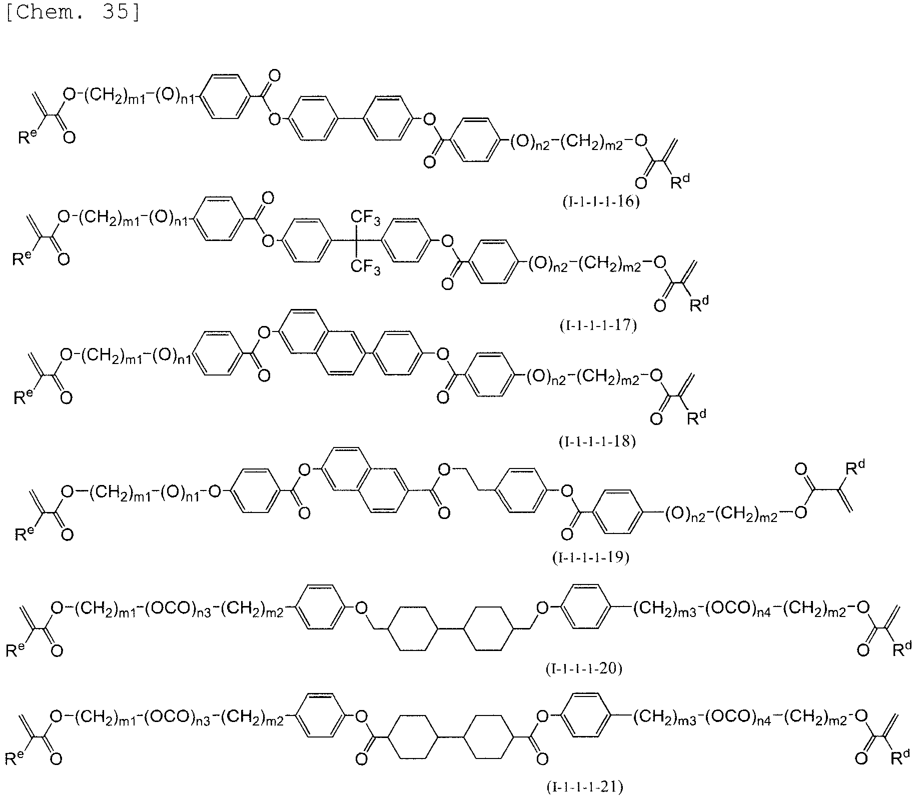

In the formulae, R^{d} and R^{e} each independently represent a hydrogen atom or a methyl group, the above-mentioned cyclic group may have one or more substituents of F, Cl, CF₃, OCF₃, a group CN, an alkyl group having 1 to 8 carbon atoms, an alkoxy group having 1 to 8 carbon atoms, an alkanoyl group having 1 to 8 carbon atoms, an alkanoyloxy group having 1 to 8 carbon atoms, an alkoxycarbonyl group having 1 to 8 carbon atoms, an alkenyl group having 2 to 8 carbon atoms, an alkenyloxy group having 2 to 8 carbon atoms, an alkenoyl group having 2 to 8 carbon atoms and an alkenyloxy group having 2 to 8 carbon atoms, m1 and m2 each independently represent an integer of 0 to 18, n1, n2, n3 and n4 each independently represent 0 or 1.

One or more kinds of the liquid crystal compounds having two polymerizable functional groups, but preferably one to five kinds, more preferably one to five kinds of the compounds are used.

The total content of the polymerizable liquid crystal compounds having two polymerizable functional groups is preferably 10 to 90% by mass of the total amount of the polymerizable liquid crystal compounds in the polymerizable liquid crystal composition including the polymerizable liquid crystal compound represented by the general formula (II-1), more preferably 15 to 85% by mass, even more preferably 20 to 80% by mass. In the case where the curability of the coating film to be formed is considered to be important, the lower limit of the content is preferably 30% by mass or more, more preferably 50% by mass or more; but in the case where the adhesiveness to substrate of the coating film to be formed is considered to be important, the upper limit of the content is preferably 85% by mass or less, more preferably 80% by mass or less.

### (Trifunctional polymerizable liquid crystal compound)

Preferably, the polymerizable liquid crystal compound having 2 or more polymerizable functional groups in the molecule and represented by the general formula (I-1) for use herein is a trifunctional polymerizable liquid crystal compound having 3 polymerizable functional groups in the molecule and represented by the following general formula (I-1-2). 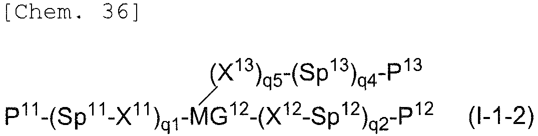 (In the formula, P¹² to P¹³ each independently represent a polymerizable functional group, Sp¹¹ to S¹³ each independently represent an alkylene group having 1 to 18 carbon atoms, or a single bond, in the alkylene group, one -CH₂- or two or more (-CH₂-)'s not adjacent to each other may be each independently substituted with -O-, -COO-, -OCO- or -OCO-O-, one or more hydrogen atoms that the alkylene group has may be substituted with a halogen atom (fluorine atom, chlorine atom, bromine atom, iodine atom) or a group CN, X¹¹ to X¹³ each independently represent -O-, -S-, -OCH₂-, -CH₂O-, -CO-, -COO-, -OCO-, -CO-S-, -S-CO-, -O-CO-O-, -CO-NH-, -NH-CO-, -SCH₂-, -CH₂S-, -CF₂O-, -OCF₂-, -CF₂S-, -SCF₂-, -CH=CH-COO-, -CH=CH-OCO-, -COO-CH=CH-, -OCO-CH=CH-, -COO-CH₂CH₂-, -OCO-CH₂CH₂-, -CH₂CH₂-COO-, -CH₂CH₂-OCO-, -COO-CH₂-, -OCO-CH₂-, -CH₂-COO-, -CH₂-OCO-, -CH=CH-, -N=N-, -CH=N-N=CH-, -CF=CF-, -C=C- or a single bond (provided that P¹¹-Sp¹¹, P¹²-Sp¹², Sp¹¹-X¹¹, Sp¹²-X¹², Sp¹³-X¹³, and Sp¹³-X¹³ do not contain a direct bond that bonds hetero atoms), q1, q2, q4 and q5 each independently represent 0 or 1, MG¹² represent a mesogen group.)

Here, preferably, P¹² to P¹³ are each independently a substituent selected from the polymerizable groups represented by the following formulae (P-2-1) to (P-2-20).

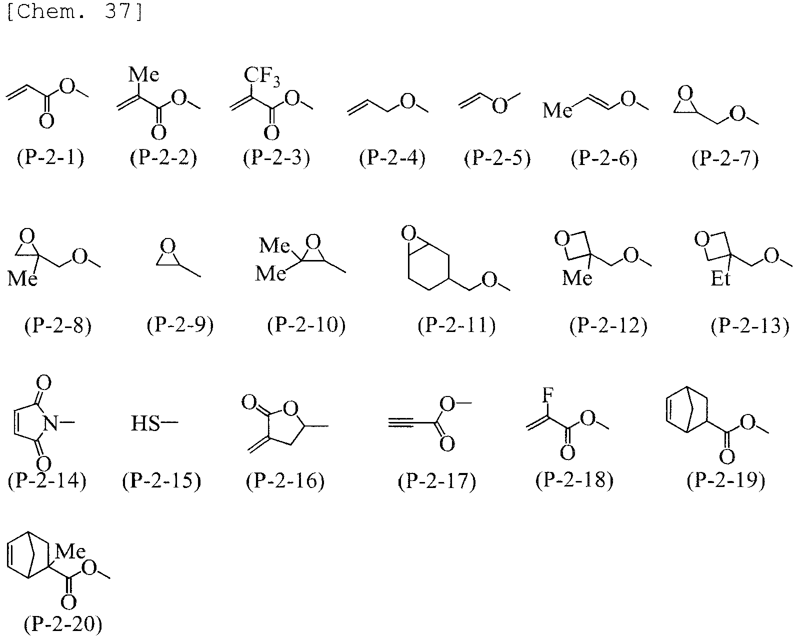

Among these polymerizable functional groups, the formulae (P-2-1), (P-2-2), (P-2-7), (P-2-12), and (P-2-13) are preferred, and the formulae (P-2-1), and (P-2-2) are more preferred from the viewpoint of enhancing polymerization performance.

Preferably, Sp¹¹ to Sp¹³ each independently represent an alkylene group having 1 to 15 carbon atoms, and in the alkylene group, one -CH₂- or two or more (-CH₂-) 's not adjacent to each other may be each independently substituted with -O-, -COO-, -OCO- or -OCO-O-, and one or more hydrogen atoms that the alkylene group has may be substituted with a halogen atom (fluorine atom, chlorine atom, bromine atom, iodine atom), or a group CN. More preferably, Sp¹¹ to Sp¹³ each independently represent an alkylene group having 1 to 12 carbon atoms, and in the alkylene group, one -CH₂- or two or more (-CH₂-) 's not adjacent to each other may be each independently substituted with -0-, -COO-, -OCO- or -OCO-O-. Preferably, X¹¹ to X¹³ each independently represent -O-, -OCH₂-, -CH₂O-, -CO-, -COO-, -OCO-, -O-CO-O-, -CO-NH-, -NH-CO-, -CF₂O-, -OCF₂-, -CH=CH-COO-, -CH=CH-OCO-, -COO-CH=CH-, -OCO-CH=CH-, -COO-CH₂CH₂-, -OCO-CH₂CH₂-, -CH₂CH₂-COO-, -CH₂CH₂-OCO-, -COO-CH₂-, -OCO-CH₂-, -CH₂-COO-, -CH₂-OCO-, -CH=CH-, -N=N-, -CH=N-N=CH-, -CF=CF-, -C≡C- or a single bond, and more preferably, X¹¹ to X¹³ each independently represent -O-, -OCH₂-, -CH₂O-, -CO-, -COO-, -OCO-, -O-CO-O-, -CF₂O-, -OCF₂-, -CH=CH-COO-, -CH=CH-OCO-, -COO-CH=CH-, -OCO-CH=CH-, -COO-CH₂CH₂-, -OCO-CH₂CH₂-, -CH₂CH₂-COO-, -CH₂CH₂-OCO-, -COO-CH₂-, -OCO-CH₂-, -CH₂-COO-, -CH₂-OCO-, -CH=CH-, -CF=CF-, -C=C- or a single bond.

MG¹² is a mesogen group, and is represented by the following general formula (I-2-b).
[Chem. 38]

**-(A1-Z1)ᵣ₁-A2-Z2-A3-** (I-2-b)

In the formula, A1, A2 and A3 each independently represent a 1,4-phenylene group, a 1,4-cyclohexylene group, a 1,4-cyclohexenyl group, a tetrahydropyran-2,5-diyl group, a 1,3-dioxane-2,5-diyl group, a tetrahydrothiopyran-2,5-diyl group, a 1,4-bicyclo(2,2,2)octylene group, a decahydronaphthalane-2,6-diyl group, a pyridine-2,5-diyl group, a pyrimidine-2,5-diyl group, a pyrazine-2,5-diyl group, a thiophene-2,5-diyl group, a 1,2,3,4-tetrahydronaphthalene-2,6-diyl group, a 2,6-naphthylene group, a phenanthrene-2,7-diyl group, a 9,10-dihydrophenanthrene-2,7-diyl group, a 1,2,3,4,4a,9,10a-octahydrophenanthrene-2,7-diyl group, a 1,4-naphthylene group, a benzo[1,2-b:4,5-b']dithiophene-2,6-diyl group, a benzo[1,2-b:4,5-b']diselenophene-2,6-diyl group, a [1]benzothieno[3,2-b]thiophene-2,7-diyl group, a [1]benzoselenopheno[3,2-b]selenophene-2,7-diyl group, or a fluorene-2,7-diyl group, which may have one or more substituents of F, Cl, CF₃, OCF₃, CN, an alkyl group having 1 to 8 carbon atoms, an alkoxy group having 1 to 8 carbon atoms, an alkanoyl group having 1 to 8 carbon atoms, an alkanoyloxy group having 1 to 8 carbon atoms, an alkoxycarbonyl group having 1 to 8 carbon atoms, an alkenyl group having 2 to 8 carbon atoms, an alkenyloxy group having 2 to 8 carbon atoms, an alkenoyl group having 2 to 8 carbon atoms, and/or an alkenoyloxy group having 2 to 8 carbon atoms, and any of A1, A2 an A3 has a group - (X¹³)_{q5}-(Sp¹³)_{q4}-P¹³. Z1 and Z2 each independently represent -COO-, -OCO-, -CH₂CH₂-, -OCH₂-, -CH₂O-, -CH=CH-, -C=C-, -CH=CHCOO-, -OCOCH=CH-, -CH₂CH₂COO-, -CH₂CH₂OCO-, -COOCH₂CH₂-, -OCOCH₂CH₂-, -C=N-, -N=C-, -CONH-, -NHCO-, -C(CF₃)₂-, an alkyl group having 2 to 10 carbon atoms and optionally having a halogen atom (fluorine atom, chlorine atom, bromine atom, iodine atom), or a single bond. Preferably, Z1 and Z2 each are independently -COO-, -OCO-, -CH₂CH₂-, -OCH₂-, -CH₂O-, -CH=CH-, -C=C-, -CH=CHCOO-, -OCOCH=CH-, -CH₂CH₂COO-, -CH₂CH₂OCO-, -COOCH₂CH₂-, -OCOCH₂CH₂- or a single bond, r1 represents 0, 1, 2 or 3, plural A1's, if any, may be the same or different, and plural Z1's, if any, may be the same or different. Among these, preferably, A1, A2 and A3 each are independently a 1,4-phenylene group, a 1,4-cyclohexylene group or a 2,6-naphthylene group.

Examples of the general formula (I-1-2) include compounds represented by the following general formulae (1-1-2-1) to (I-1-2-8), but are not restricted to the following general formulae.

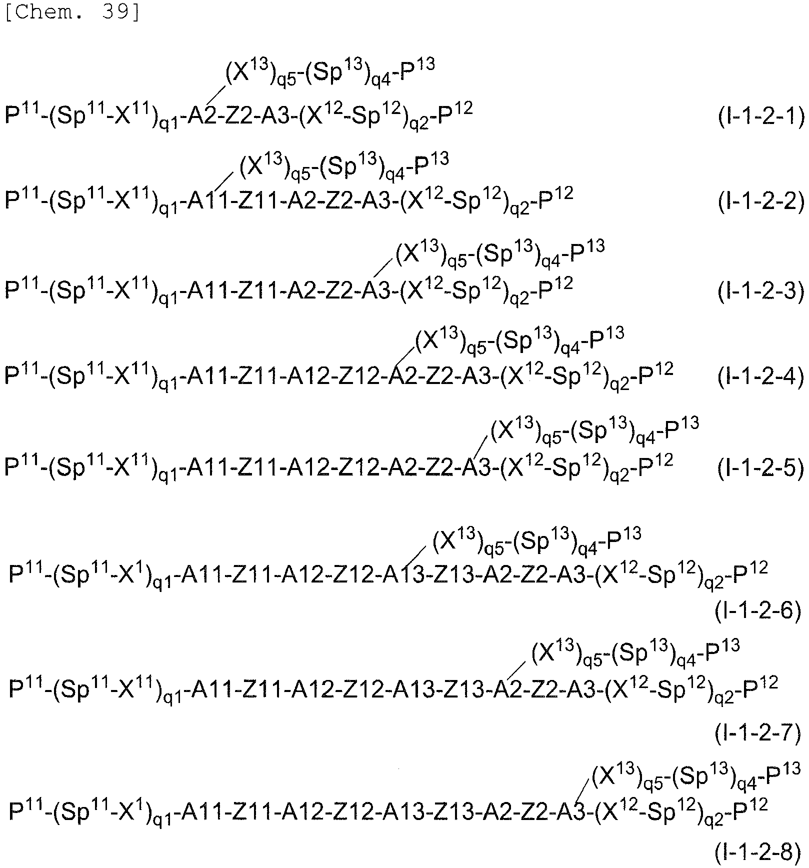

In the formulae, P¹¹, Sp¹¹, X¹¹, q1, X¹², Sp¹², q2, P¹², X¹³, q5, Sp¹³, q4 and P¹³ each have the same definitions as those in the above-mentioned general formula (I-1-2),
A11, A12, A13, A2 and A3 each have the same definitions as A1 to A3 in the general formula (I-2-b), and may be the same or different,
Z11, Z12, Z13 and Z2 each have the same definitions as Z1 and Z2 in the general formula (I-2-b), and may be the same or different.

Examples of the compounds of the general formulae (I-1-2-1) to (I-1-2-8) include compounds represented by the following general formulae (I-1-2-1-1) to (1-1-2-1-6), but are not restricted thereto.

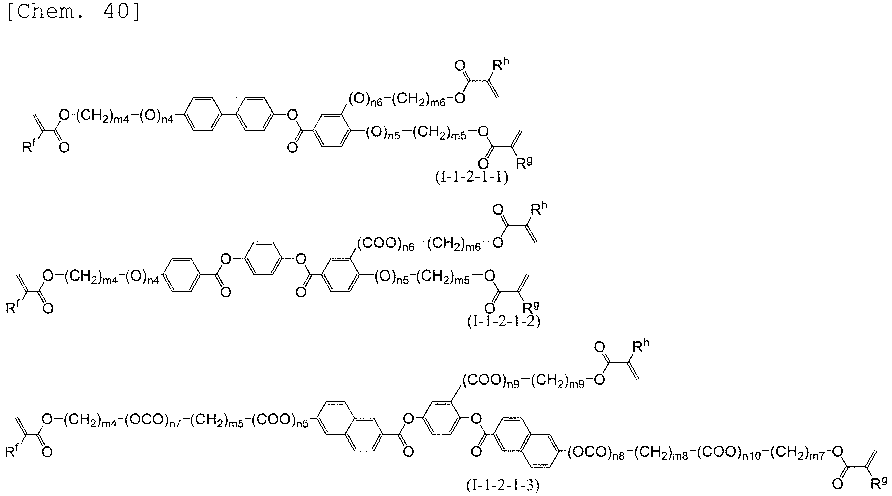

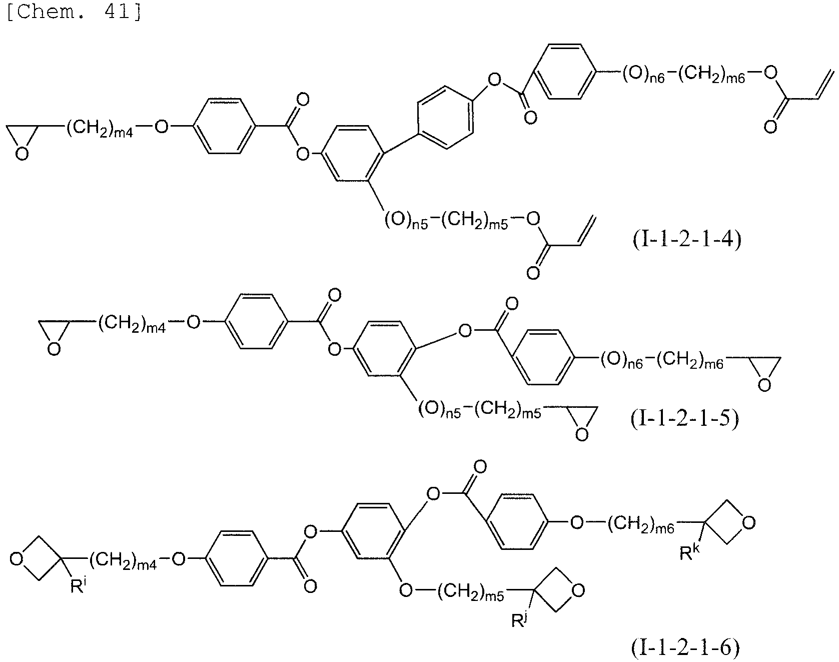

In the formulae, R^{f}, R^{g} and R^{h} each independently represent a hydrogen atom or a methyl group, Rⁱ, R^{j} and R^{k} each independently represent a hydrogen atom, a halogen atom (fluorine atom, chlorine atom, bromine atom, iodine atom), an alkyl group having 1 to 6 carbon atoms, an alkoxy group having 1 to 6 carbon atoms, or a cyano group. In the case where these groups are an alkyl group having 1 to 6 carbon atoms or an alkoxy group having 1 to 6 carbon atoms, all of them may be unsubstituted or they may be substituted with one or more halogen atoms (fluorine atom, chlorine atom, bromine atom, iodine atom), and the above-mentioned cyclic group may have one or more substituents of F, Cl, CF₃, OCF₃, CN, an alkyl group having 1 to 8 carbon atoms, an alkoxy group having 1 to 8 carbon atoms, an alkanoyl group having 1 to 8 carbon atoms, an alkanoyloxy group having 1 to 8 carbon atoms, an alkoxycarbonyl group having 1 to 8 carbon atoms, an alkenyl group having 2 to 8 carbon atoms, an alkenyloxy group having 2 to 8 carbon atoms, an alkenoyl group having 2 to 8 carbon atoms, and an alkenoyloxy group having 2 to 8 carbon atoms.
m4 to m9 each independently represent an integer of 0 to 18, and n4 to n10 each independently represents 0 or 1.

One or more kinds of the polyfunctional polymerizable liquid crystal compounds having three polymerizable functional groups may be used.

The total content of the polyfunctional polymerizable liquid crystal compounds having 3 polymerizable functional groups in the molecule is preferably 0 to 40% by mass of the total amount of the polymerizable liquid crystal compounds in the polymerizable liquid crystal composition including the polymerizable liquid crystal compound represented by the general formula (II-1), more preferably 0 to 30% by mass, even more preferably 0 to 20% by mass.

### (Monofunctional polymerizable liquid crystal compound)

The polymerizable liquid crystal composition of the present invention may contain a monofunctional polymerizable liquid crystal compound having one polymerizable functional group in the molecule. In the case where the polymerizable liquid crystal composition of the present invention contains, as an indispensable component, the above-mentioned polymerizable liquid crystal compound having 2 or more polymerizable functional groups in the molecule, the monofunctional-polymerizable liquid crystal compound having one polymerizable functional group in the molecule can be contained therein as an optional component. Specifically, examples of the monofunctional polymerizable liquid crystal compound except the compounds represented by the general formula (II-1) include compounds represented by the following general formula (II-2).
[Chem. 42]

P²²-(Sp²²-X²²)_{q6}-MG²²-R²¹ (II-2)

In the formula, P²² represents a polymerizable functional group, Sp²² represents an alkylene group having 1 to 18 carbon atoms, or a single bond, provided that in the alkylene group, one -CH₂- or two or more (-CH₂-) 's not adjacent to each other may be each independently substituted with -O-, -COO-, -OCO-or -OCO-O-, and one or more hydrogen atoms that the alkylene group has may be substituted with a halogen atom (fluorine atom, chlorine atom, bromine atom, iodine atom) or a group CN. X²² represents -0-, -S-, -OCH₂-, -CH₂O-, -CO-, -COO-, -OCO-, -CO-S-, -S-CO-, -O-CO-O-, -CO-NH-, -NH-CO-, -SCH₂-, -CH₂S-, -CF₂O-, -OCF₂-, -CF₂S-, -SCF₂-, -CH=CH-COO-, -CH=CH-OCO-, -COO-CH=CH-, -OCO-CH=CH-, -COO-CH₂CH₂-, -OCO-CH₂CH₂-, -CH₂CH₂-COO-, -CH₂CH₂-OCO-, -COO-CH₂-, -OCO-CH₂-, -CH₂-COO-, -CH₂-OCO-, -CH=CH-, -N=N-, -CH=N-N=CH-, -CF=CF-, -C≡C- or a single bond, provided that P²²-Sp²² and Sp²²-X²² do not contain a direct bond that bonds hetero atoms . q6 represents 0 or 1. MG²² represents a mesogen group. R²¹ represents a hydrogen atom, a halogen atom (fluorine atom, chlorine atom, bromine atom, iodine atom), a cyano group, a linear or branched alkyl group having 1 to 12 carbon atoms, or a linear or branched alkenyl group having 1 to 12 carbon atoms, provided that in the alkyl group and the alkenyl group, one -CH₂- or two or more (-CH₂-) 's not adjacent to each other may be each independently substituted with -O-, -S-, -CO-, -COO-, -OCO-, -CO-S-, -S-CO-, -O-CO-O-, -CO-NH-, -NH-CO-, -NH-, -N(CH₃)-, -CH=CH-COO-, -CH=CH-OCO-, -COO-CH=CH-, -OCO-CH=CH-, -CH=CH-, -CF=CF- or -C≡C-, one or more hydrogen atoms that the alkyl group and the alkenyl group have may be each independently substituted with a halogen atom (fluorine atom, chlorine atom, bromine atom, iodine atom) or a cyano group, and in the case where a plurality of these atoms are substituted, the substituents may be the same or different. However, the polymerizable liquid crystal compound represented by the general formula (II-2) does not include the polymerizable liquid crystal compound represented by the general formula (II-1).

Here, P²² is preferably a substituent selected from polymerizable groups represented by the following formulae (P-2-1) to (P-2-20).

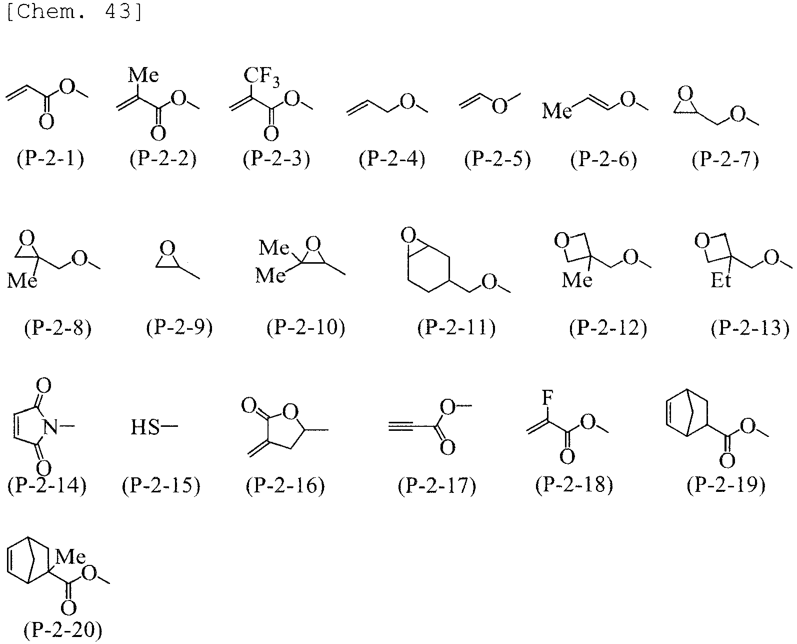

Among these polymerizable functional groups, the formulae (P-2-1), (P-2-2), (P-2-7), (P-2-12) and (P-2-13) are preferred from the viewpoint of enhancing polymerization performance, and the formulae (P-2-1) and (P-2-2) are more preferred.

Sp²² is preferably an alkylene group having 1 to 15 carbon atoms, provided that in the alkylene group, one -CH₂- or two or more (-CH₂-)'s not adjacent to each other may be each independently substituted with -O-, -COO-, -OCO- or -OCO-O-, and one or more hydrogen atoms that the alkylene group has may be substituted with a halogen atom (fluorine atom, chlorine atom, bromine atom, iodine atom) or a group CN. Sp²² is more preferably an alkylene group having 1 to 12 carbon atoms, and in the alkylene group, one -CH₂- or two or more (-CH₂-) 's not adjacent to each other may be each independently substituted with -O-, -COO-, -OCO- or -OCO-O-.

X²² is preferably -O-, -OCH₂-, -CH₂O-, -CO-, -COO-, -OCO-, -O-CO-O-, -CO-NH-, -NH-CO-, -CF₂O-, -OCF₂-, -CH=CH-COO-, -CH=CH-OCO-, -COO-CH=CH-, -OCO-CH=CH-, -COO-CH₂CH₂-, -OCO-CH₂CH₂-, -CH₂CH₂-COO-, -CH₂CH₂-OCO-, -COO-CH₂-, -OCO-CH₂-, -CH₂-COO-, -CH₂-OCO-, -CH=CH-, -N=N-, -CH=N-N=CH-, -CF=CF-, -C≡C- or a single bond, and X²² is more preferably -O-, -OCH₂-, -CH₂O-, -CO-, -COO-, -OCO-, -O-CO-O-, -CF₂O-, -OCF₂-, -CH=CH-COO-, -CH=CH-OCO-, -COO-CH=CH-, -OCO-CH=CH-, -COO-CH₂CH₂-, -OCO-CH₂CH₂-, -CH₂CH₂-COO-, -CH₂CH₂-OCO-, -COO-CH₂-, -OCO-CH₂-, -CH₂-COO-, -CH₂-OCO-, -CH=CH-, -CF=CF-, -C≡C- or a single bond.
MG²² is a mesogen group, and is represented by the following general formula (II-2-b).
[Chem. 44]

**-(A1-Z1)ᵣ₁-A2-Z2-A3-** **(II-2-b)**

(In the formula, A1 and A2 each independently represent a 1,4-phenylene group, a 1,4-cyclohexylene group, a 1,4-cyclohexenyl group, a tetrahydropyran-2,5-diyl group, a 1,3-dioxane-2,5-diyl group, a tetrahydrothiopyran-2,5-diyl group, a 1,4-bicyclo(2,2,2)octylene group, a decahydronaphthalane-2,6-diyl group, a pyridine-2,5-diyl group, a pyrimidine-2,5-diyl group, a pyrazine-2,5-diyl group, a thiophene-2,5-diyl group, a 1,2,3,4-tetrahydronaphthalene-2,6-diyl group, a 2,6-naphthylene group, a phenanthrene-2,7-diyl group, a 9,10-dihydrophenanthrene-2,7-diyl group, a 1,2,3,4,4a,9,10a-octahydrophenanthrene-2,7-diyl group, a 1,4-naphthylene group, a benzo[1,2-b:4,5-b']dithiophene-2,6-diyl group, a benzo[1,2-b:4,5-b']diselenophene-2,6-diyl group, a [1]benzothieno[3,2-b]thiophene-2,7-diyl group, a [1]benzoselenopheno[3,2-b]selenophene-2,7-diyl group, or a fluorene-2,7-diyl group, which may have one or more substituents of F, Cl, CF₃, OCF₃, CN, an alkyl group having 1 to 8 carbon atoms, an alkoxy group having 1 to 8 carbon atoms, an alkanoyl group having 1 to 8 carbon atoms, an alkanoyloxy group having 1 to 8 carbon atoms, an alkoxycarbonyl group having 1 to 8 carbon atoms, an alkenyl group having 2 to 8 carbon atoms, an alkenyloxy group having 2 to 8 carbon atoms, an alkenoyl group having 2 to 8 carbon atoms, and/or an alkenoyloxy group having 2 to 8 carbon atoms. Preferably, A1 and A2 each are independently a 1,4-phenylene group, a 1,4-cyclohexylene group or a 2,6-naphthylene group optionally having the above-mentioned substituent.
A3 represents a 1,4-phenylene group, a 1,4-cyclohexylene group, a 1,4-cyclohexenyl group, a tetrahydropyran-2,5-diyl group, a 1,3-dioxane-2,5-diyl group, a tetrahydrothiopyran-2,5-diyl group, a 1,4-bicyclo(2,2,2)octylene group, a decahydronaphthalane-2,6-diyl group, a pyridine-2,5-diyl group, a pyrimidine-2,5-diyl group, a pyrazine-2,5-diyl group, a thiophene-2,5-diyl group, a 1,2,3,4-tetrahydronaphthalene-2,6-diyl group, a 2,6-naphthylene group, a phenanthrene-2,7-diyl group, a 9,10-dihydrophenanthrene-2,7-diyl group, a 1,2,3,4,4a,9,10a-octahydrophenanthrene-2,7-diyl group, a 1,4-naphthylene group, a benzo[1,2-b:4,5-b']dithiophene-2,6-diyl group, a benzo[1,2-b:4,5-b']diselenophene-2,6-diyl group, a [1]benzothieno[3,2-b]thiophene-2,7-diyl group, a [1]benzoselenopheno[3,2-b]selenophene-2,7-diyl group, or a fluorene-2, 7-diyl group. One of the A3 rings bonds to Z2 (or A2 when Z2 is a single bond), while the other bonds to R²¹. In A3, the hydrogen atoms bonding to the carbon atom not adjacent to the carbon atom bonding to R²¹ may be substituted with one or more substituents of F, Cl, CF₃, OCF₃, CN, an alkyl group having 1 to 8 carbon atoms, an alkoxy group having 1 to 8 carbon atoms, an alkanoyl group having 1 to 8 carbon atoms, an alkanoyloxy group having 1 to 8 carbon atoms, an alkoxycarbonyl group having 1 to 8 carbon atoms, an alkenyl group having 2 to 8 carbon atoms, an alkenyloxy group having 2 to 8 carbon atoms, an alkenoyl group having 2 to 8 carbon atoms, and/or an alkenoyloxy group having 2 to 8 carbon atoms, but the hydrogen atoms bonding to the carbon atom adjacent to the carbon atom to which R²¹ bonds are unsubstituted (for example, in the case where A3 is a 1,4-phenylene group, it may have a substituent at the site of the following L⁰, but does not have a substituent at the site of the following Lⁿ).

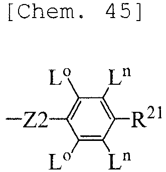

Z1 and Z2 each independently represent -COO-, -OCO-, -CH₂CH₂-, -OCH₂-, -CH₂O-, -CH=CH-, -C≡C-, -CH=CHCOO-, -OCOCH=CH-, -CH₂CH₂COO-, -CH₂CH₂OCO-, -COOCH₂CH₂-, -OCOCH₂CH₂-, -C=N-, -N=C-, -CONH-, -NHCO-, -C(CF₃)₂-, an alkyl group having 2 to 10 carbon atoms and optionally having a halogen atom (fluorine atom, chlorine atom, bromine atom, iodine atom), or a single bond. Preferably, Z1 and Z2 are each independently -COO-, -OCO-, -CH₂CH₂-, -OCH₂-, -CH₂O-, -CH=CH-, -C≡C-, -CH=CHCOO-, -OCOCH=CH-, -CH₂CH₂COO-, -CH₂CH₂OCO-, -COOCH₂CH₂-, -OCOCH₂CH₂- or a single bond. r1 represents 0, 1, 2 or 3, and plural A1's, if any, may be the same or different and plural Z1's, if any, may be the same or different.)

More preferably, R²¹ is a hydrogen atom, a halogen atom (fluorine atom, chlorine atom, bromine atom, iodine atom), a cyano group, a linear or branched alkyl group having 1 to 8 carbon atoms, or a linear or branched alkenyl group having 1 to 8 carbon atoms, and in the alkyl group and the alkenyl group, one -CH₂- or two or more (-CH₂-) 's not adjacent to each other may be each independently substituted with -O-, -CO-, -COO-, -OCO-, -O-CO-O-, -CH=CH-COO-, -CH=CH-OCO-, -COO-CH=CH-, -OCO-CH=CH-, -CH=CH-, or -C≡C-, and one or more hydrogen atoms that the alkyl group and the alkenyl group have may be independently substituted with a halogen atom (fluorine atom, chlorine atom, bromine atom, iodine atom) or a cyano group. When the group is substituted with plural substituents, the substituents may be the same or different.

Examples of the general formula (II-2) include compounds represented by the following general formulae (II-2-1) to (II-2-4), but are not limited thereto.
[Chem. 46]

P²²-(Sp²²-X²²)_{q1}-A2-Z2-A3-R²¹ (II-2-1)

P²²-(Sp²²-X²²)_{q1}-A11-Z11-A2-Z2-A3-R²¹ (II-2-2)

P²²-(Sp²²-X²²)_{q1}-A11-Z11-A12-Z12-A2-Z2-A3-R²¹ (II-2-3)

P²²-(SP²²-X²²)_{q1}-A11-Z11-A12-Z12-A13-Z13-A2-Z2-A3-R²¹ (II-2-4)

In the formulae, P²², Sp²², X²², q1, and R²¹ each have the same definitions as those in the general formula (II-2), A11, A12, A13, A2 and A3 each have the same definitions as A1 to A3 in the general formula (II-2-b), and they may be the same or different, Z11, Z12, Z13 and Z2 each have the same definitions as Z1 to Z3 in the general formula (II-2-b), and they may be the same or different.

Examples of the compounds represented by the general formulae (II-2-1) to (II-2-4) include compounds represented by the following formulae (II-2-1-1) to (II-2-1-26), but are not limited thereto.

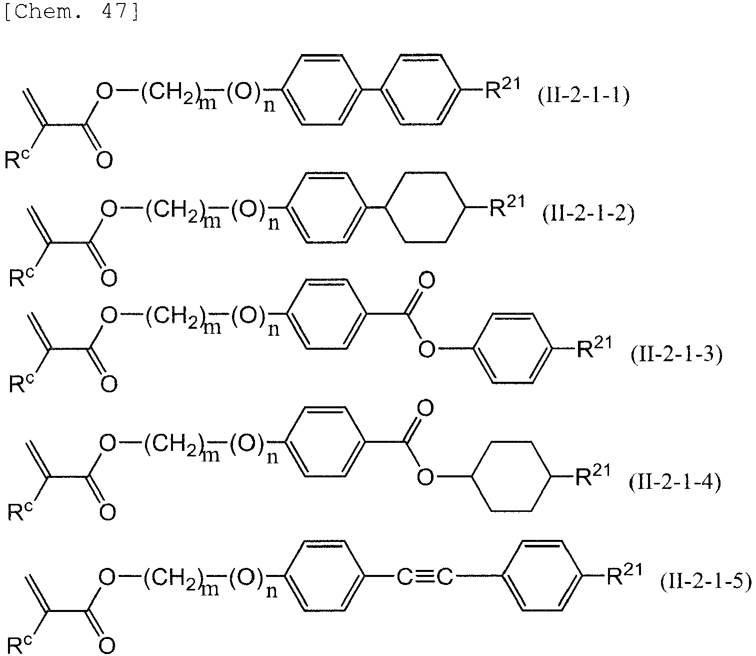

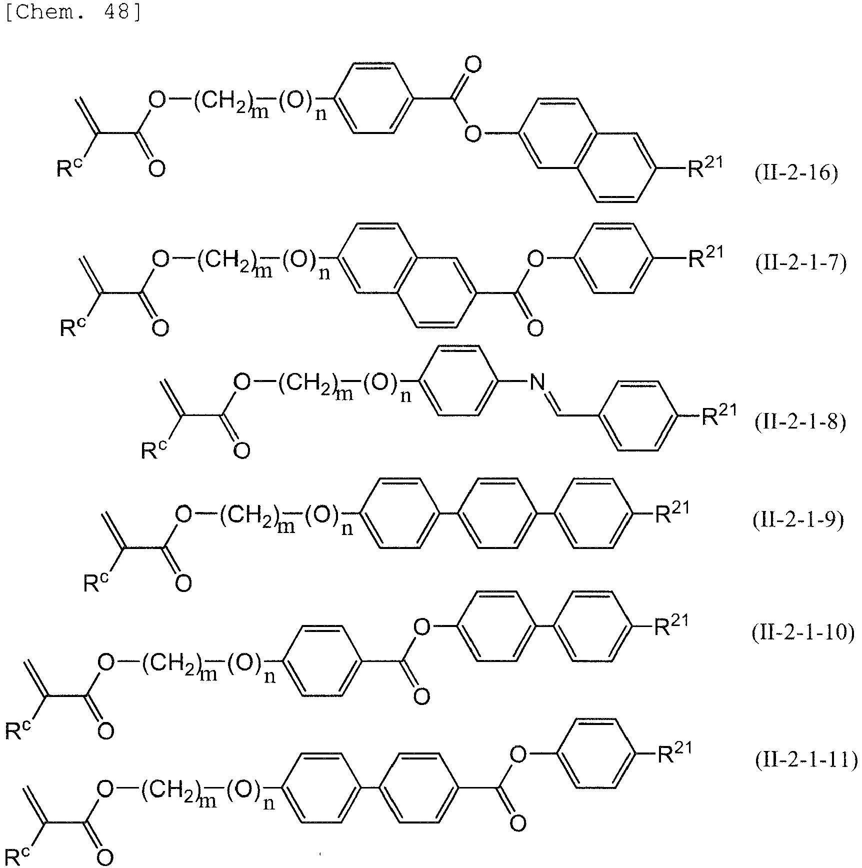

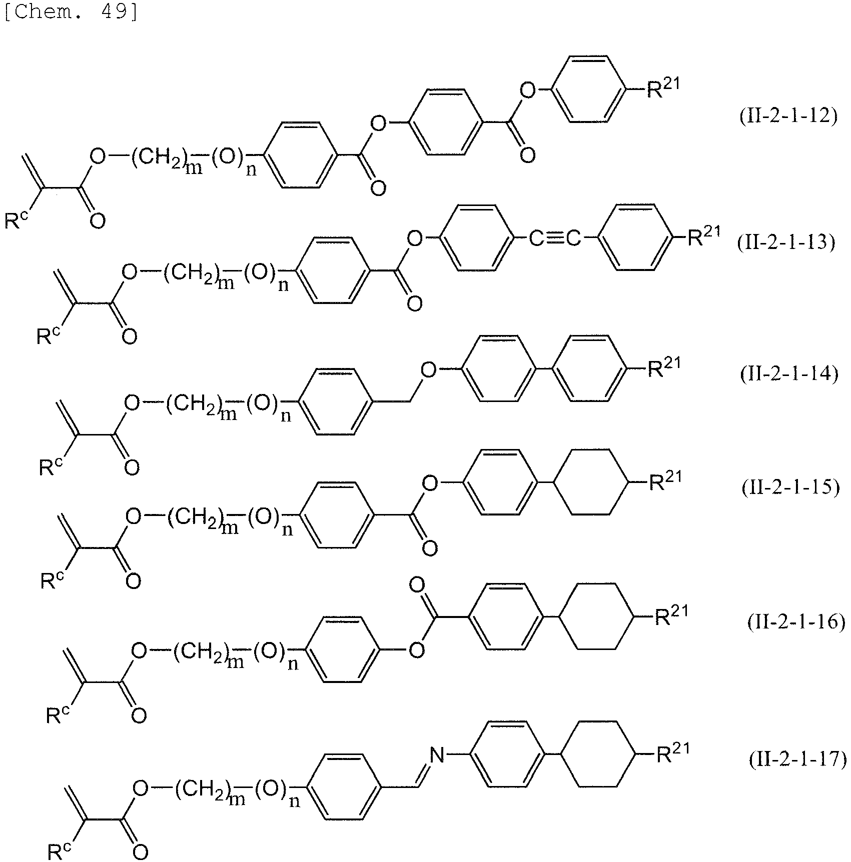

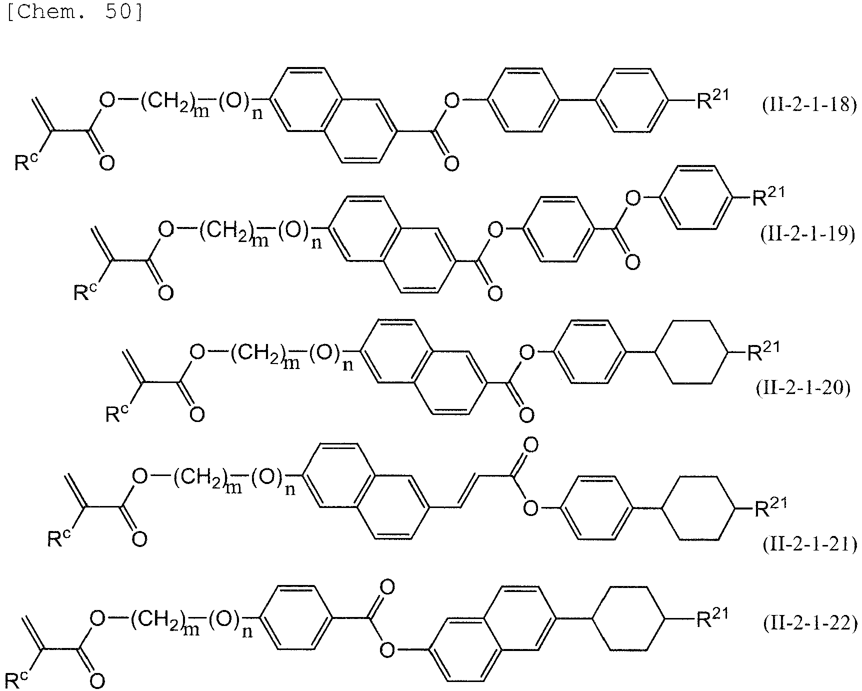

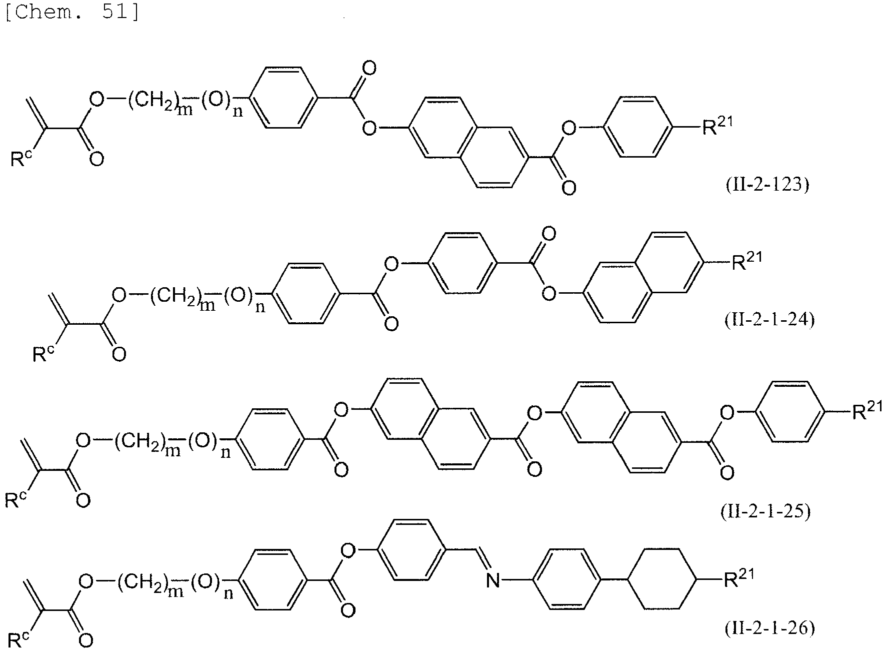

In the formulae, R^{c} represents a hydrogen atom or a methyl group, m represents an integer of 0 to 18, n represents 0 or 1, R²¹ has the same definitions as in the above-mentioned general formulae (II-2-1) to (II-2-4), but preferably R²¹ is a hydrogen atom, a halogen atom (fluorine atom, chlorine atom, bromine atom, iodine atom), a cyano group, or a linear alkyl group having 1 to 6 carbon atoms or a linear alkenyl group having 1 to 6 carbon atoms, in which one -CH₂- may be substituted with -O-, -CO-, -COO- or -OCO-.

The above cyclic group may have one or more substituents of F, Cl, CF₃, OCF₃, a group CN, an alkyl group having 1 to 8 carbon atoms, an alkoxy group having 1 to 8 carbon atoms, an alkanoyl group having 1 to 8 carbon atoms, an alkanoyloxy group having 1 to 8 carbon atoms, an alkoxycarbonyl group having 1 to 8 carbon atoms, an alkenyl group having 2 to 8 carbon atoms, an alkenyloxy group having 2 to 8 carbon atoms, an alkenoyl group having 2 to 8 carbon atoms, and an alkenoyloxy group having 2 to 8 carbon atoms, but in the cyclic structure to which R²¹ bonds, the hydrogen atoms bonding to the carbon atom adjacent to the carbon atom of the cyclic structure to which R²¹ bonds are unsubstituted.

The total content of the monofunctional polymerizable liquid crystal compounds having one polymerizable functional group in the molecule and represented by the general formula (II-2) is preferably 0 to 60% by mass of the total amount of the polymerizable liquid crystal compounds in the polymerizable liquid crystal composition including the polymerizable liquid crystal compound represented by the general formula (II-1), more preferably 0 to 55% by mass, even more preferably 0 to 50% by mass. In the case where the adhesiveness to substrate of the coating film to be formed is considered to be important, the lower limit of the content is preferably 5% by mass or more, more preferably 10% by mass or more; but in the case where the curability of the coating film to be formed is considered to be important, the upper limit of the content is preferably 50% by mass or less, more preferably 40% by mass or less.

### (Other liquid crystal compounds)

In addition, a compound containing a mesogen group not having a polymerizable group may be added to the polymerizable liquid crystal composition of the present invention, and the compound includes those for use in ordinary liquid crystal devices, for example, for STN (super twisted nematic) liquid crystals, TN (twisted nematic) liquid crystals, TFT (thin film transistor) liquid crystals, etc.

Specifically, the compound containing a mesogen group not having a polymerizable group is preferably compounds represented by the following general formula (5).
[Chem. 52]

**R⁵¹⁻MG3-R⁵²** **(5)**

The mesogen group or the mesogen supporting group represented by MG3 includes compounds represented by the following general formula (5-b).
[Chem. 53]

**-Z0^{d}-(A1^{d}-Z1^{d})ₙₑ-A2^{d}-Z2^{d}-A3^{d}-Z3^{d}-** **(5-b)**

(In the formula, A1^{d}, A2^{d} and A3^{d} each independently represent a 1,4-phenylene group, a 1,4-cyclohexylene group, a 1,4-cyclohexenyl group, a tetrahydropyran-2,5-diyl group, a 1,3-dioxane-2,5-diyl group, a tetrahydrothiopyran-2,5-diyl group, a 1,4-bicyclo(2,2,2)octylene group, a decahydronaphthalane-2,6-diyl group, a pyridine-2,5-diyl group, a pyrimidine-2, 5-diyl group, a pyrazine-2, 5-diyl group, a thiophene-2,5-diyl group, a 1,2,3,4-tetrahydronaphthalene-2,6-diyl group, a 2,6-naphthylene group, a phenanthrene-2,7-diyl group, a 9,10-dihydrophenanthrene-2,7-diyl group, a 1,2,3,4,4a,9,10a-octahydrophenanthrene-2,7-diyl group, a 1,4-naphthylene group, a benzo[1,2-b:4,5-b']dithiophene-2,6-diyl group, a benzo[1,2-b:4,5-b']diselenophene-2,6-diyl group, a [1]benzothieno[3,2-b]thiophene-2,7-diyl group, a [1]benzoselenopheno[3,2-b]selenophene-2,7-diyl group, or a fluorene-2,7-diyl group, which may have one or more substituents of F, Cl, CF₃, OCF₃, CN, an alkyl group, an alkoxy group, an alkanoyl group or an alkanoyloxy group having 1 to 8 carbon atoms, an alkenyl group, an alkenyloxy group, an alkenoyl group or an alkenoyloxy group having 2 to 8 carbon atoms.

Z0^{d}, Z1^{d}, Z2^{d} and Z3^{d} each independently represent -COO-, -OCO-, -CH₂ CH₂-, -OCH₂-, -CH₂O-, -CH=CH-, -C=C-, -CH=CHCOO-, -OCOCH=CH-, -CH₂CH₂COO-, -CH₂CH₂OCO-, -COOCH₂CH₂-, -OCOCH₂CH₂-, -CONH-, -NHCO-, an alkylene group having 2 to 10 carbon atoms and optionally having a halogen atom (fluorine atom, chlorine atom, bromine atom, iodine atom), or a single bond.

n^{e} represents 0, 1 or 2.

R⁵¹ and R⁵² each independently represent a hydrogen atom, a halogen atom (fluorine atom, chlorine atom, bromine atom, iodine atom), a cyano group or an alkyl group having 1 to 18 carbon atoms, and in the alkyl group, one -CH₂- or two or more (-CH₂-) 's not adjacent to each other may be each independently substituted with -O-, -S-, -NH-, -N(CH₃)-, -CO-, -COO-, -OCO-, -OCOO-, -SCO-, -COS- or -C≡C- as long as the oxygen atoms do not directly bond to each other.)

Specifically, the compounds include the following, but are not limited thereto.

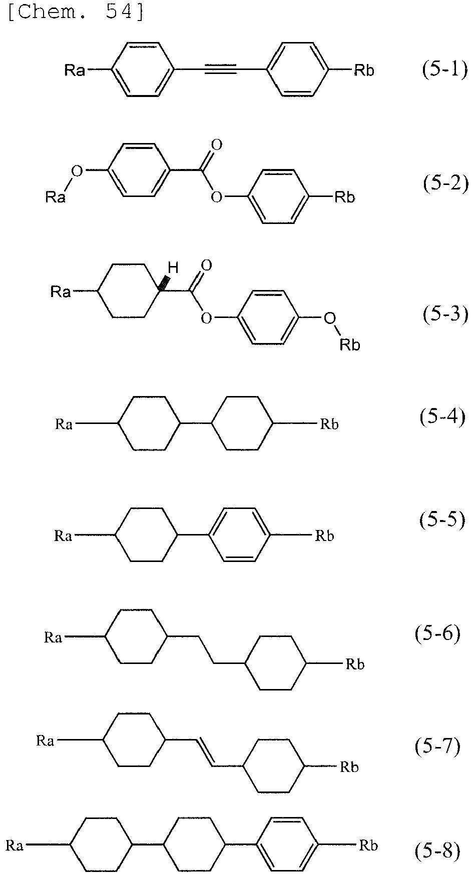

Ra and Rb each independently represent a hydrogen atom, an alkyl group having 1 to 6 carbon atoms, an alkoxy group having 1 to 6 carbon atoms, an alkenyl group having 1 to 6 carbon atoms, or a cyano group, and when these groups are an alkyl group having 1 to 6 carbon atoms or an alkoxy group having 1 to 6 carbon atoms, all of them may be unsubstituted or may be substituted with one or more halogen atoms.

The total content of the compounds having a mesogen group is preferably 0% by mass or more and 20% by mass or less relative to the total amount of the polymerizable liquid crystal composition, and when the compounds are used, the amount thereof is preferably 1% by mass or more, more preferably 2% by mass or more, even more preferably 5% by mass or more, and is preferably 15% by mass or less, more preferably 10% by mass or less.

### (Organic solvent)

An organic solvent may be added to the polymerizable liquid crystal composition of the present invention. The solvent to be used is not specifically limited, but is preferably an organic solvent having good solubility for polymerizable liquid crystal compounds. An organic solvent capable of being removed by drying at a temperature of 100°C or lower is preferred. Examples of such a solvent include aromatic hydrocarbons such as toluene, xylene, cumene, mesitylene, etc.; ester solvents such as methyl acetate, ethyl acetate, propyl acetate, butyl acetate, etc.; ketone solvents such as methyl ethyl ketone, methyl isobutyl ketone, cyclohexanone, cyclopentanone, etc.; ether solvents such as tetrahydrofuran, 1,2-dimethoxyethane, anisole, etc.; amide solvents such as N,N-dimethylformamide, N-methyl-2-pyrrolidone, etc.; propylene glycol monomethyl ether acetate, diethylene glycol monomethyl ether acetate, γ-butyrolactone, chlorobenzene, etc. One alone or two or more of these may be used either singly or as combined. From the viewpoint of solution stability, use of one or more of ketone solvents, ether solvents, ester solvents and aromatic hydrocarbon solvents is preferred.

The composition for use in the present invention may be applied to a substrate in the form of a solution thereof in an organic solvent, and the ratio of the organic solvent for use in the polymerizable liquid crystal composition is not specifically limited so far as it does not significantly detract from the coating condition, but preferably, the total amount of the organic solvent in the polymerizable liquid crystal composition is 10 to 95% by mass, more preferably 12 to 90% by mass, even more preferably 15 to 80% by mass.

In dissolving the polymerizable liquid crystal composition in an organic solvent, preferably, the composition is heated and stirred for uniformly dissolving it. The heating temperature in heating and stirring may be adequately controlled in consideration of the solubility of the composition in the organic solvent to be used, but from the viewpoint of productivity, the temperature is preferably 15°C to 110°C, more preferably 15°C to 105°C, even more preferably 15°C to 100°C, especially preferably 20°C to 90°C.

In adding a solvent, preferably, the system is stirred and mixed with a dispersive stirrer. Specifically, the dispersive stirrer includes a disperser having a stirring blade such as a Disper, a propeller, a turbine blade, etc.; as well as a paint shaker, a planetary stirring device, a shaking device, a shaker, a rotary evaporator, etc. In addition, an ultrasonic irradiation device is also usable.

The stirring rotation number in solvent addition may be adequately controlled depending on the stirring device to be sued, but for the purpose of preparing a uniform polymerizable liquid crystal composition solution, the stirring rotation number is preferably 10 rpm to 1,000 rpm, more preferably 50 rpm to 800 rpm, even more preferably 150 rpm to 600 rpm.

### (Polymerization inhibitor)

Preferably, a polymerization inhibitor is added to the polymerizable liquid crystal composition of the present invention. The polymerization inhibitor includes phenolic compounds, quinone compounds, amine compounds, thioether compounds, nitroso compounds, etc.

The phenolic compounds include p-methoxyphenol, cresol, t-butylcatechol, 3,5-di-t-butyl-4-hydroxytoluene, 2,2'-methylenebis(4-methyl-6-t-butylphenol), 2,2'-methylenebis(4-ethyl-6-t-butylphenol), 4,4'-thiobis(3-methyl-6-t-butylphenol), 4-methoxy-1-naphthol, 4,4'-dialkoxy-2,2'-bi-1-naphthol, etc.

The quinone compounds include hydroquinone, methylhydroquinone, tert-butylhydroquinone, p-benzoquinone, methyl-p-benzoquinone, tert-butyl-p-benzoquinone, 2,5-diphenylbenzoquinone, 2-hydroxy-1,4-naphthoquinone, 1,4-naphthoquinone, 2,3-dichloro-1,4-naphthoquinone, anthraquinone, diphenoquinone, etc.

The amine compounds include p-phenylenediamine, 4-aminodiphenylamine, N,N'-diphenyl-p-phenylenediamine, N-i-propyl-N'-phenyl-p-phenylenediamine, N-(1,3-dimethylbutyl)-N'-phenyl-p-phenylenediamine, N,N'-di-2-naphthyl-p-phenylenediamine, diphenylamine, N-phenyl-β-naphthylamine, 4,4'-dicumyl-diphenylamine, 4,4'-dioctyl-diphenylamine, etc.

The thioether compounds include phenothiazine, distearyl thiodipropionate, etc.

The nitroso compounds include N-nitrosodiphenylamine, N-nitrosophenylnaphthylamine, N-nitrosodinaphthylamine, p-nitrosophenol, nitrosobenzene, p-nitrosodiphenylamine, α-nitroso-β-naphthol, etc., N,N-dimethyl-p-nitrosoaniline, p-nitrosodiphenylamine, p-nitrosodimethylamine, p-nitroso-N,N-diethylamine, N-nitrosoethanolamine, N-nitroso-di-n-butylamine, N-nitroso-N-n-butyl-4-butanolamine, N-nitroso-diisopropanolamine, N-nitroso-N-ethyl-4-butanolamine, 5-nitroso-8-hydroxyquinoline, N-nitrosomorpholine, N-nitroso-N-phenylhydroxylamine ammonium salt, nitrosobenzene, 2,4,6-tri-tert-butylnitrosobenzene, N-nitroso-N-methyl-p-toluenesulfonamide, N-nitroso-N-ethylurethane, N-nitroso-N-n-propylurethane, 1-nitroso-2-naphthol, 2-nitroso-1-naphthol, 1-nitroso-2-naphthyl-3,6-sodium sulfonate, 2-nitroso-1-naphthol-4-sodium sulfonate, 2-nitroso-5-methylaminophenol hydrochloride, 2-nitroso-5-methylaminophenol hydrochloride, etc.

The amount of the polymerization inhibitor to be added is preferably 0.01 to 1.0% by mass relative to the polymerizable liquid crystal composition, more preferably 0.05 to 0.5% by mass.

### (Photopolymerization initiator)

Preferably, the polymerizable liquid crystal composition of the present invention contains a photopolymerization initiator. Preferably, the composition contains at least one kind or more of photopolymerization initiators. Specifically, the initiator includes BASF Japan's "Irgacure 651", "Irgacure 184", "Irgacure 907", "Irgacure 127", "Irgacure 369", "Irgacure 2959", "Irgacure 1800", "Irgacure 250", "Irgacure 754", "Darocure MBF", "Darocure 1173"; LAMBSON's "Esacure 1001M", "Esacure IP150", "Speedcure BEM", "Speedcure BMS", "Speedcure MBP", "Speedcure PBZ", "Speedcure ITX", "Speedcure DETX", "Speedcure EBD", "Speedcure MBB", "Speedcure BP"; Nippon Kayaku's "Kayacure DMBI", etc.

The amount of the photopolymerization initiator to be used is preferably 0.1 to 10% by mass relative to the polymerizable liquid crystal composition, more preferably 0.5 to 7% by mass. One alone or two or more kinds of these may be used either singly or as combined. In addition, a sensitizer or the like may be added to the composition.

### (Thermal polymerization initiator)

The polymerizable liquid crystal composition of the present invention may contain a thermal polymerization initiator along with the photopolymerization initiator. Specifically, the thermal polymerization initiator includes Wako Pure Chemical Industries' "V-40", VF-096"; NOF's "Perhexyl D", "Perhexyl I", etc.

The amount of the thermal polymerization initiator to be sued is preferably 0.1 to 10% by mass relative to the polymerizable liquid crystal composition, more preferably 0.5 to 5% by mass. One alone or two or more kinds of these may be used either singly or as combined.

### (Surfactant)

The polymerizable liquid crystal composition of the present invention ma contain at least one or more kinds of surfactants for reducing the thickness unevenness of the optically anisotropic body formed of the composition. The surfactants that may be added to the composition include alkylcarboxylates, alkylphosphates, alkylsulfonates, fluoroalkylcarboxylates, fluoroalkylphosphates, fluoroalkylsulfonates, polyoxyethylene derivatives, fluoroalkylethylene oxide derivatives, polyethylene glycol derivatives, alkylammonium salts, fluoroalkylammonium salts, etc. Fluorine-containing surfactants are especially preferred.

Specifically, examples of the surfactants include "Megaface F251", "Megaface F-444", "Megaface F-477#, "Megaface F-510", "Megaface F-552", "Megaface F-553", "Megaface F-554", "Megaface F-555", "Megaface F-556", "Megaface F-557", "Megaface F-558", "Megaface F-559", "Megaface F-560", "Megaface F-561", "Megaface F-562", "Megaface F-563", "Megaface F-565", "Megaface F-567", "Megaface F-568", "Megaface F-569", "Megaface F-570", "Megaface F-571", "Megaface R-40", "Megaface R-41", "Megaface R-43", "Megaface R-94", "Megaface FS-72-K", "Megaface RS-75", "Megaface RS-76-E", "Megaface RS-90" (all by DIC), "Ftergent 100", "Ftergent 100C", "Ftergent 110", "Ftergent 150", "Ftergent 150CH", "Ftergent A", "Ftergent 100A-K", "Ftergent 501", "Ftergent 300", "Ftergent 310", "Ftergent 320", "Ftergent 400SW", "FTX-400P", "Ftergent 251", "Ftergent 215M", "Ftergent 212MH", "Ftergent 250", "Ftergent 222F", "Ftergent 212D", "FTX-218", "FTX-209F", "FTX-213F", "FTX-233F", "Ftergent 245F", "FTX-208G", "FTX-240G", "FTX-206D", "FTX-220D", "FTX-230D", "FTX-240D", "FTX-207S", "FTX-211S", "FTX-220S", "FTX-230S", "FTX-750FM", "FTX-730FM", "FTX-730FL", "FTX-710FS", "FTX-710FM", "FTX-710FL", "FTX-750LL", "FTX-730LS", "FTX-730LM", "FTX-730LL", "FTX-710LL" (all by Neos),
"BYK-300", "BYK-302", "BYK-306", "BYK-307", "BYK-310", "BYK-315", "BYK-320", "BYK-322", "BYK-323", "BYK-325", "BYK-330", "BYK-331", "BYK-333", "BYK-337", "BYK-340", "BYK-344", "BYK-370", "BYK-375", "BYK-377", "BYK-350", "BYK-352", "BYK-354", "BYK-355", "BYK-356", "BYK-358N", "BYK-361N", "BYK-357", "BYK-390", "BYK-392", "BYK-UV3500", "BYK-UV3510", "BYK-UV3570", "BYK-Silclean 3700" (all by BYK Japan),
"TEGO Rad2100", "TEGO Rad2200N", "TEGO Rad2250", "TEGO Rad2300", "TEGO Rad2500", "TEGO Rad2600", "TEGO Rad2700" (all by Tego),
"N215", "N535", "N605K", "N935" (all by Solvay Solexis), etc.

The amount of the surfactant to be added is preferably 0.01 to 2% by mass relative to the polymerizable composition, more preferably 0.05 to 0.5% by mass.

When the polymerizable liquid crystal composition using the surfactant is formed into an optically anisotropic body, the tilt angle thereof to the air interface can be effectively reduced.

The polymerizable liquid crystal composition of the present invention may contain, except the above-mentioned surfactant, a compound having a repeating unit represented by the following general formula (7) and having a weight-average molecular weight of 100 or more, which can effectively reduce the tilt angle to the air interface of the optically anisotropic body formed of the composition.
[Chem. 55]

(̵CR¹¹R¹²-CR¹³R¹⁴)̵ (7)

In the formula, R¹¹, R¹², R¹³ and R¹⁴ each independently represent a hydrogen atom, a halogen atom, or a hydrocarbon group having 1 to 20 carbon atoms, and the hydrogen atoms in the hydrocarbon group may be substituted with one or more halogen atoms.

Preferred compounds represented by the general formula (7) include, for example, polyethylene, polypropylene, polyisobutylene, paraffin, liquid paraffin, polypropylene chloride, paraffin chloride, chlorinated liquid paraffin, etc.

The amount to be added of the compound represented by the general formula (7) is preferably 0.01 to 1% by mass relative to the polymerizable liquid crystal composition, more preferably 0.05 to 0.5% by mass.

### (Chain transfer agent)

Preferably, a chain transfer agent is added to the polymerizable liquid crystal composition of the present invention for more improving the adhesiveness to substrate of the optically anisotropic body formed of the composition. The chain transfer agent is preferably a thiol compound, and monothiol, dithiol, trithiol and tetrathiol compounds are more preferred, and trithiol compounds are even more preferred. Specifically, compounds represented by the following general formula (8-1) to (8-12) are preferred.

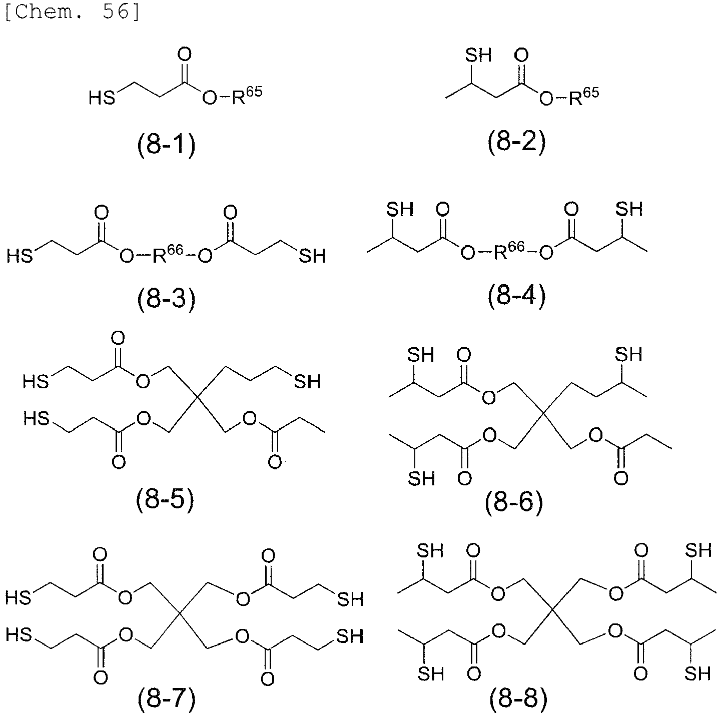

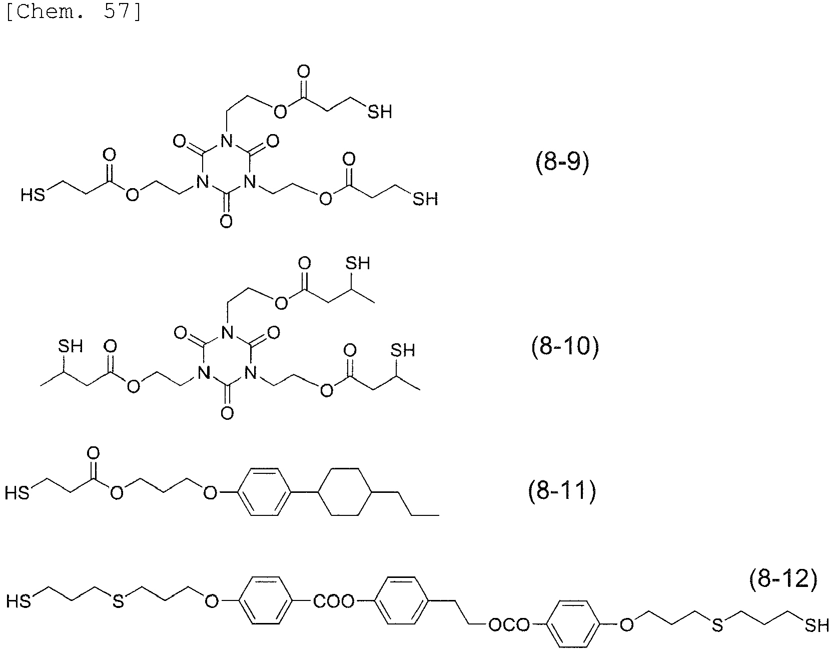

In the formulae, R⁶⁵ represents an alkyl group having 2 to 18 carbon atoms, and the alkyl group may be linear or branched, and in the alkyl group, one or more methylene groups may be substituted with an oxygen atom, a sulfur atom, -CO-, -OCO-, -COO-, or -CH=CH- in which the oxygen atom and the sulfur atom do not directly bond to each other, R⁶⁶ represents an alkylene group having 2 to 18 carbon atoms, and in the alkylene group, one or more methylene groups may be substituted with an oxygen atom, a sulfur atom, -CO-, -OCO-, -COO-, or -CH=CH- in which the oxygen atom and the sulfur atom do not directly bond to each other.

Preferably, the amount of the chain transfer agent to be added is 0.5 to 10% by mass relative to the polymerizable liquid crystal composition, more preferably 1.0 to 5.0% by mass.

### (Other additives)

For further control of physical properties and depending on the intended object, additives such as a non-liquid crystalline polymerizable compound, a thixotropic agent, a UV absorbent, an IR absorbent, an antioxidant, a surface treating agent or the like may be added to the composition in such a degree that the additive would not remarkably detract from the alignment performance of liquid crystals.

### (Production method for optically anisotropic body)

### (Optically anisotropic body)

The optically anisotropic body formed using the polymerizable liquid crystal composition of the present invention is one formed by sequentially layering a substrate, optionally an alignment film, and a polymer of the polymerizable liquid crystal composition.

### (Substrate)

The substrate for use in the optically anisotropic body of the present invention is a substrate generally used in liquid crystal devices, displays, optical members and optical films, and may be, with no specific limitation, any heat-resistant material resistant to heating in drying after coating with the polymerizable liquid crystal composition of the present invention. Examples of such a substrate include glass substrates, metal substrates, ceramic substrates, plastic substrates and other organic materials. In particular, examples of substrates of organic materials include cellulose derivatives, polyolefins, polyesters, polycarbonates, polyacrylates (acrylic resins), polyarylates, polyether sulfones, polyimides, polyphenylene sulfides, polyphenylene ethers, nylons, polystyrenes, etc. Above all, plastic substrates of polyesters, polystyrenes, polyacrylates, polyolefins, cellulose derivatives, polyarylates, polycarbonates and others are preferred, and substrates of polyacrylates, polyolefins, cellulose derivatives and others are more preferred. Especially preferably, COP (cycloolefin polymer) is used as a polyolefin, TAC (triacetyl cellulose) is used as a cellulose derivative, and PMMA (polymethyl methacrylate) is sued as a polyacrylate. The shape of the substrate may be any one including a tabular form and a curved form. If desired, these substrates may have an electrode layer, an antireflection function, a reflection function.

For enhancing the coatability and the adhesiveness of the polymerizable liquid crystal composition of the present invention, the substrate may be surface-treated. The surface treatment includes ozone treatment, plasma treatment, corona treatment, silane coupling treatment, etc. For controlling light permeability and reflectivity, an organic thin film, an inorganic oxide thin film, a metal thin film or the like may be provided on the substrate surface by vapor deposition or the like, or for giving optical additional value, the substrate may be a pickup lens, a rod lens, an optical disc, a retardation film, a light diffusion film, a color filter or the like. Above all, a pickup lens, a retardation film, a light diffusion film and a color filter are preferred, which can more enhance additional value.

### (Alignment treatment)

For aligning the polymerizable liquid crystal composition after coating and drying the composition thereon, the substrate may be a glass substrate alone or an alignment film may be provided on the substrate. In the case of using an alignment film, the alignment film may be any known one. For such an alignment film, a hydrophilic polymer having a hydroxyl group, a carboxyl group or a sulfonic acid group, or a hydrophilic inorganic compound may be used. The hydrophilic polymer includes polyvinyl alcohol, polyacrylic acid, sodium polyacrylate, polymethacrylic acid, sodium polyalginate, polycarboxymethyl cellulose sodium salt, pullulan, polystyrenesulfonic acid. The hydrophilic inorganic compound includes inorganic compounds such as oxides, fluorides and others with Si, Al, Mg, Zr, etc. The hydrophilic substrate is effective for aligning the optical axis of the optically anisotropic body nearly in parallel to the normal direction of a substrate. A rubbing-treated film may act as a horizontal alignment film, and therefore, rubbing treatment is unfavorable for a hydrophilic polymer layer, as having some negative influence on alignment performance.

### (Coating)

For obtaining the optically anisotropic body of the present invention, any known method is employable, including an applicator method, a bar coating method, a spin coating method, a roll coating method, a direct gravure coating method, a reverse gravure coating method, a flexographic coating method, an ink jet method, a die coating method, a cap coating method, a dip coating method, a slit coating method, etc. After coated therewith, the polymerizable liquid crystal composition may be optionally dried.

### (Polymerization step)

For polymerization, in general, the polymerizable liquid crystal composition of the present invention is photoirradiated with UV rays or heated while the liquid crystal compound in the polymerizable liquid crystal composition is kept in horizontal alignment, vertical alignment or hybrid alignment or in cholesteric alignment (planar alignment) relative to the substrate. For polymerization through photoirradiation, specifically, the composition is irradiated preferably with UV rays at 390 nm or less but most preferably with UV rays having a wavelength of 250 to 370 nm. However, when the polymerizable liquid crystal composition may be decomposed with UV rays at 390 nm or less, preferably, it would be polymerized with UV rays at longer than 390 nm. The light is preferably an unpolarized diffusion light.

### (Polymerization method)

For polymerizing the polymerizable liquid crystal composition of the present invention, a method of irradiation with an active energy ray and a thermal polymerization method may be employed, but the method of irradiation with an active energy ray is preferred not requiring heating and capable of attaining reaction at room temperature. Above all, a method of irradiation with light such as UV rays or the like is preferred as simple.

A temperature at which the polymerizable liquid crystal composition of the present invention can maintain a liquid crystal phase is employed for irradiation, and for evading induction of thermal polymerization of the polymerizable liquid crystal composition, the temperature is 30°C or lower where possible. Generally, a liquid crystal composition exhibits a liquid crystal phase within a temperature range of the C (solid phase) - N (nematic) transition temperature (hereinafter abbreviated as C-N transition temperature) to the N-I transition temperature in a heating process. On the other hand, in a cooling process, the composition takes a thermomechanically non-equivalent, and could not therefore solidify even at a temperature of not higher than the C-N transition temperature but would keep a liquid crystal state. This state is referred to as supercooling. In the present invention, the liquid crystal composition in a supercooling state is also included in the state maintaining a liquid crystal phase. Specifically, irradiation with UV rays at 390 nm or less is preferred, and irradiation with light having a wavelength of 250 to 370 nm is most preferred. However, in the case where the polymerizable composition may undergo decomposition with UV rays of 390 nm or less, the composition may be preferably polymerized with UV rays at more than 390 nm. The light is preferably an unpolarized diffusion light. The UV ray irradiation intensity is preferably within a range of 0.05 kW/m² to 10 kW/m². In particular, a range of 0.2 kW/m² to 2 kW/m² is preferred. A UV intensity of less than 0.05 kW/m² would take much time for completion of polymerization. On the other hand, an intensity of more than 2 kW/m² would tend to cause photodecomposition of liquid crystal molecules in the polymerizable liquid crystal composition, or would generate much polymerization heat to increase the polymerization temperature thereby to change the order parameter of the polymerizable liquid crystals therefore providing a risk of retardation change of the film formed after polymerization.

After polymerization of a specific part alone through UV irradiation via a mask, the alignment condition of the unpolymerized part may be changed by applying thereto an electric field or a magnetic field or by heating it, and thereafter the unpolymerized part may be polymerized to give an optically anisotropic body having plural regions each having a different alignment direction.

In polymerization of a specific part alone through UV irradiation via a mask, the polymerizable liquid crystal composition in an unpolymerized state may be previously given an electric field or a magnetic field or may be heated for alignment control, and while the state is kept as such, the composition may be polymerized through photoirradiation via the mask to give an optically anisotropic body having plural regions each having a different alignment direction.

The optically anisotropic body obtained through polymerization of the polymerizable liquid crystal composition of the present invention may be peeled from the substrate and used as an individual optically anisotropic body, or without being peeled from the substrate, it may be used as a substrate-combined optically anisotropic body as such. In particular, this would hardly contaminate any other member and is therefore helpful for use as a substrate to be layered, or may be stuck to any other substrate.

### (Retardation film)

The retardation film of the present invention may be produced in the same manner as that for the optically anisotropic body of the present invention. The retardation film may be used as a homeotropic liquid crystal film. In the case where the substrate has a phase difference, a retardation film is obtained to have a birefringence of a combination of the birefringence that the substrate has and the birefringence that the retardation film of the present invention has. In the retardation film, the birefringence that the substrate has and the birefringence that the retardation film has may be in the same direction in the plane of the substrate, or may be in different directions. The retardation film is applied in the form applicable to the intended use, depending on the use for liquid crystal devices, displays, optical elements, optical members, colorants, security marking, laser emission members, optical films, compensation films, etc.

### (Viewing angle compensation film)

The viewing angle compensation film of the present invention may be produced in the same manner as that for the optically anisotropic body. The viewing angle compensation film is a liquid crystal film with homeotropic alignment, which may be incorporated in an IPS (in-plane switching) liquid crystal device for reducing the risk of color change or contrast change of the images visible in oblique directions of the liquid crystal device.

### (Antireflection film)

The antireflection film of the present invention may be produced in the same manner as that for the optically anisotropic body of the present invention. When a circular polarization plate prepared by layering a polarization plate and a 1/4 wavelength plate is applied to an organic EL device, the circular polarization plate can ideally function relative to the incident light in the vertical direction to the circular polarization plate, but relative to the incident light in an oblique direction, the plate could not function as an ideal circular polarization plate owing to misalignment from the 1/4 wavelength. In the case where the homeotropically-aligned optically anisotropic body is used as a circular polarization plate for prevention of external light reflection, it can reduce the viewing angle dependence at the time of black display even to the incident light in an oblique direction.

### Examples

The present invention is described with reference to Synthesis Examples, Examples and Comparative Examples given below, but needless-to-say, the present invention is not limited thereto. Unless otherwise specifically indicated, "part" and "%" are by mass.

### (Preparation of polymerizable liquid crystal compositions)

As shown in Table 1 to Table 3, a compound of (D-1), a compound of (E-1), a compound of (F-1) and methyl isobutyl ketone (MIBK) (G-1) as an organic solvent were added to 100 parts by mass of the total amount of the compound of the formulae (A-1) to (A-8), the compound of the formulae (B-1) to (B-7) and the compound of the formula (C-1) to (C-5), in the ratio (part by mass) shown in Table 1 to Table 4, thereby preparing polymerizing liquid crystal compositions (1) to (37).

### (Preparation of polymerizable liquid crystal composition (1))

As shown in Table 1, 3 parts by mass of the polymerization initiator (E-1), 0.1 parts by mass of p-methoxyphenol (MEHQ) (F-1) and 300 parts by mass of an organic solvent, MIBK (G-1) were added to 100 parts by mass which a total of 40 parts by mass of the compound represented by the formula (A-4), 30 parts by mass of the compound represented by the formula (A-5) and 30 parts by mass of the compound represented by the formula (B-1) was taken as, and stirred at a stirring speed of 500 rpm and at a solution temperature of 60°C for 1 hour using a stirring device equipped with a stirring propeller, and then filtered through a membrane filter of 0.2 µm to give a polymerizable liquid crystal composition (1).

### (Preparation of polymerizable liquid crystal composition (2) to (31), and comparative polymerizable liquid crystal compositions (32) to (37))

Polymerizable liquid crystal compositions (2) to (31) and comparative polymerizable liquid crystal compositions (32) to (37) were prepared in the same manner as that for preparation of the polymerizable liquid crystal composition (1) of the present invention and under the same condition as that for preparation of the polymerizing liquid crystal composition (1), except that the compound of the formulae (A-1) to (A-8), the compound of the formulae (B-1) to (B-7), the compound of the formulae (C-1) to (C-5), the compound of (D-1), the compound of (E-1), the compound of (F-1) and an organic solvent of methyl isobutyl ketone (MIBK) (G-1) were changed in the ratio shown in Table 1 to Table 4.

Specific formulations of polymerizable liquid crystal compositions (1) to (31) of the present invention and comparative polymerizable liquid crystal compositions (32) to (37) are shown in Table 1 to Table 3.

**Table 1**

| Composition | (1) | (2) | (3) | (4) | (5) | (6) | (7) | (8) | (9) | (10) | (11) | (12) | (13) |
|---|---|---|---|---|---|---|---|---|---|---|---|---|---|
| (A-1) | | | | | | | | | | | | | |
| (A-2) | | | | | | | | | | | | | |
| (A-3) | | | | | | | | | | | | | |
| (A-4) | 40 | 40 | 40 | 35 | 25 | 40 | 35 | 35 | 15 | 40 | 40 | 35 | 35 |
| (A-5) | 30 | 35 | 40 | 25 | 45 | 30 | 30 | 25 | 45 | 30 | 30 | 25 | 25 |
| (A-6) | | | | | | 10 | 10 | 10 | | | | | |
| (A-7) | | | | | | | | | 10 | | | | |
| (A-8) | | | | | | | | | | | | | |
| (B-1) | 30 | 25 | 20 | 40 | 30 | 20 | 25 | 30 | 30 | | | | |
| (B-2) | | | | | | | | | | 30 | | | |
| (B-3) | | | | | | | | | | | 30 | | |
| (B-4) | | | | | | | | | | | | | |
| (B-5) | | | | | | | | | | | | 40 | |
| (B-6) | | | | | | | | | | | | | 40 |
| (B-7) | | | | | | | | | | | | | |
| (C-1) | | | | | | | | | | | | | |
| (C-2) | | | | | | | | | | | | | |
| (C-3) | | | | | | | | | | | | | |
| (C-4) | | | | | | | | | | | | | |
| (C-5) | | | | | | | | | | | | | |
| (D-1) | | | | | | | | | | | | | |
| (E-1) | 3 | 3 | 3 | 3 | 3 | 3 | 3 | 3 | 3 | 3 | 3 | 3 | 3 |
| (F-1) | 0.1 | 0.1 | 0.1 | 0.1 | 0.1 | 0.1 | 0.1 | 0.1 | 0.1 | 0.1 | 0.1 | 0.1 | 0.1 |
| (G-1) | 300 | 300 | 300 | 300 | 300 | 300 | 300 | 300 | 300 | 300 | 300 | 300 | 300 |

**Table 2**

| Composition | (14) | (15) | (16) | (17) | (18) | (19) | (20) | (21) | (22) | (23) | (24) | (25) | (26) |
|---|---|---|---|---|---|---|---|---|---|---|---|---|---|
| (A-1) | | | | | | | | 20 | | | | | |
| (A-2) | | | | | | 7 | | | | | | | |
| (A-3) | | | | | | 15 | | 20 | | | | | |
| (A-4) | 30 | 40 | 35 | 40 | 35 | 28 | 15 | | 40 | 35 | 35 | 30 | 40 |
| (A-5) | 50 | 30 | 25 | 30 | 15 | 20 | 45 | | 30 | 25 | 25 | 50 | 30 |
| (A-6) | | | | | | | | | | 10 | | | |
| (A-7) | | | | | | | | | | | | | |
| (A-8) | | | | | | | 20 | | | | | | |
| (B-1) | | 20 | 20 | 20 | 20 | 20 | 20 | 20 | 30 | 30 | | | 20 |
| (B-2) | | | | | | | | | | | | | |
| (B-3) | | | | | | | | | | | | | |
| (B-4) | | | | | | | | | | | | | |
| (B-5) | | | | | | | | | | | 40 | | |
| (B-6) | | | | | | | | | | | | | |
| (B-7) | 10 | | | | | | | | | | | 10 | |
| (C-1) | | | | | 10 | | | | | | | | |
| (C-2) | | | | | 10 | | | | | | | | |
| (C-3) | 10 | 10 | | | 10 | 10 | | | | | | 10 | 10 |
| (C-4) | | | 20 | | | | | 25 | | | | | |
| (C-5) | | | | 10 | | | | 15 | | | | | |
| (D-1) | | | | | | | | | 0.1 | 0.1 | 0.1 | 0.1. | 0.1 |
| (E-1) | 3 | 3 | 3 | 3 | 3 | 3 | 3 | 3 | 3 | 3 | 3 | 3 | 3 |
| (F-1) | 0.1 | 0.1 | 0.1 | 0.1 | 0.1 | 0.1 | 0.1 | 0.1 | 0.1 | 0.1 | 0.1 | 0.1 | 0.1 |
| (G-1) | 300 | 300 | 300 | 300 | 300 | 300 | 300 | 300 | 300 | 300 | 300 | 300 | 300 |

**Table 3**

| Composition | (27) | (28) | (29) | (30) | (31) | (32) | (33) | (34) | (35) | (36) | (37) |
|---|---|---|---|---|---|---|---|---|---|---|---|
| (A-1) | | | | | | | | | | | |
| (A-2) | | | | 7 | | | | | | | |
| (A-3) | | | | 15 | | | | | | | |
| (A-4) | 35 | 40 | 35 | 28 | 35 | 50 | 50 | 50 | 50 | 40 | 40 |
| (A-5) | 25 | 30 | 15 | 20 | 25 | 50 | 50 | 50 | 50 | 30 | 30 |
| (A-6) | | | | | | | | | | | |
| (A-7) | | | | | | | | | | | |
| (A-8) | | | | | | | | | | | |
| (B-1) | 20 | 20 | 20 | 20 | | | | | | | |
| (B-2) | | | | | | | | | | | |
| (B-3) | | | | | | | | | | | |
| (B-4) | | | | | 40 | | | | | | |
| (B-5) | | | | | | | | | | | |
| (B-6) | | | | | | | | | | | |
| (B-7) | | | | | | | | | | | |
| (C-1) | | | 10 | | | | | | | | |
| (C-2) | | | 10 | | | | | | | 30 | 30 |
| (C-3) | | | 10 | 10 | | | | | | | |
| (C-4) | 20 | | | | | | | | | | |
| (C-5) | | 10 | | | | | | | | | |
| (D-1) | 0.1 | 0.1 | 0.1 | 0.1 | | | | | 0.1 | | |
| (E-1) | 3 | 3 | 3 | 3 | 3 | 3 | 3 | 3 | 3 | 3 | 3 |
| (F-1) | 0.1 | 0.1 | 0.1 | 0.1 | 0.1 | 0.1 | 0.1 | 0.1 | 0.1 | 0.1 | 0.1 |
| (G-1) | 300 | 300 | 300 | 300 | 300 | 300 | 300 | 300 | 300 | 300 | 300 |

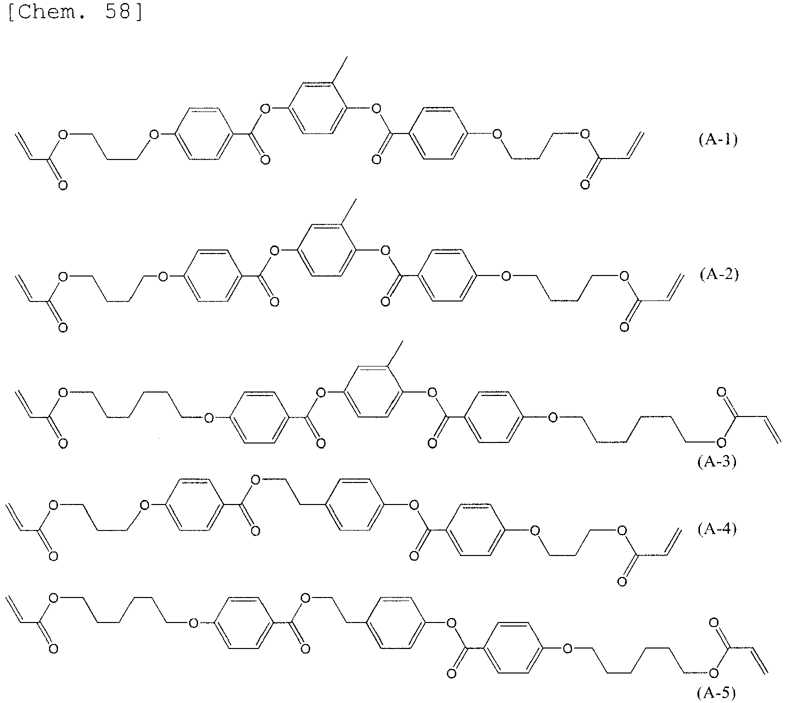

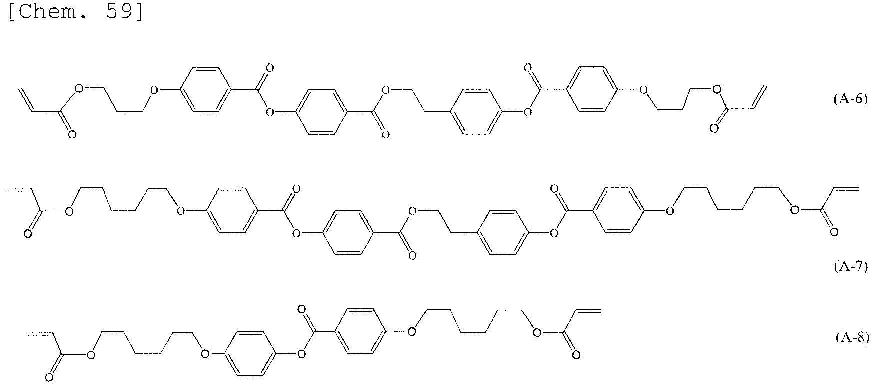

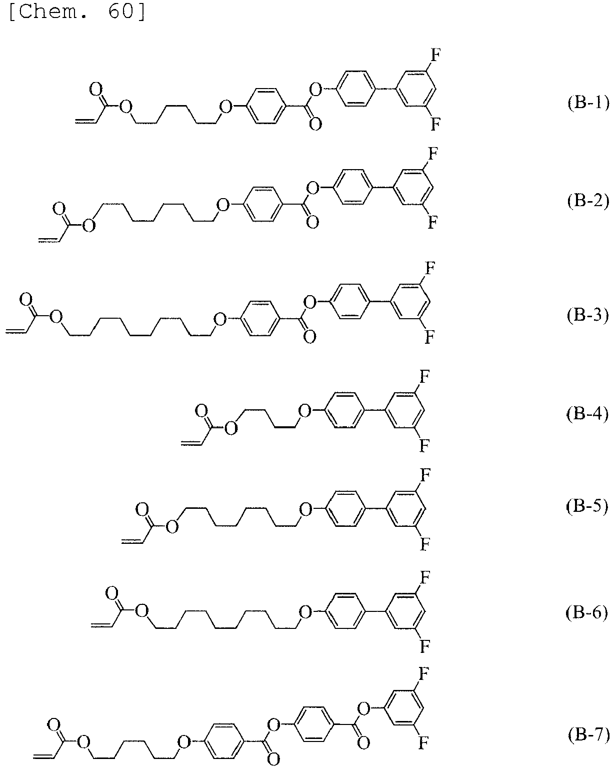

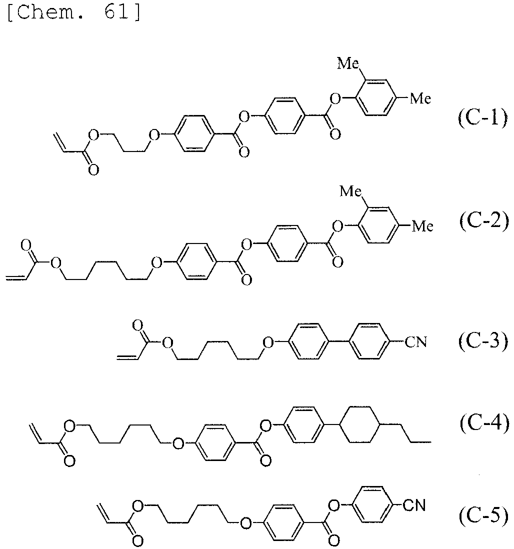

Megaface F-554 (D-1)
Irgacure 907 (E-1)
MEHQ (F-1)

### (Example 1)

### (Alignment performance)

The prepared polymerizable liquid crystal composition (1) was applied onto a glass substrate using a bar coater #4, and dried at 60°C for 2 minutes, then left a 25°C for 1 minute, and, using a conveyor-type high-pressure mercury lamp, this was irradiated with UV light set to have a light quantity of 300 mJ/cm² to form a thin film of Example 1.
A: Neither defects in visual observation nor defects in observation under a polarizing microscope.
B: No defects in visual observation, but unaligned parts seen partly in observation under a polarizing microscope.
C: No defects in visual observation, but unaligned parts seen entirely in observation under a polarizing microscope.
D: Some defects in visual observation, and unaligned parts seen entirely in observation under a polarizing microscope.

### (Durability)

The thin film obtained in the above alignment performance evaluation test was kept at 85°C for 500 hours to give a thin film for durability measurement.

### <Retardation change (rate) measurement)

Before and after the heating test, the retardation Re at an incident angle θ = 50° was measured with Otsuka Electronics' RETS-100 (wavelength, 550 nm), and the retardation change rate after heating was evaluated taking the retardation before heating as 100%.
A: Change of less than 3%
B: Decrease of 3% or more and less than 7%
C: Decrease of 7% or more and less than 10%
D: Decrease of 10% or more.

### (Cissing evaluation)

The coating film tested for alignment performance in the above was visually checked for cissing state.
A: No cissing defects observed at all in the surface of the coating film.
B: Only a few cissing defects observed in the surface of the coating film.
C: Some cissing defects observed in the surface of the coating film.
D: Many cissing defects observed in the surface of the coating film.

The obtained results are shown in the following Tables.

**Table 4**

| | Composition | Alignment | Retardation Retention | Cissing |
|---|---|---|---|---|
| Example 1 | Composition (1) | A | A | A |
| Example 2 | Composition (2) | A | A | A |
| Example 3 | Composition (3) | B | A | A |
| Example 4 | Composition (4) | A | B | A |
| Example 5 | Composition (5) | A | A | A |
| Example 6 | Composition (6) | B | A | A |
| Example 7 | Composition (7) | A | A | A |
| Example 8 | Composition (8) | A | A | A |
| Example 9 | Composition (9) | A | A | A |
| Example 10 | Composition (10) | A | A | A |
| Example 11 | Composition (11) | A | A | A |
| Example 12 | Composition (12) | A | B | A |
| Example 13 | Composition (13) | A | B | A |
| Example 14 | Composition (14) | B | A | B |
| Example 15 | Composition (15) | A | A | B |
| Example 16 | Composition (16) | A | B | B |
| Example 17 | Composition (17) | A | A | B |
| Example 13 | Composition (18) | A | B | B |
| Example 19 | Composition (19) | B | A | B |
| Example 20 | Composition (20) | B | A | B |
| Example 21 | Composition (21) | A | B | B |
| Example 22 | Composition (1) | A | A | A |
| Example 23 | Composition (2) | A | A | A |
| Example 24 | Composition (3) | B | A | A |
| Example 25 | Composition (4) | A | B | A |

**Table 5**

| | Composition | Alignment | Retardation Retention | Cissing |
|---|---|---|---|---|
| Example 26 | Composition (5) | A | A | A |
| Example 27 | Composition (6) | B | A | A |
| Example 28 | Composition (7) | A | A | A |
| Example 29 | Composition (8) | A | A | A |
| Example 30 | Composition (9) | A | A | A |
| Example 31 | Composition (22) | A | A | A |
| Example 32 | Composition (23) | A | A | A |
| Example 33 | Composition (24) | A | B | A |
| Example 34 | Composition (25) | A | A | B |
| Example 35 | Composition (26) | A | A | B |
| Example 36 | Composition (27) | A | B | B |
| Example 37 | Composition (28) | A | A | B |
| Example 38 | Composition (29) | A | B | A |
| Example 39 | Composition (30) | A | A | A |
| Example 40 | Composition (31) | C | B | B |
| Comparative Example 1 | Composition (32) | D | - | D |
| Comparative Example 2 | Composition (33) | D | - | C |
| Comparative Example 3 | Composition (34) | D | - | C |
| Comparative Example 4 | Composition (35) | D | - | C |
| Comparative Example 5 | Composition (36) | D | - | C |
| Comparative Example 6 | Composition (37) | D | - | C |

### (Examples 2 to 40, Comparative Examples 1 to 6)

Using the polymerizable liquid crystal compositions (2) to (37), thin films were formed, and measured for estimation of alignment performance, durability and cissing. The results are shown in the above Tables as Examples 2 to 40, and Comparative Examples 1 to 6.

In Example 2 to Example 21, Example 40, and Comparative Example 1 and Comparative Example 5, a glass substrate was used as the substrate for alignment evaluation, like in Example 1. Regarding the coating and curing conditions for the polymerizable liquid crystal composition in these, each polymerizable liquid crystal composition was applied at room temperature using a bar coater #4, dried at 60°C for 2 minutes and left at 25°C for 1 minute, and using a conveyor-type high-pressure mercury lamp, this was irradiated with UV light set to have a light quantity of 300 mJ/cm². For retardation change (rate) measurement, the retardation Re at an incident angle θ = 50° was measured with Otsuka Electronics' RETS-100 (wavelength, 550 nm) before and after the heating test, and the retardation change rate after heating was evaluated taking the retardation before heating as 100%.

In Example 22 to Example 25, Example 27 to Example 29, Example 31 to Example 39, Comparative Example 2, Comparative Example 4 and Comparative Example 6, a COP (cycloolefin polymer) substrate layered with a silane coupling-type vertical alignment film was used. Regarding the coating and curing conditions for the polymerizable liquid crystal composition in these, each polymerizable liquid crystal composition was applied at room temperature using a bar coater #4, dried at 60°C for 2 minutes and left at 25°C for 1 minute, and using a conveyor-type high-pressure mercury lamp, this was irradiated with UV light set to have a light quantity of 300 mJ/cm². For retardation change (rate) measurement, the retardation Re at an incident angle θ = 50° was measured with Otsuka Electronics' RETS-100 (wavelength, 550 nm) before and after the heating test, and the retardation change rate after heating was evaluated taking the retardation before heating as 100%.

Further, in Example 26, Example 30 and Comparative Example 3, a COP (cycloolefin polymer) substrate was used. Regarding the coating and curing conditions for the polymerizable liquid crystal composition in these, each polymerizable liquid crystal composition was applied at room temperature using a bar coater #4, dried at 60°C for 2 minutes and left at 25°C for 1 minute, and using a conveyor-type high-pressure mercury lamp, this was irradiated with UV light set to have a light quantity of 300 mJ/cm². For retardation change (rate) measurement, the front-side retardation Re was measured with Otsuka Electronics' RETS-100 (wavelength, 550 nm) before and after the heating test, and the retardation change rate after heating was evaluated taking the retardation before heating as 100%.

As a result, the polymerizable liquid crystal compositions containing the bifunctional polymerizable liquid crystal compound represented by any one of the formulae (A-1) to (A-8) and the monofunctional polymerizable liquid crystal compound represented by any one of the formulae (B-1) to (B-7) (Example 1 to Example 40) gave optically anisotropic bodies having good homeotropic alignment performance, being excellent in durability and having few cissing defects, as compared with the polymerizable liquid crystal compositions not containing the monofunctional polymerizable liquid crystal compound represented by the formulae (B-1) to (B-7) (Comparative Example 1 to Comparative Example 6). On the other hand, the polymerizable liquid crystal compositions not containing the monofunctional polymerizable liquid crystal compound represented by the formulae (B-1) to (B-7) (Comparative Example 1 to Comparative Example 6) were poor in alignment performance and formed cissing defects, and could not give optically anisotropic bodies having good homeotropic alignment.

In particular, among the monofunctional polymerizable liquid crystal compounds represented by the formulae (B-1) to (B-7), when the compounds represented by the formulae (B-1) to (B-3), (B-5) and (B-6) each having a long spacer with a spacer length of 6 to 10 and having a polycyclic structure directly bonding to the terminal of the molecule are used, homeotropically-aligned optically anisotropic bodies excellent in alignment performance, durability and cissing failure resistance can be obtained.

## Claims

1. A polymerizable liquid crystal composition comprising:
one or more of polymerizable liquid crystal compounds having 2 or more polymerizable functional groups in the molecule, which are represented by a general formula (I-1): [Chem. 1]
P¹¹-(Sp¹¹-X¹¹)_{q1}-MG¹²-((X¹²-Sp¹²)_{q2}-P¹²)_{q3} (I-1)
(wherein P¹¹ and P¹² each independently represent a polymerizable functional group, Sp¹¹ and Sp¹² each independently represent an alkylene group having 1 to 18 carbon atoms or a single bond, provided that one -CH₂- or two or more (-CH₂-)'s not adjacent to each other in the alkylene group may be each independently substituted with -O-, -COO-, -OCO- or -OCO-O-, and one or two or more hydrogen atoms that the alkylene group has may be substituted with a halogen atom or a group CN, X¹¹ and X¹² each independently represent -O-, -S-, -OCH₂-, -CH₂O-, -CO-, -COO-, -OCO-, -CO-S-, -S-CO-, -O-CO-O-, -CO-NH-, -NH-CO-, -SCH₂-, -CH₂S-, -CF₂O-, -OCF₂-, -CF₂S-, -SCF₂-, -CH=CH-COO-, -CH=CH-OCO-, -COO-CH=CH-, -OCO-CH=CH-, -COO-CH₂CH₂-, -OCO-CH₂CH₂-, -CH₂CH₂-COO-, -CH₂CH₂-OCO-, -COO-CH₂-, -OCO-CH₂-, -CH₂-COO-, -CH₂-OCO-, -CH=CH-, -N=N-, -CH=N-N=CH-, -CF=CF-, -C≡C- or a single bond, provided that P¹¹-Sp¹¹, P¹²-Sp¹², Sp¹¹-X¹¹ and Sp²-X¹² do not contain a direct bond that bonds hetero atoms, q1 and q2 each independently represent 0 or 1, q3 represents 1, 2 or 3, provided that plural X¹²'s, if any, may be the same or different, plural Sp¹²'s, if any, may be the same or different, and plural P¹²'s, if any, may be the same or different, and MG¹² represents a mesogen group), and/or one or more of polymerizable liquid crystal compounds (II-2) having one polymerizable functional group (except for polymerizable liquid crystal compounds represented by the following general formula (II-1)); and
one or more of polymerizable liquid crystal compounds represented by a general formula (II-1): 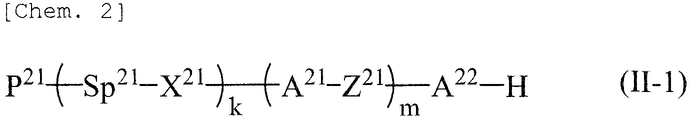 (wherein P²¹ represents a polymerizable group,
Sp²¹ represents a spacer group or a single bond; and plural Sp²¹'s, if any, may be the same or different,
X²¹ represents -O-, -S-, -OCH₂-, -CH₂O-, -CO-, -COO-, -OCO-, -CO-S-, -S-CO-, -O-CO-O-, -CO-NH-, -NH-CO-, -SCH₂-, -CH₂S-, -CF₂O-, -OCF₂-, -CF₂S-, -SCF₂-, -CH=CH-COO-, -CH=CH-OCO-, -COO-CH=CH-, -OCO-CH=CH-, -COO-CH₂CH₂-, -OCO-CH₂CH₂-, -CH₂CH₂-COO-, -CH₂CH₂-OCO-, -COO-CH₂-, -OCO-CH₂-, -CH₂-COO-, -CH₂-OCO-, -CH=CH-, -N=N-, -CH=N-N=CH-, -CF=CF-, -C≡C- or a single bond; and plural X²¹'s, if any, may be the same or different,
k represents an integer of 0 to 10,
A²¹ represents a 1,4-phenylene group, a 1,4-cyclohexylene group, a pyridine-2,5-diyl group, a pyrimidine-2,5-diyl group, a naphthalene-2,6-diyl group, a naphthalene-1,4-diylgroup, a tetrahydronaphthalene-2, 6-diyl group, a decahydronaphthalane-2,6-diyl group or a 1,3-dioxane-2,5-diyl group, which may be unsubstituted or substituted with one or more substituents L¹'s; and plural A²¹'s, if any, may be the same or different,
L¹ represents a fluorine atom, a chlorine atom, a bromine atom, an iodine atom, a pentafluorosulfuranyl group, a nitro group, a cyano group, an isocyano group, an amino group, a hydroxyl group, a mercapto group, a methylamino group, a dimethylamino group, a diethylamino group, a diisopropylamino group, a trimethylsilyl group, a dimethylsilyl group, a thioisocyano group, or a linear or branched alkyl group having 1 to 20 carbon atoms, provided that one -CH₂- or two or more (-CH₂-)'s not adjacent to each other in the alkyl group may be each independently substituted with -O-, -S-, -CO-, -COO-, -OCO-, -CO-S-, -S-CO-, -O-CO-O-, -CO-NH-, -NH-CO-, -OCO-NH-, -NH-COO-, -NH-CO-NH-, -NH-O-, -O-NH-, -CH=CH-COO-, -CH=CH-OCO-, -COO-CH=CH-, -OCO-CH=CH-, -CH=CH-, -N=N-, -CH=N-, -N=CH-, -CH=N-N=CH-, -CF=CF- or -C=C- and any arbitrary hydrogen atom in the alkyl group may be substituted with a fluorine atom,
Z²¹ represents -O-, -S-, -OCH₂-, -CH₂O-, -CH₂CH₂-, -CO-, -COO-, -OCO-, -CO-S-, -S-CO-, -O-CO-O-, -CO-NH-, -NH-CO-, -OCO-NH-, -NH-COO-, -NH-CO-NH-, -NH-O-, -O-NH-, -SCH₂-, -CH₂S-, -CF₂O-, -OCF₂-, -CF₂S-, -SCF₂-, -CH=CH-COO-, -CH=CH-OCO-, -COO-CH=CH-, -OCO-CH=CH-, -COO-CH₂CH₂-, -OCO-CH₂CH₂-, -CH₂CH₂-COO-, -CH₂CH₂-OCO-, -COO-CH₂-, -OCO-CH₂-, -CH₂-COO-, -CH₂-OCO-, -CH=CH-, -N=N-, -CH=N-, -N=CH-, -CH=N-N=CH-, -CF=CF-, -C≡C- or a single bond; and plural Z²¹'s, if any, may be the same or different,
m represents an integer of 1 to 5,
A²² represents a group selected from the following formulae (A2-1) to (A2-9): 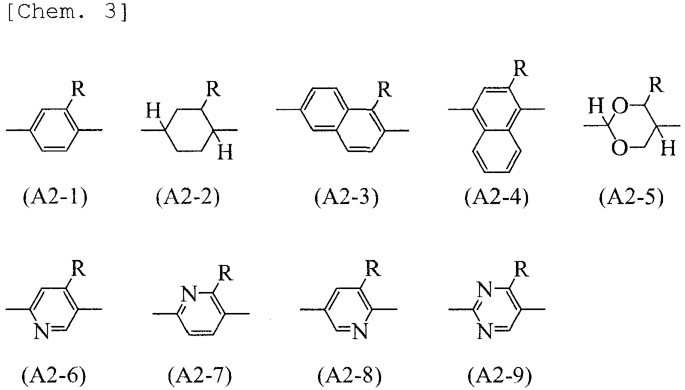 (wherein the groups represented by the formulae (A2-1) to (A2-9) may be unsubstituted or may be substituted with one or more substituents L²'s,
R represents a fluorine atom, a chlorine atom, a bromine atom, an iodine atom, a pentafluorosulfuranyl group, a cyano group, a nitro group, an isocyano group, a thioisocyano group, or a linear or branched alkyl group having 2 to 20 carbon atoms, provided that one -CH₂- or two or more (-CH₂-)'s not adjacent to each other may be each independently substituted with -O-, -S-, -CO-, -COO-, -OCO-, -CO-S-, -S-CO-, -O-CO-O-, -CO-NH-, -NH-CO-, -OCO-NH-, -NH-COO-, -NH-CO-NH-, -NH-O-, -O-NH-, -CH=CH-COO-, -CH=CH-OCO-, -COO-CH=CH-, -OCO-CH=CH-, -CH=CH-, -N=N-, -CH=N-, -N=CH-, -CH=N-N=CH-, -CF=CF- or -C=C- and any arbitrary hydrogen atom may be substituted with a fluorine atom), and
the substituent L² represents a fluorine atom, a chlorine atom, a bromine atom, an iodine atom, a pentafluorosulfuranyl group, a nitro group, a cyano group, an isocyano group, an amino group, a hydroxyl group, a mercapto group, a methylamino group, a dimethylamino group, a diethylamino group, a diisopropylamino group, a trimethylsilyl group, a dimethylsilyl group, a thioisocyano group, or a linear or branched alkyl group having 2 to 20 carbon atoms, provided that one -CH₂- or two or more (-CH₂-)'s not adjacent to each other in the alkyl group may be each independently substituted with -O-, -S-, -CO-, -COO-, -OCO-, -CO-S-, -S-CO-, -O-CO-O-, -CO-NH-, -NH-CO-, -OCO-NH-, -NH-COO-, -NH-CO-NH-, -NH-O-, -O-NH-, -CH=CH-COO-, -CH=CH-OCO-, -COO-CH=CH-, -OCO-CH=CH-, -CH=CH-, -N=N-, -CH=N-, -N=CH-, -CH=N-N=CH-, -CF=CF- or -C≡C-and any arbitrary hydrogen atom in the alkyl group may be substituted with a fluorine atom, H represents a hydrogen atom, plural substituents L¹'s, if any, may be the same or different, and plural substituents L²'s, if any, may be the same or different, provided that the general formula (II-1) does not contain a direct bond that bonds hetero atoms).

2. The polymerizable liquid crystal composition according to claim 1, wherein P²¹ in the general formula (II-1) represents a group selected from the following formulae (P-1) to (P-20) :

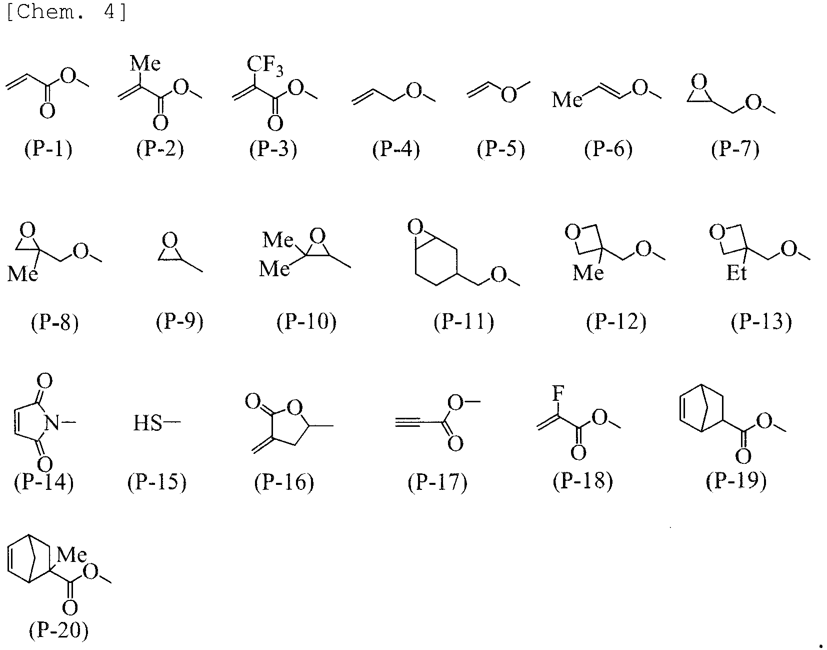

3. The polymerizable liquid crystal composition according to claim 1 or 2, wherein Sp²¹ in the general formula (II-1) each independently represents an alkylene group having 1 to 20 carbon atoms in which one -CH₂- or two or more (-CH₂-)'s not adjacent to each other may be each independently substituted with -O-, -COO-, -OCO-, -OCO-O-, -CO-NH-, -NH-CO-, -CH=CH- or -C≡C-.

4. The polymerizable liquid crystal composition according to any one of claims 1 to 3, wherein A²¹ in the general formula (II-I) each independently represents a group selected from the following formulae (A1-1) to (A1-11): 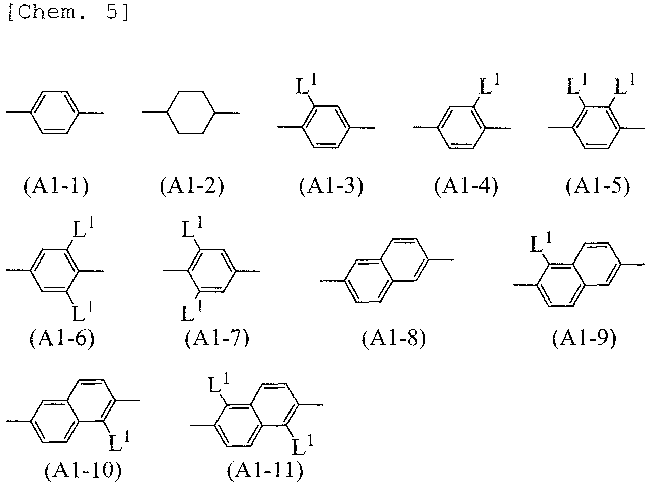 wherein L¹ represents the same group as defined above, and plural L¹'s, if any, may be the same or different.

5. The polymerizable liquid crystal composition according to any one of claims 1 to 4, wherein A²² in the general formula (II-1) represents a group selected from the following formulae (A2-1-1) to (A2-1-3): 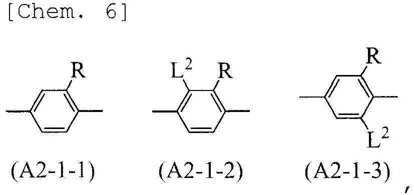 the following formula (A2-2-1) or (A2-2-2): 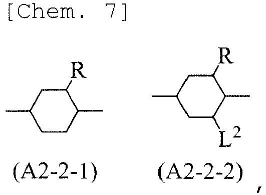 the following formulae (A2-3-1) to (A2-3-3): 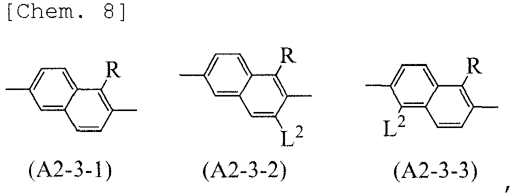 and the following formulae (A2-4-1) to (A2-4-3): 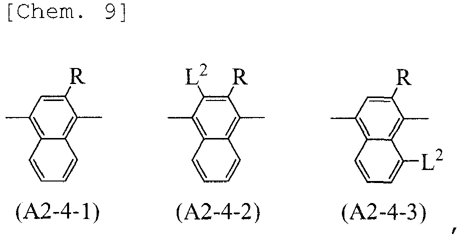 wherein L² and R each represent the same group as defined above.

6. The polymerizable liquid crystal composition according to any one of claims 1 to 5, wherein the polymerizable liquid crystal compound (II-2) having one polymerizable functional group in the molecule is a compound represented by a general formula (II-2-1):
[Chem. 10]
P²²-(S²²-X²²)_{q4}-MG²²-R²² (II-2-1)
(wherein P²² represents a polymerizable functional group, S²² represents an alkylene group having 1 to 18 carbon atoms, provided that one -CH₂- or two or more (-CH₂-) 's not adjacent to each other in the alkylene group may be each independently substituted with -O-, -COO-, -OCO- or -OCO-O-, and one or more hydrogen atoms in the alkylene group may be substituted with a halogen atom or a group CN, X²² represents -O-, -S-, -OCH₂-, -CH₂O-, -CO-, -COO-, -OCO-, -CO-S-, -S-CO-, -O-CO-O-, -CO-NH-, -NH-CO-, -SCH₂-, -CH₂S-, -CF₂O-, -OCF₂-, -CF₂S-, -SCF₂-, -CH=CH-COO-, -CH=CH-OCO-, -COO-CH=CH-, -OCO-CH=CH-, -COO-CH₂CH₂-, -OCO-CH₂CH₂-, -CH₂CH₂-COO-, -CH₂CH₂-OCO-, -COO-CH₂-, -OCO-CH₂-, -CH₂-COO-, -CH₂-OCO-, -CH=CH-, -N=N-, -CH=N-N=CH-, -CF=CF-, -C=C- or a single bond, provided that P²²-S²² and S²²-X²² do not contain groups of -O-O-, -O-NH-, -S-Sand -O-S-, q4 represents 0 or 1, MG²² represents a mesogen group, R²² represents a hydrogen atom, a halogen atom, a cyano group, a linear or branched alkyl group having 1 to 12 carbon atoms, or a linear or branched alkenyl group having 1 to 12 carbon atoms, provided that one -CH₂- or two or more (-CH₂-)'s not adjacent to each other in the alkyl group and the alkenyl group may be each independently substituted with -O-, -S-, -CO-, -COO-, -OCO-, -CO-S-, -S-CO-, -O-CO-O-, -CO-NH-, -NH-CO-, -NH-, -N(CH₃)-, -CH=CH-COO-, -CH=CH-OCO-, -COO-CH=CH-, -OCO-CH=CH-, -CH=CH-, -CF=CF- or -C=C-, and one or more hydrogen atoms that the alkyl group and the alkenyl group have may be each independently substituted with a halogen atom or a cyano group, and plural substituents, if any, may be the same or different).

7. A polymer obtained through polymerization of the polymerizable liquid crystal composition of any one of claims 1 to 6.

8. An optically anisotropic body using the polymerizable liquid crystal composition of any one of claims 1 to 6.

9. A retardation film using the polymerizable liquid crystal composition of any one of claims 1 to 6.

10. A viewing angle compensation film using the polymerizable liquid crystal composition of any one of claims 1 to 6.

11. An antireflection film using the polymerizable liquid crystal composition of any one of claims 1 to 6.

12. A liquid crystal display element using the polymerizable liquid crystal composition of any one of claims 1 to 6.
